(19) Europäisches Patentamt / European Patent Office / Office européen des brevets

(11) **EP 4 041 122 B1**

(12) **EUROPEAN PATENT SPECIFICATION**

(45) Date of publication and mention
of the grant of the patent:
**21.05.2025 Bulletin 2025/21**

(21) Application number: **20875360.8**

(22) Date of filing: **09.10.2020**

(51) International Patent Classification (IPC):
***A61C 15/04*** *(2006.01)*     ***A61C 17/02*** *(2006.01)*

(52) Cooperative Patent Classification (CPC):
**A61C 17/02; A61C 15/04**

(86) International application number:
**PCT/US2020/054978**

(87) International publication number:
**WO 2021/072188 (15.04.2021 Gazette 2021/15)**

(54) **WATER FLOSSER**

MUNDDUSCHE

NETTOYEUR INTERDENTAIRE À EAU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **10.10.2019 US 201962913556 P**

(43) Date of publication of application:
**17.08.2022 Bulletin 2022/33**

(73) Proprietors:
• **Garrigues, Jeffrey M.**
**Lake Stevens, WA 98258 (US)**
• **Trembath, Jon**
**Thornton, CO 80241 (US)**

(72) Inventors:
• **Garrigues, Jeffrey M.**
**Lake Stevens, WA 98258 (US)**
• **Trembath, Jon**
**Thornton, CO 80241 (US)**

(74) Representative: **Haseltine Lake Kempner LLP
Cheapside House
138 Cheapside
London EC2V 6BJ (GB)**

(56) References cited:
| | |
|---|---|
| CH-A5- 655 237 | DE-A1- 2 703 041 |
| US-A1- 2007 203 439 | US-A1- 2012 189 976 |
| US-A1- 2015 182 319 | US-A1- 2015 182 319 |
| US-A1- 2015 381 096 | US-A1- 2018 125 221 |
| US-A1- 2018 256 300 | |

# EP 4 041 122 B1

## Description

### Technical Field

The present invention relates to water flossers used to improve health and otherwise for personal hygiene. More specifically, the invention relates to controlling a water flosser pump to provide desired outputs.

### Background

Water flossers are typically used to clean teeth and to massage gums. Different pulse frequencies and pressures may be desired for different oral applications. For example, sore gums may be too sensitive to withstand a vigorous pulsating massage while healthy gums may benefit from higher pressures or increased pulse frequencies. Tooth cleaning may be enhanced by using a completely different pressure, pulse frequency, pulse duration or pulse waveform than that used to massage gums. While selecting the pressure, pulse frequency, pulse duration or the pulse waveform is desirable, increasing the amount of liquid injected into the mouth is not. All of the water injected into the mouth must be discharged, and managing the discharge is often messy and unpleasant. Conventional water flossers allow a user to manually select pressure but do not allow a user to vary pulse frequencies or pulse duration or pulse waveform. Nor do conventional water flossers optimize water usage to provide the maximum cleaning or massage advantage using the least amount of water.

Typical water flossers have a rotating motor that drives a rod connected to a pump piston. The kinematics of a rotating motor/piston pump system is inherently inefficient and difficult to precisely control. If the piston is at the bottom of its stroke, the kinematics of the typical system dictates that the piston's positive movement will start slow and will accelerate until the piston reaches the halfway point in the pressure cycle. From there, the piston will decelerate to a stop at the top of its stroke. As the motor continues rotating, the piston will accelerate in the opposite direction until it reaches the halfway point and will then decelerate until it reaches the bottom of its stroke, where it will stop as it prepares to replicate the pressure cycle. In this typical pump system, the pressure and flow peak midway through the pressure cycle and are zero at the top and bottom of the piston's stroke. A pressure versus time curve generated by a typical prior art rotating motor/piston pump system is shown in Figure 9A of U.S. Patent No. 9,642,677 B2 ('677 patent). This system is described at column 14, lines 6-30 of the '677 patent.

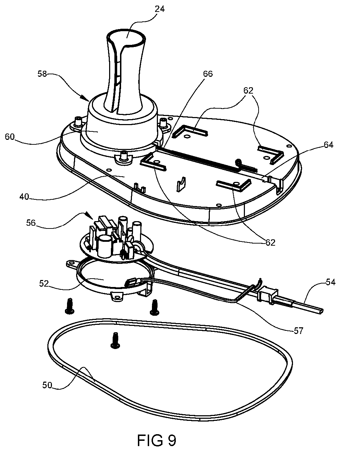

In the typical rotating motor/piston system, the kinematics dictate that each pressure cycle produces peak pressure only at the moment the piston passes through the midpoint of the pressure cycle, as shown in Figure 9A of the '677 patent. As shown, very little of the fluid reaches the gum or tooth at the desired elevated pressure. Most of the fluid ejected is at a lower pressure and does not provide the benefits of the high-pressure peak. The energy wasted on pumping lower pressure fluid is inefficient and, perhaps more importantly, the extra fluid pumped to a user's mouth is unnecessarily messy.

In use, it is also often desirable to pause a water flosser. For example, a user will not want water sprayed into the environment as the tip is moved to and from the mouth. Many existing water flossers have a button on the handle that, when depressed, stops fluid flow. Typically, when the fluid flow is stopped, an increased load is applied to the rotating motor/piston system. These systems often have pressure relief valves that cycle the pumped liquid back into the flow path but the pressure relief valves are necessarily set at a pressure above the working pressure of the system. The increased pressure stresses all components of the system - torque increases on all rotating components and current applied to the rotating motor increases. Significantly, the noise created by the system increases noticeably. Moreover, existing pause buttons often stick and require constant applied pressure to keep fluid from flowing.

Conventional prior art water flossers are also undesirably noisy by nature. Three existing water flossers, namely Waterpik® WP260, Waterpik® Ultra WP 100 and Waterpik® WP 670, are each known to create approximately 69-75 dB sound levels at a distance of 2 feet away from a Radio Shack® Sound Level Meter set on slow response and C weighting, when measured in a typical bathroom setting. For this measurement, the tip was immersed in the reservoir and the tubing from the flosser is isolated such that the vibrating tubing does not impact on any surface to create additional noise.

The reservoir outlet valves of existing prior art water flossers also tend to leak, causing an undesirable mess.

Conventional prior art water flossers, such as are described and illustrated in US2015/182319 and DE2703041, are relatively simple mechanical systems with components that wear over time. With time, the pressure generated by the system often degrades and the system is incapable of adjusting for the pressure decrease arising from system degradation.

Many conventional prior art water flossers permit inadvertent disengagement of the tip or nozzle from the handle. Inadvertent disengagement of the tip is undesirable because the tip can fall onto unsanitary surfaces and uncontrolled water is pumped from the handle often creating a mess for the user.

U.S. Published Patent Application 2012/0189976 A1 broadly suggests that linear motors can be used in oral health care devices requiring injecting and removing a liquid from a mouthpiece. *See id* at [0162-64]. This publication provides little detail, other than that the linear motor appears to be a cylindrical voice coil actuator (reference numbers 4420 & 5420), about the linear motor. U.S. Patent No. 4,655,197 ('197 Patent) Figs. 7 and 14 illustrate the use of a linearly reciprocating motor in a lavage system. The linear motor disclosed in the '197 Patent is also a common voice coil actuator similar to those used to drive acoustic speakers. *See id.* at 13:4-15. Unlike the rotating motor/piston pump system, the linear motor system purports to offer the ability to vary pulse frequency while maintaining pressure or fluid flow substantially constant. *Id.* at 3:40-43. Alternatively, fluid pressure or fluid flow could purportedly be varied while maintaining the pulsation frequency constant. *Id.* at 3:43-46. The disclosed system uses a cumbersome spring system and inertia to maintain the average output pressure. *See id. a*t 13:66-14:3 ("The motor spring load cooperates with the inertia of the reciprocating section to maintain the average pressure of the fluid flow and the fluid flow rate substantially constant even though the frequency has been adjusted either up or down.")

If applied to a water flosser, the system described in the '197 Patent has many disadvantages. The disclosed voice coil actuator is relatively expensive because it requires costly machining of cylindrical magnetic components and, because the coil moves out of the magnetic air gap, the force generated by a constant current applied to the coil is nonlinear. Moreover, the depicted voice coil actuator configuration is somewhat inefficient. Perhaps more importantly, the described system incorporates springs that slow the responsiveness of the voice coil actuator because the springs dampen the responsiveness of the linear motor.

Control of a water flosser's functionality from a handle has been highly desired. However, excess expense or complexity has precluded cost-effective water flosser control from the handle. In fact, many existing water flosser systems inelegantly control the most rudimentary function of limiting or stopping liquid flow through the handle by over-pressurizing the system to actuate a noisy pressure-relief valve, as described above. While the '197 Patent teaches stopping the fluid flow at the handle to stop the pump motor, and opening the fluid flow path at the handle to restart the pump motor (*id.* at 15:46-52), prior art systems are not known to disclose cost-effective means to enable control of the water flosser pump to vary pressure, pulse frequency or other output parameters from the handle.

Yet further, conventional prior art water flossers do not interact with mobile devices or the Internet. A user's water flossing pattern cannot be exported to, nor can a user interact with, conventional water flossers to modify the output parameters of the flosser via a mobile device or the Internet. Moreover, it is not believed to be known that users can audibly interact with conventional water flossers.

In many conventional prior art water flossers, nothing stops a liquid in the reservoir from draining from the reservoir if the nozzle tip is below the reservoir. Draining the liquid in a water flosser reservoir onto, for example, a counter, or the floor, when the handle is not in an upright position with the tip above the reservoir water level is highly undesirable.

Conventional prior art water flosser motors are believed to not be controlled by the user. Conventional water flossers allow a user to adjust pressure, which corresponds to the flow through the tip, by constricting the flow path or by reducing the braking pressure of a bypass pressure relief valve. Conventional water flossers are believed to not permit a user to control the motor speed, pulse frequency, pulse duration or to manipulate the motor to control pulse pressure, flow, kinetic energy per pulse or to modify the waveform of a pulse.

Thus, a water flosser capable of precisely controlling the pressure, flow and pulse pattern, pulse duration, pulse waveform and kinetic energy per pulse is desirable. Moreover, control of the water flosser's functionality from the handle would be advantageous, as would be interconnectivity with a cell phone or other mobile device and/or interconnectivity with the Internet that enables a user to control the water flosser and to extract data from the water flosser. A water flosser responsive to audible commands is further desired, as is a water flosser that that does not leak from the reservoir when the reservoir is removed from the base, that does not leak from the tip if the tip is below the water level in the reservoir, that does not have a sticking pause button, that does not facilitate inadvertent tip ejection and that compensates for the degradation of mechanical components. Also desirable is a water flosser that generates less noise when used, and that does not require activation of a noisy pressure relieve valve system when flow is stopped at the handle.

## Summary

The invention is as defined in the appended claims.

Certain embodiments of the present invention overcome the disadvantages outlined above by using a self-supporting coil ("SSC") in a linear motor to drive a water flosser pump. The disclosed SSC linear motor optimizes responsiveness, which enables the SSC linear motor to selectively drive the pump. Certain embodiments of the water flosser enable precise control of pulse frequency, pulse pressure, pulse duration, and the pulse waveform. In some embodiments, the kinetic energy of each liquid pulse may be controlled. The SSC linear motor unshackles the water flosser from the limiting kinematics of the prior art rotary motor/piston system and enables broad variability in the liquid pulses that can be produced by an SSC linear motor driven water flosser. In some embodiments, the responsiveness of the SSC linear motor enables a rapid ramp-up to the desired pressure, which then significantly reduces the amount of water needed to generate the desired pulse pressure. In other embodiments, the SSC linear motor enables modification of the pulse frequency and the pulse duration. Additionally, in some embodiments, the SSC motor can be selectively paused without increasing the stresses on the water flosser drive system.

In some embodiments, the water flosser control signals are hydraulically transmitted from the handle to the water flosser controller. In other embodiments. the control signal may be conveyed to the water flosser from a smart phone or other handheld mobile device or over the Internet. In some embodiments, voice recognition is used to control the water flosser. In some embodiments, information about usage of the water flosser may be collected by the water flosser for communication to a care giver or to an oral health care provider.

Other embodiments have improved reservoir outlet valves. The water flosser according to the-invention has a check valve preventing unintended drainage from the reservoir if the tip is below the reservoir. Some embodiments have an improved on/off button on the handle that controls fluid flow. Some embodiments have nozzle attachment mechanisms that prevent unintended nozzle disengagement. Other embodiments compensate for component wear to prevent degradation of system performance. Some embodiments are meaningfully more quiet than conventional prior art water flossers.

Aspects of the invention include a water flosser comprising a main housing including a base, a self-supporting coil (SSC) linear motor secured to the base and having a self-supporting coil, a pump housing located in the main housing and operably connected to the SSC linear motor, a reservoir configured to operably connect to the main housing at a location distal to the base, a handle having a nozzle, and tubing operably connecting the handle to the main housing.

Additional aspects of the invention may include such items as wherein the main housing includes a reservoir receiving recess that is adapted to receive a portion of the reservoir, wherein the main housing includes a pocket that is configured to fit within the reservoir receiving recess and is adapted to receive a portion of the reservoir, wherein the reservoir includes a reservoir outlet aperture, and the reservoir includes a reservoir outlet tube extending from the reservoir so as to surround the reservoir outlet aperture.

Still other aspects of the invention may include a reservoir outlet check valve insertably engaging the reservoir outlet aperture, and including an elastomeric reservoir outlet check valve body and an outlet check valve spring surrounding the elastomeric reservoir outlet check valve body, and wherein the elastomeric reservoir outlet check valve body includes a longitudinal axis and a conical outlet check valve seating surface that forms a first angle relative to the longitudinal axis, wherein the reservoir outlet check valve further includes a conical outlet valve seating surface disposed a distance from the outlet check valve seating surface and forming a second angle relative to the longitudinal axis that differs from the first angle, as well as wherein the difference between the first angle and the second angle is within a range of 3-5 degrees, and wherein the outlet check valve spring has a first extended position in which the elastomeric reservoir outlet check valve body engages the conical outlet valve seating surface and prevents a liquid held in the reservoir from passing through the reservoir outlet aperture, and a second compressed position in which the outlet check valve body extends upwardly into the reservoir and permits fluid to pass between the outlet check valve seating surface and the outlet check valve seat 136, and through the reservoir outlet aperture.

Yet other aspects of the invention may include an inlet float valve housing intermediate the main housing base and the main housing pocket, and an elastomeric reservoir seal interposed between the main housing pocket and the reservoir outlet tube to create a seal between the reservoir and the inlet float valve housing and prevent fluid leakage when the reservoir outlet check valve is open and the reservoir is nested in the reservoir receiving recess of the main housing, wherein the elastomeric reservoir seal includes a compressible lip and is configured to be inserted into the main housing pocket and over the inlet float valve housing, such that the compressible lip is expandable to engage with the main housing pocket bottom, which holds the elastomeric reservoir seal in place as the reservoir is removed from the main housing reservoir receiving recess.

Still other aspects of the invention may include a central support flange formed at a distal end of the check valve body and outlet check valve-engaging fingers positioned proximate the central support flange, wherein the outlet check valve-engaging fingers are configured to press against the central check valve support flange when the reservoir outlet tube is inserted into the elastomeric reservoir seal, and compress the outlet check valve spring to cause the outlet check valve body seating surface to move away from the outlet check valve seat, whereby a liquid in the reservoir is allowed to flow through the reservoir outlet aperture and into the inlet float valve housing, wherein the pump housing includes a buoyant inlet float valve that is operably connected to the inlet float valve housing, such that the inlet float valve rises when the inlet float valve housing is filled with liquid, and the inlet float valve sinks when the inlet float valve housing is devoid of liquid, and wherein the inlet float valve includes an elastomeric inlet float valve body having a conical inlet float valve seating surface, and an inlet float valve base that sealingly engages with the inlet float valve body such that air is captured in the assembled inlet float valve to make the inlet float valve buoyant.

Yet other aspects of the invention may include an inlet float valve chamber that contains the inlet float valve, the inlet float valve chamber including a conically tapered inlet float valve seat at a proximal end thereof such that when the inlet float valve chamber is filled with a liquid, the inlet float valve is lifted within the inlet float valve chamber and the inlet float valve seating surface sealingly engages the inlet float valve seat, wherein an angle of the conical inlet float valve seat to a longitudinal axis of the inlet float valve differs from an angle of the conical inlet float valve seating surface relative to the longitudinal axis of the inlet float valve by 3-5 degrees to promote improved sealing, an inlet float valve sensor positioned on an exterior of the inlet float valve housing adjacent the proximal end of the inlet float valve seat, and a piston cylinder, and wherein the pump housing includes a pump housing attachment flange having a piston cylinder chamber that is configured to receive at least a portion of the piston cylinder therein.

Still other aspects of the invention may include such items as wherein the SSC linear motor includes a pump piston having a first end that is configured to slidingly engage the piston cylinder and second end opposite the first end, and a piston push rod that is operably connected to the second end of the pump piston, a processor and at least one sensor of at least one component of the water flosser, the at least one sensor being in electronic communication with the processor, wherein the at least one sensor includes a pump position sensor in communication with the pump piston and adapted to detect a change in position of the pump piston, to enable a user to control pulse frequency, pulse duration and pressure of the water flosser, wherein the processor is in electronic communication with the self-supporting coil, wherein the processor supplies current to the self-supporting coil, which causes movement of the pump piston, and wherein the amount of current applied to the self-supporting coil determines the pressure of the water flosser.

Yet other aspects of the invention may include such items as wherein the presence or absence of current determines the pulse duration of the water flosser, and the pulse frequency is determined by how many pulses are created in a given period, wherein the main housing includes a cradle configured to receive the handle therein, and wherein the at least one sensor includes a cradle sensor that is adapted to detect the presence of the handle in the cradle, wherein the processor is in electronic communication with the inlet float valve sensor to determine whether the inlet float valve chamber is filled with liquid, wherein the handle includes at least one button that is operatively connected to the pump position sensor and pump piston, such that depressing the at least one button enables a user to control pulse frequency, pulse duration and pressure of the water flosser, wherein the processor is in electronic communication with a fault indicator means to alert a user of a fault condition sensed by the at least one sensor, wherein the fault indicator means is an audible signal, wherein the fault indicator means is a visual signal, and may include a means for selecting operation parameters of the water flosser using a mobile device.

Other aspects of the invention, while not recited in this section, shall become evident from the drawings and detailed description of the invention, provide below.

## Brief Description of the Drawings

Figure 1 is a top front perspective view of an embodiment of a water flosser according to the present invention.

Figure 2 is a top perspective view of user interaction components of the water flosser shown in Figure 1.

Figure 2a is a cross-sectional view of user interaction components of Figure 2 as taken along lines A-A.

Figure 3 is a front elevational view of the water flosser of Figure 1.

Figure 4 is a left side view of the water flosser of Figure 1.

Figure 5 is a right side view of the water flosser of Figure 1.

Figure 6 is a top rear perspective view of the water flosser of Figure 1.

Figure 6a is an enlarged/detailed view of a portion of the water flosser of Figure 1, as defined by the circled area of Figure 6.

Figure 6b is a rear elevational view of the water flosser of Figure 1.

Figure 7 is a top perspective view of an embodiment of a printed circuit board and components thereof used in the water flosser of Figure 1.

Figure 8 is a bottom plan view of the water flosser of Figure 1.

Figure 9 is an exploded view of the water flosser of Figure 1.

Figure 10a is a top perspective view of an embodiment of a handle cradle of the water flosser of Figure 1.

Figure 10b is a bottom perspective view of the handle cradle shown in Figure 10a.

Figure 10c is a front elevational view of the handle cradle shown in Figure 10a.

Figure 10d is a right side view of the handle cradle shown in Figure 10a.

Figure 10e is a bottom plan view of the handle cradle shown in Figure 10a.

Figure 10f is a top plan view of the handle cradle shown in Figure 10a.

Figure 10g is a cross-sectional view of the handle cradle shown in Figure 10a, as taken along lines 1-1 of Figure 10d.

Figure 11 is an exploded view of a base, pedestal and handle cradle of the water flosser of Figure 1.

Figure 11a is an enlarged/detailed view of a handle cradle engagement protrusion of the water flosser of Figure 1, as defined by the circled area of Figure 11.

Figure 12 is a bottom perspective view of the base and pedestal of the water flosser of Figure 1.

Figure 13 is cross-sectional view of the cradle and pedestal of the water flosser of Figure 1.

Figure 14 is a top plan view of the water flosser of Figure 1.

Figure 15 is a top plan view of the water flosser of Figure 1, with the reservoir and main housing components removed.

Figure 16 is cross-sectional view of the water flosser of Figure 1.

Figure 17 is a top perspective, cross-sectional view of the water flosser of Figure 1.

Figure 18 is an enlarged/detailed cross-sectional view of a portion of the water flosser of Figure 1.

Figure 19 is a side view of an embodiment of a pump housing of the water flosser of Figure 1.

Figure 19a is a cross-sectional view of the pump housing of Figure 19, as taken along lines 2-2 thereof.

Figure 19b is an exploded view of the pump housing of Figure 19.

Figure 20 is a partially exploded view of the pump housing of Figure 19, with an elastomeric inlet float valve housing cap and an inlet float valve sensor.

Figure 20A is an exploded view of the pump housing of Figure 19, and the elastomeric inlet float valve housing cap and inlet float valve sensor of Figure 20.

Figure 21 is a partially exploded view of the pump housing of Figure 19, as assembled with a pump housing support and a self-supporting coil ("SSC") linear motor of the water flosser of Figure 1.

Figure 22 is a top plan view of the pump housing of Figure 19, as assembled with the pump housing support and SSC linear motor.

Figure 22A is a cross-sectional view of the pump housing, pump housing support and SSC linear motor of Figure 22, as taken along lines 3-3 thereof.

Figure 22B is an enlarged/detailed cross-sectional view of components of the SSC linear motor, as defined by the left, larger circled area of Figure 22A.

Figure 22C is an enlarged/detailed cross-sectional view of components of the SSC linear motor, as defined by the right, smaller circled area of Figure 22A.

Figure 23 is a top perspective view of an embodiment of an SSC linear motor coil assembly of the water flosser of Figure 1.

Figure 23a is an exploded view of the SSC linear motor coil assembly shown in Figure 23.

Figure 24 is an exploded view of a self-supporting coil assembly, including the SSC linear motor coil assembly shown in Figures 23 and 23a.

Figure 24a is a partially exploded view of the self-supporting coil assembly of Figure 24.

Figure 25 is a front plan view of the self-supporting coil assembly of Figures 24 and 24a, as fully assembled.

Figure 26 is a front elevational view of a handle and tubing of the water flosser of Figure 1.

Figure 27 is a rear elevational view of the handle and tubing shown in Figure 26.

Figure 28 is a right side view of the handle and tubing shown in Figure 26.

Figure 29 is a left side view of the handle and tubing shown in Figure 26.

Figure 30 is a top plan view of the handle and tubing shown in Figure 26.

Figure 31 is a bottom plan view of the handle and tubing shown in Figure 26.

Figure 32 is a top perspective view of the handle and tubing shown in Figure 26.

Figure 33 is a cross-sectional view of the handle shown in Figure 26, as taken along lines 4-4.

Figure 34 is an exploded view of the handle and tubing shown in Figure 26.

Figure 35 is an exploded view of the handle shown in Figure 26.

Figure 36 is a cross-sectional view of an embodiment of a handle float valve housing of the handle shown in Figure 26, as taken along lines 5-5.

Figure 37 is a top perspective view of an embodiment of a handle float valve centralizer of the handle shown in FIG. 26.

Figure 38 is a detailed cross-sectional view of a portion of the handle shown in Figure 26, including an on/off button and related elements.

Figure 39 is a top perspective view of an embodiment of an on/off toggle body cam of the handle shown in Figure 26.

Figure 40 is a bottom perspective view of an embodiment of an on/off button of the handle shown in Figure 26.

Figure 41 is a cross-sectional view of an embodiment of a nozzle of the water flosser of Figure 1, as taken along lines 6-6.

Figure 42 is a top perspective view of an embodiment of a nozzle cam of the nozzle shown in Figure 41.

Figure 43 is a top perspective view of an embodiment of a nozzle cam receiver of the water flosser of Figure 1, as shown in Figure 33.

Figure 44 is a bottom perspective view of the nozzle cam receiver shown in Figure 43.

Figure 45 is a flow chart illustrating the operation of the water flosser of Figure 1 according to an embodiment.

Figure 46 is a front elevational view of a water flosser having control knobs according to an embodiment.

Figure 47 is an exploded view of an embodiment of a handle with a non-hydraulic control mechanism, as used with the water flosser of Figure 1.

Figure 48 is a top plan view of the handle shown in Figure 47.

Figure 49 is a front elevational view of the handle shown in Figure 47.

Figure 50 is a left side view of the handle shown in Figure 47.

Figure 51 is a rear elevational view of the handle shown in Figure 47.

Figure 52 is a right side view of the handle shown in Figure 47.

Figure 53 is a bottom plan view of the handle shown in Figure 47.

Figure 54 is a top perspective view of the handle shown in Figure 47.

Figure 55 is a cross-sectional view of an embodiment of a pump discharge valve for use with the handle of Figure 47, as taken along lines 7-7.

Figure 56 is top perspective view of the water flosser of Figure 1 with the handle shown in Figure 47 and an embodiment of a mobile device for use with the water flosser.

Figure 57 is a top perspective view of the mobile device shown in Figure 56, and having control options.

Figure 58 is a top perspective view of another embodiment of a mobile device for use with the water flosser and handle, and having control options.

Figure 59 is a top perspective view of the mobile device of Figures 56, displaying exemplary pulse waves created by the SSC linear motor of the water flosser of Figure 1.

Figure 60 is top plan view of another embodiment of a water flosser that is receiver-enabled.

Figure 61 is a front elevational view of the water flosser of Figure 60.

Figure 62 is a left side view of the water flosser of Figure 60.

Figure 63 is a right side view of the water flosser of Figure 60.

Figure 64 is a rear elevational view of the water flosser of Figure 60.

Figure 65 is a bottom plan view of the water flosser of Figure 60.

Figure 66 is a top perspective view of an embodiment of a handle having spatial recognition markings, as used with the water flosser of Figure 1.

Figure 67 is a flow chart showing an embodiment of operating the water flosser of the present invention using a mobile device.

Figure 68 is a flow chart showing an embodiment of operating the water flosser of the present invention using an audible interface and input.

Figure 69 is an exploded view of an embodiment of a handle having a ball valve, as used with the water flosser of Figure 1.

Figure 70 is a break-away view of the ball valve handle of Figure 69.

Figure 70a is an enlarged/detailed view of a portion of the ball valve handle of Figures 69 and 70, as defined by the circled area of Figure 70.

Figure 71 is a top perspective view of an embodiment of a ball valve rotation gear used in the handle of Figure 69.

Figure 72a is a perspective view of an embodiment of a ball valve seat housing used in the handle of Figure 69.

Figure 72b is a cross-sectional view of the ball seat housing of Figure 72a, as taken along lines 11-11.

Figure 73 is a cross-sectional view of the handle of Figure 69, as taken along lines 8-8.

Figure 74 is a top perspective view of the handle of Figure 69.

Figure 75 is a top plan view of the handle of Figure 69.

Figure 76 is a bottom plan view of the handle of Figure 69.

Figure 77 is a left side view of the handle of Figure 69.

Figure 78 is a left side view of the handle of Figure 69.

Figure 79 is a front elevational view of the handle of Figure 69.

Figure 80 is a rear elevational view of the handle of Figure 69.

Figure 81 is a flow chart showing an embodiment of operating an audible input/voice-activated water flosser of the present invention, having the handle of Figure 69.

Figure 81a is a flow chart showing an alternate embodiment of operating an audible input/voice-activated water flosser of the present invention.

Figure 82 is a top perspective view of an embodiment of a hand-held water flosser according to the present invention, with a lower housing component thereof removed.

Figure 83 is an exploded view of the water flosser of Figure 82.

Figure 84 is a cross-sectional view of the water flosser of Figure 82, as taken along lines 9-9 thereof.

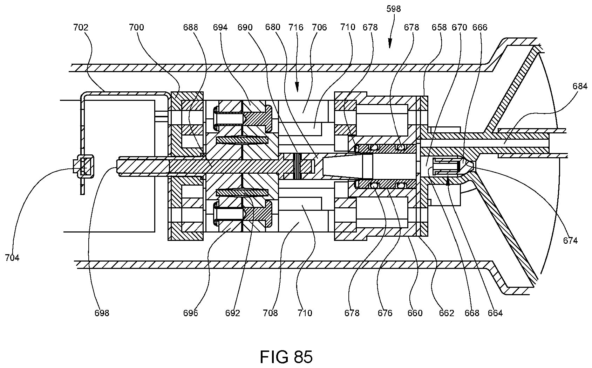

Figure 85 is a partial cross-sectional view of internal components of the water flosser of Figure 82.

Figure 86 is a schematic view of internal components of the water flosser of Figure 82.

Figure 87a is a top right perspective view of an alternate embodiment of a piston position-sensing configuration for use with the water flosser of the present invention.

Figure 87b is a top left perspective view of the piston position-sensing configuration shown in Figure 87a.

Figure 87c is a detailed, cross-sectional view of the piston position shown in Figures 87a and 87b.

Figure 88 is a graphical representation of an actuator's position and velocity vs. time, according to one embodiment.

## Detailed Description of the Invention

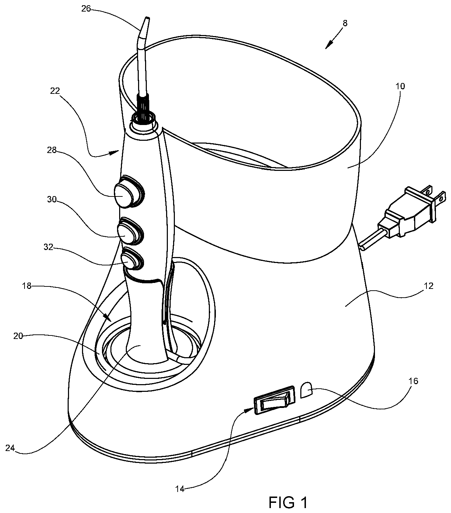

Figure 1 is a perspective view of an embodiment of a water flosser 8 having a reservoir 10 and a main housing 12. The reservoir 10 is adapted to hold a liquid, such as water, to be used in the water flosser 8. The main housing 12 is optionally intended to be any esthetically pleasing covering protecting users from the moving components of the water flosser 8 and the internal components of the water flosser 8 from the environment. In the embodiment depicted, the water flosser 8 has a power switch 14 that, when on, allows power to energize the working components of the water flosser 8. An indicator light is visible through a portion of the main housing 12 that is sufficiently thin to be translucent which creates an indicator light port 16 adjacent the power switch 14. Of course, other means of displaying power on and off are envisioned.

The main housing 12 has a tubing well 18 adapted to store the tubing 20 connecting the handle 22 to the water flosser 8 in an aesthetically pleasing or otherwise ergonomic way. The tubing well 18 is formed around the base of a handle cradle 24. In the embodiment depicted, a handle 22 is inserted in the handle cradle 24. At the end of the handle 22 is a tip or nozzle 26.

In one embodiment, the handle 22 has an on/off toggle button 28 and an increase button 30 and a decrease button 32. Depending of the starting condition, depressing and releasing the on/off toggle button 28 either permits fluid flow through the handle 22 and out the tip 26 or precludes fluid flow through the handle 22. Specifically, if the on/off button 28 permits fluid flow, pressing and releasing the on/off button 28 will prevent fluid flow, and if the on/off button 28 precludes fluid flow, pressing and releasing the on/off button 28 will permit fluid flow.

In one embodiment, depressing the increase button 30 when the on/off button 28 precludes fluid flow through the tip 26 will cause the value of a preselected function to increase. In one embodiment, depressing the decrease button 32 when the on/off button 28 precludes fluid flow through the tip 26 will cause the value of a preselected function to decrease. In one embodiment, depressing the increase button 30 and decrease button 32 simultaneously while the on/off button 28 precludes fluid flow through the tip 26 will change the function selected. This modality will be discussed more fully below.

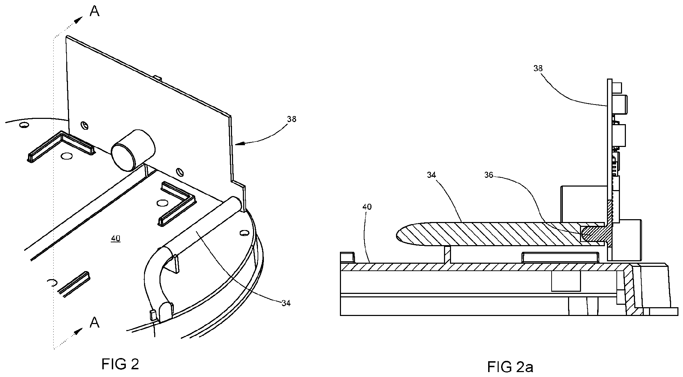

The main housing 12 of this embodiment facilitates user interaction with the water flosser 8. In one embodiment, a light pipe 34 transmits light from a multi-color LED 36 to the indicator light port 16, as shown in Figures 2 and 2a. The multi-color LED 36 is, optionally, on a printed circuit board assembly 38 holding other components, including a controller. The printed circuit board assembly 38 is supported on the water flosser base 40, which also supports the light pipe 34. The indicator light port 16 can communicate fault conditions to the user or may indicate that all systems are functioning correctly.

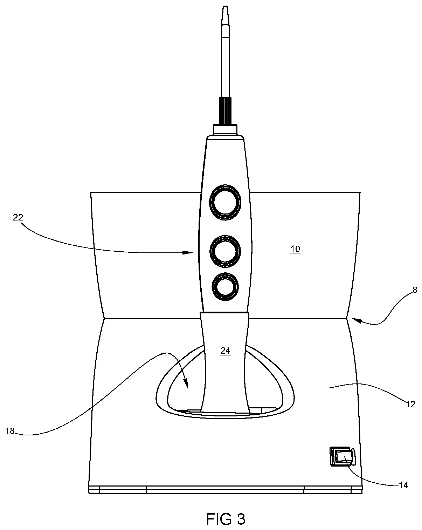

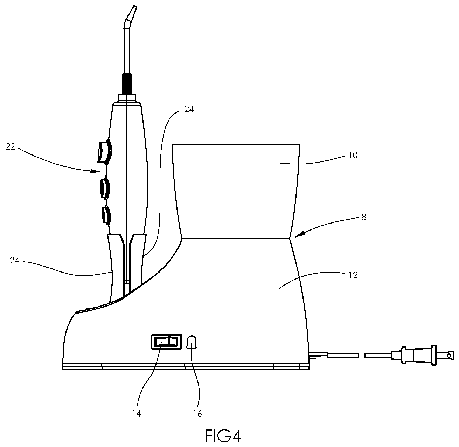

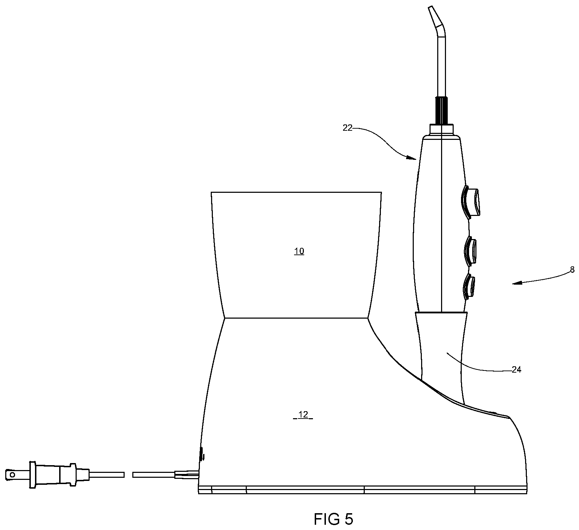

Figure 3 is a front view of the water flosser 8. Figure 4 is a left side view of the water flosser 8 showing the power switch 14 and indicator light port 16. Figure 5 is a right side view of the water flosser 8 showing the handle 22 seated in the handle cradle 24.

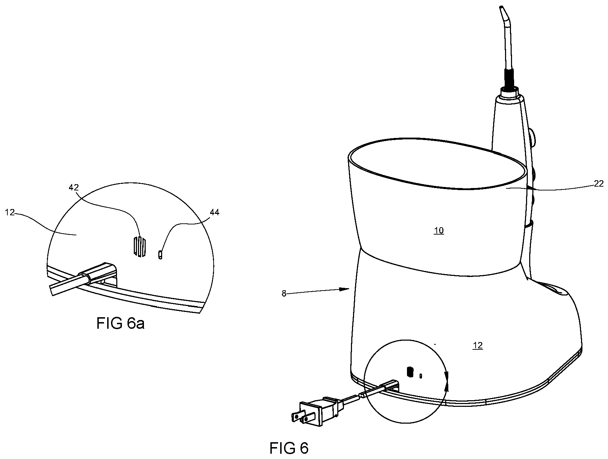

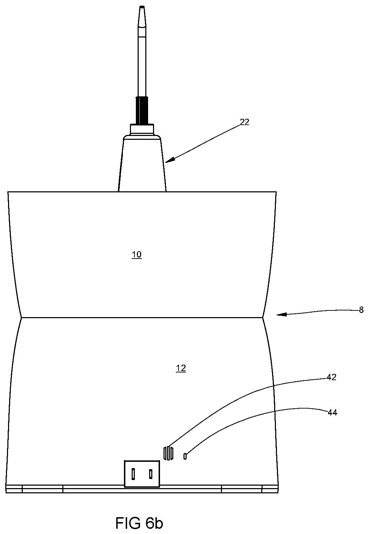

Figure 6 is a perspective rear view of the water flosser 8. Figure 6a is an enlarged portion of the rear of the water flosser 8. Figure 6b is a rear view of the water flosser 8. As noted above, the main housing 12 facilitates user interaction with the water flosser 8 in certain embodiments. In this embodiment, the main housing 12 has a speaker aperture 42. The speaker aperture 42, which may take any form, size and/or shape, and placed in other areas, facilitates audible communication to a user from the water flosser 8. For example, in certain embodiments, the water flosser 8 can provide audible instructions to a user or audibly describe a fault condition through the speaker aperture 42. Figure 6b is a rear view of the water flosser 8.

The main housing 12, in one embodiment, also includes a microphone aperture 44. The microphone aperture 44, which may take any form, size and/or shape, and placed in other areas, facilitates communication between a user and the water flosser 8. For example, in certain embodiments, a user could provide spoken instructions to the water flosser 8, and the microphone opening 44 facilitates passage of the spoken instruction through the main housing 12. In one embodiment, the water flosser 8 incorporates voice recognition software that enables it to recognize commands, such as "increase pressure," and to act on received commands.

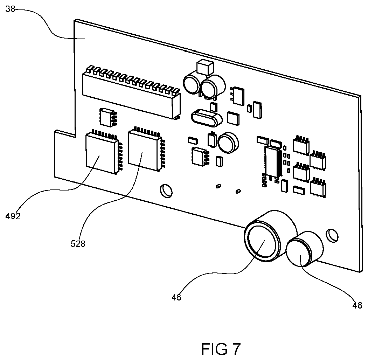

Figure 7 shows the optional placement of the speaker 46 and microphone 48 on the printed circuit board assembly 38, which, in this embodiment, is positioned behind the speaker aperture 42 and microphone aperture 44 (shown in Figures 6a and 6b).

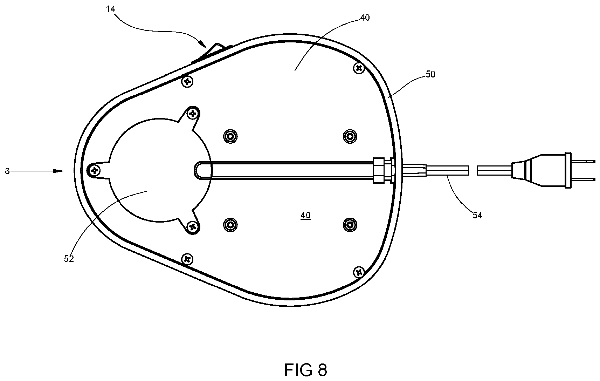

Figure 8 is a bottom view of an embodiment of the water flosser 8. The water flosser base 40 is optionally supported by an elastomeric foot 50. The base 40 optionally includes a power supply support plate 52. A power cord 54 transmits AC power to the water flosser 8. Other means of transmitting power are also contemplated, such as the type used for cordless charging of an android phone. The elastomeric foot 50 is attached to the water flosser base 40 to vibrationally isolate the water flosser 8 from the environment and to keep the water flosser 8 stationary when in use.

Figure 9 shows the power supply support plate 52 removed from the base 40. As shown, the power supply printed circuit board assembly 56 is optionally supported by the power supply support plate 52. The power supply printed circuit board assembly 56 converts the AC power transmitted to the power supply by the power cord 54 to a desired DC voltage. In one embodiment, the power supply circuit board assembly 56 is potted, that is, it is sealed in an epoxy such that the circuitry is sealed from the environment. Other means of isolation are also envisioned. In one embodiment, the incoming AC power is converted to 24-volt DC power that is conveyed to the controller printed circuit board assembly 38 (not shown) via the controller printed circuit board power supply conduit 57.

When assembled in this embodiment, the power supply circuit board assembly 56 is nestled beneath the cradle pedestal 58. The cradle pedestal 58 supports the handle cradle 24 and forms an inner radius of the tubing well 18.

As shown in Figure 9, the base 40 optionally has four SSC linear motor assembly stops 62 that assist in positioning the SSC linear motor assembly on the base 40 and help secure the linear motor assembly to the base 40. The power/cradle sensor signal conduit trough 64 carries the power cord 54 and the cradle sensor signal conduit 66 safely under the linear motor assembly when the water flosser 8 is assembled.

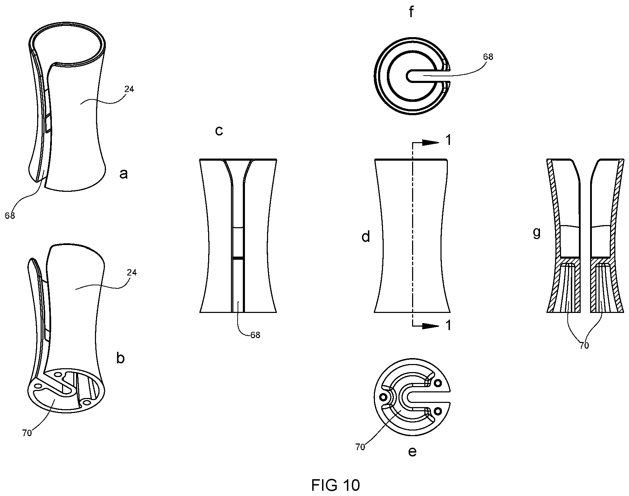

The cradle 24 is depicted in Figures 10a-10g. Of course, other configurations of the cradle 24 are envisioned. Figures 10a and 10b are top and bottom perspective views of the cradle 24, respectively. Figure 10c is a front view and Figure 10d is a right side view of the cradle 24. Figure 10e is a top view of the cradle 24, and Figure 10f is a bottom view of the cradle 24. Figure 10g is a cross-section view of the cradle 24. The cradle has an optional tubing slot 68 that permits the handle 22 to be inserted into the cradle 24 as the attached tubing 20 slides down the tubing slot 68. The tubing slot 68 assures that the handle's orientation relative to the water flosser 8 is consistent when the handle 22 is held in the cradle 24. The cradle 24 optionally has a tapered cradle pedestal receiver 70 at its base to facilitate assembly with the cradle pedestal 58.

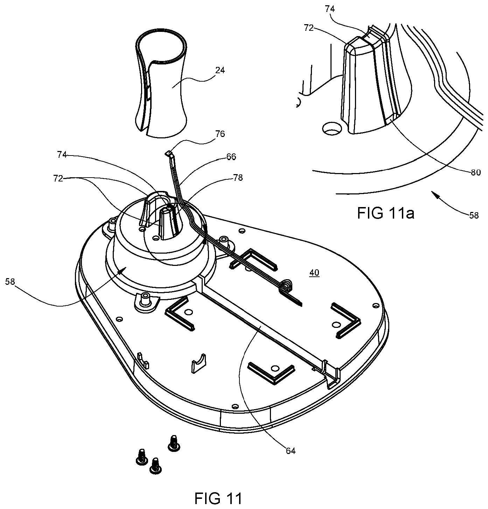

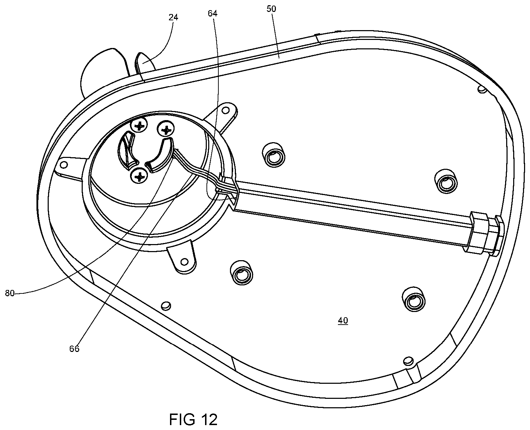

As shown in Figure 11, the pedestal 58 is optionally topped with cradle engaging protrusions 72. Upon assembly, the cradle pedestal receiver 70 (shown in Figures 10e and 10g) slidingly receives the cradle engaging protrusions 72 to secure the cradle 24 to the cradle pedestal 58. In one embodiment, one cradle engaging protrusion 72 has a cradle engaging protrusion notch 74. The cradle engaging protrusion notch 74 is adapted to hold a cradle sensor 76. One cradle engaging protrusion 72 also optionally has a cradle engaging protrusion slot 78 that is configured to hold the cradle sensor signal conduit 66. The pedestal has an optional cradle sensor signal conduit aperture 80 at the base of cradle engaging protrusion 72, as best seen in Figures 11a and 12. The cradle sensor signal conduit 66 passes through the cradle sensor signal conduit aperture 80 to the interior of the cradle pedestal 58 and down to the power/signal trough 64, as shown in Figure 12. When assembled, the cradle 24 slides over, and protects, the cradle sensor 76 (shown in Figure 11) and the cradle sensor signal conduit 66. In one embodiment, the cradle sensor 76 is secured in its proper position when the cradle 24 is in place and may be held in position by tape during assembly. The interior shape of the cradle 24 directs any liquid that may leak from the handle 22, tubing 20 or tip 26 out the slot 68 and away from the power supply circuit board assembly 56 when the handle 22 is in the cradle 24.

In one embodiment, the handle 22 diameter is slightly larger than the corresponding cradle 24 inside diameter and the cradle 24 flexes apart slightly upon insertion of the handle 22. In this embodiment, the cradle 24 applies a slight compressive force to the handle 22 to keep the handle 22 securely in place. In another embodiment, the handle 22 and cradle 24 have a mating detent (not shown) that secures the handle 22 in the cradle 24 in the proper position. In other embodiments, gravity assures the handle 22 is properly positioned in the cradle 24.

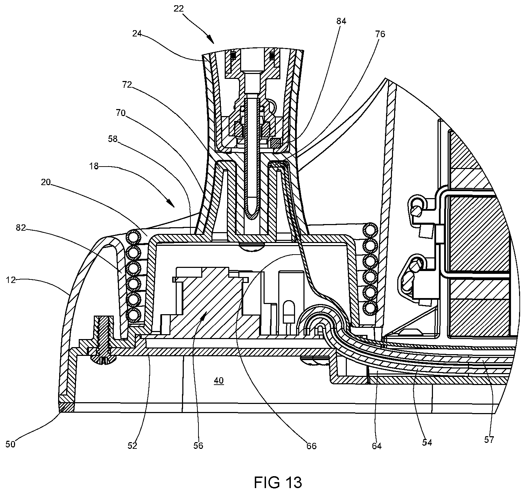

Figure 13 is a cross-section taken across the cradle 24 and cradle pedestal 58. As shown, the tubing 20 neatly fits into the tubing well 18, which is defined by the cradle pedestal 58 and the main housing tubing well wall 82. As can be seen, the cradle sensor 76 is positioned below the handle 22. A handle magnet 84 is sensed by the cradle sensor 76 and a signal is conveyed over the cradle sensor signal conduit 66 to a controller on the controller printed circuit board assembly 38 such that the presence or absence of the handle 22 in the cradle 24 can be detected by the controller. The AC power cord 54 powers the power supply printed circuit board assembly 56 and is housed in the power/signal trough 64 with the cradle sensor signal conduit 66. The DC power created by the power supply printed circuit board assembly 56 is conveyed to the control printed circuit board assembly 38 by the controller printed circuit board power conduit 57 that is also carried in the power/signal trough 64. The tubing slot 68 in the cradle 24 (shown in Figures 10a and 10f) assures that the handle magnet 84 is properly positioned over the cradle sensor 76 when the handle 22 is in the cradle 24. One of skill would understand that other methods of sensing the presence of the handle 22 in the cradle 24 could be utilized, such as opto-electrical sensors or mechanical sensors.

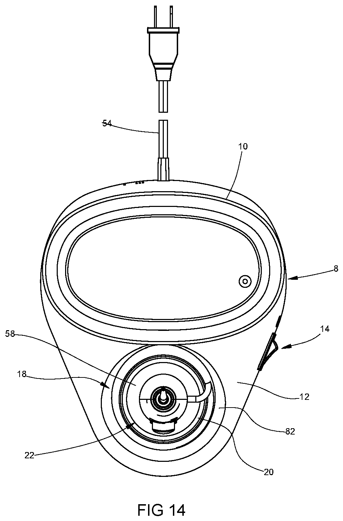

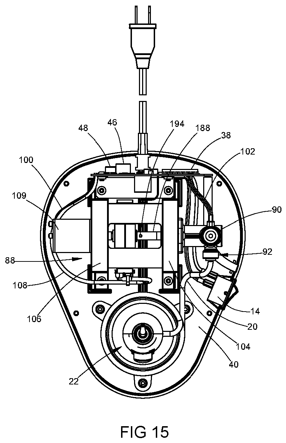

Figure 14 is a top view of an embodiment of a water flosser 8. Figure 15 is a top view of an embodiment of a water flosser 8 with the reservoir 10 and main housing 12 removed. The SSC linear motor 88 is optionally secured to the base 40. Tubing 20 connects the pump housing 90 to the handle 22. The tubing 20 is sealingly secured to the pump housing 90 through an optional pump housing quick connect coupling 92. The piston position sensor signal conduit 100 and the cradle sensor signal conduit 66 (see Figures 9 and 11-13) are connected to the controller printed circuit board assembly 38, as is the inlet float valve sensor signal conduit 102. The SSC linear motor 88 is supported on one end by a pump housing support 104 and by a piston position sensor magnet housing support 106 on the other. The controller printed circuit board assembly 38 receives DC current from the power supply printed circuit board assembly 56 (see Figure 9) and outputs a control current to the SSC linear motor 88 through the SSC linear motor control current conduit 108. The SSC linear motor control current conduit 108 is optionally supported by the piston position sensor support bracket 109.

Reservoir Outlet Check Valve

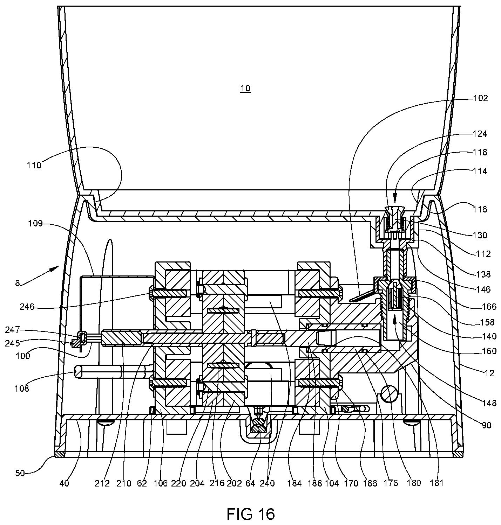

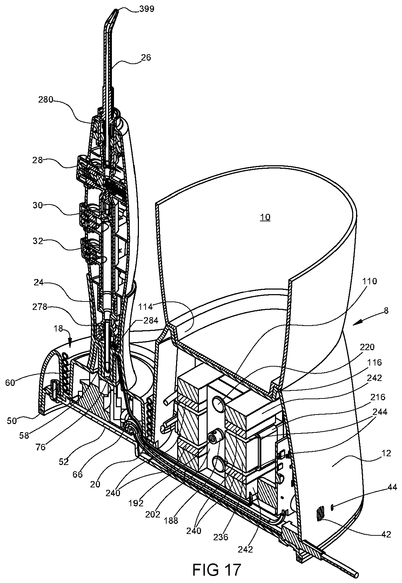

Figure 16 is a cross-sectional view of an embodiment of a water flosser 8. The reservoir 10 nests in a reservoir receiving recess 110 in the main housing 12. The main housing 12 also has a pocket 112 that is adapted to receive a portion of the reservoir 10. The reservoir receiving recess 110 is adapted to securely hold the reservoir 10 when it is placed on the main housing 12. In one embodiment, the reservoir 10 is molded from a clear plastic. As shown, in this embodiment, the cross-section of the lower portion of the reservoir 10 is reduced to form a reservoir main housing mating feature 114 at the bottom of the reservoir 10. The reservoir main housing mating feature 114 slidingly engages a reservoir receiving recess 110 defined by the main housing upper wall 116. When the reservoir main housing mating feature 114 is in the main housing receiving recess 110, the reservoir check valve 118 is opened, as shown. Figure 17 is another cross-sectional view illustrating the engagement of the reservoir 10 with the main housing 12.

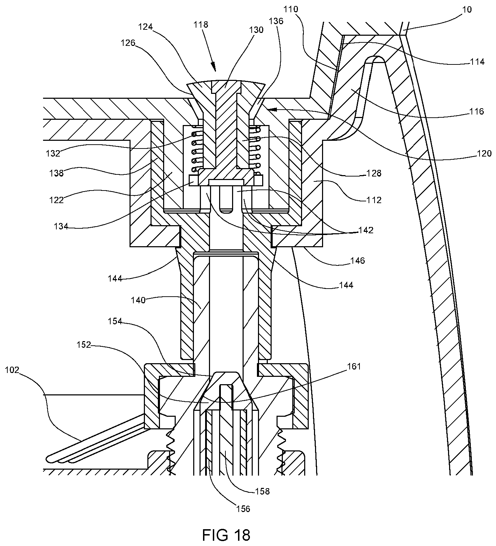

Figure 18 is an enlarged cross-sectional view of the main housing pocket 112 and reservoir outlet check valve 118. At the reservoir 10 bottom is a reservoir outlet aperture 120. Extending from the bottom of the reservoir 10 is a reservoir outlet tube 122. The elastomeric reservoir outlet check valve body 124 has an outlet check valve seating surface 126 that is conical and is angled at a first angle relative to the longitudinal axis of the outlet check valve body 124. In one embodiment, the elastomeric outlet check valve body 124 surrounds a relatively rigid central outlet check valve support 130. An outlet check valve spring 132 surrounds the elastomeric outer surface of the outlet check valve body 124. The outlet check valve spring 132 is interposed between the bottom surface of the reservoir 10 and a central check valve support flange 134 formed at the distal end of the central outlet check valve support 130. (For ease of explanation herein, one should assume the perspective that something proximal is closer to the reservoir 10 along the flow path and things distal or remote are farther away from the reservoir 10 along the flow path. The flow path is the path a liquid would take when the water flosser 8 is pumping liquid from the reservoir 10 to the nozzle 26 tip.)

When extended, the outlet check valve spring 132 causes the elastomeric outlet check valve body 124 to engage the conical outlet valve seating surface 136. When the outlet check valve spring 132 is compressed, the outlet check valve body 124 extends upwardly into the reservoir 10 and permits fluid to pass between the outlet check valve seating surface 126 and the outlet check valve seat 136 and through the reservoir outlet aperture 120. Optionally, the outlet valve seat 136 is conical and is angled at a second angle relative to the longitudinal axis of the outlet check valve body 124. In one embodiment, the first and second angles differ by 3-5 degrees.

In the current embodiment, an elastomeric reservoir seal 138 is interposed between the main housing pocket 112 and the reservoir outlet tube 122. The elastomeric reservoir seal 138 creates a seal between the reservoir 10 and an inlet float valve housing 140 that is situated intermediate the base 40 and pocket 112, preventing fluid from leaking out of the flow path when the reservoir outlet check valve 118 is open and the reservoir 10 is properly mated with the main housing 12. Outlet check valve engaging fingers 142 engage the central support flange 134 to compress the outlet check valve spring 132 when the reservoir outlet tube 122 is inserted in the main housing pocket 112.

The elastomeric reservoir seal 138 is formed with a compressible lip 144 and may be inserted into the main housing pocket 112 and over the inlet float valve housing 140. Once inserted, the compressible lip 144 expands to engage with the main housing pocket bottom 146, which holds the elastomeric reservoir seal 138 in place as the reservoir 10 is removed from the main housing reservoir receiving recess 110. The elastomeric reservoir seal 138 sealingly engages with the proximal end of the inlet float valve housing 140 preventing fluid leaking from the flow path when the reservoir 10 is nested in the main housing reservoir receiving recess 110.

When the reservoir 10 is not nested in the reservoir receiving recess 110, the reservoir outlet check valve spring 132 is extended and the outlet check valve body seating surface 126 is seated against the outlet check valve seat 136, which prevents a liquid held in the reservoir 10 from passing through the reservoir outlet aperture 120. When the reservoir 10 is mated to the main housing 12, the reservoir outlet tube 122 slidingly and sealingly engages with the elastomeric reservoir seal 138. As the reservoir outlet tube 122 is inserted into the elastomeric reservoir seal 138, the elastomeric reservoir seal outlet check valve engaging fingers 142 are pressed against the central check valve support flange 134 and compress the outlet check valve spring 132 and cause the outlet check valve body seating surface 126 to move away from the outlet check valve seat 136, which allows a liquid in the reservoir 10 to flow through the reservoir outlet aperture 120 and into the inlet float valve housing 140.

Pump

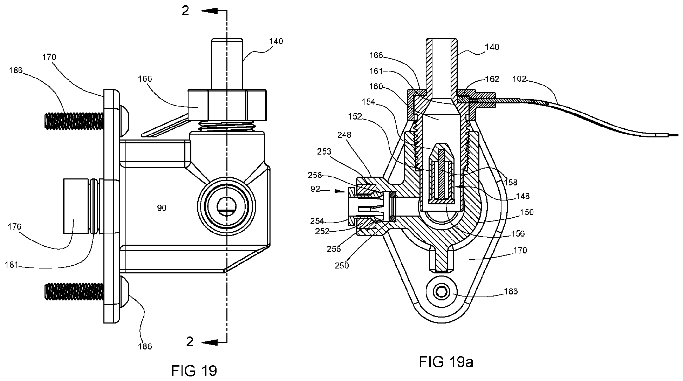

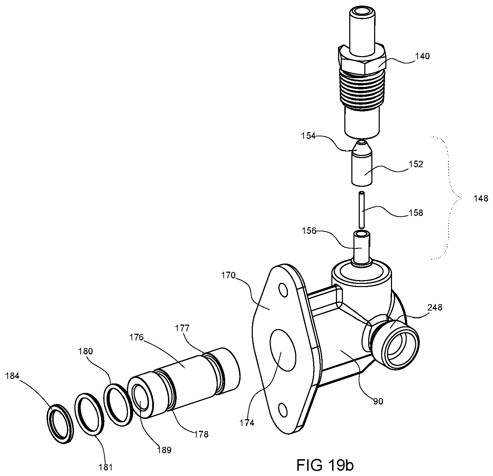

As noted above, the distal end of the elastomeric reservoir seal 138 sealingly engages the proximal end of the inlet float valve housing 140. Figure 19 is a view of a pump housing 90 of one embodiment. Figure 19a is a cross-sectional view of one embodiment of the pump housing 90. Figure 19b is an exploded view of the components associated with an embodiment of the pump housing 90. Optionally, the inlet float valve 148 comprises an elastomeric inlet float valve body 152 having a conical inlet float valve seating surface 154. An inlet float valve base 156 secures an inlet float valve magnet 158 along a longitudinal axis of the inlet float valve body 152. The inlet float valve base 156 sealingly engages with the inlet float valve body 152 such that air is captured in the assembled inlet float valve 148 making the inlet float valve 148 buoyant such that if the inlet float valve housing 140 is filled with a liquid, the inlet float valve 148 will rise. In contrast, if the inlet float valve housing 140 is devoid of liquid, the inlet float valve 148 will sink and rest atop the bottom of an inlet float valve chamber 160, as shown in Figure 19a. Of course, one of skill in the art would understand that inlet float valve 148 may be made buoyant in numerous ways. Other, non-limiting examples include filling the void within the inlet float valve 148 with an open cell foam or the inlet float valve 148 could be made from a solid buoyant material and the inlet valve body magnet 158 could inserted and secured in an aperture formed in the inlet valve 148.

As shown in Figure 16, at the proximal end of the inlet float valve chamber 160 is a conically tapered inlet float valve seat 161. As shown in Figures 16 and 18, when the inlet float valve chamber 160 is filled with a liquid, the inlet float valve 148 is lifted within the inlet float valve chamber 160 and the inlet float valve seating surface 154 sealingly engages the inlet float valve seat 161. Optionally, the angle of the conical inlet float valve seat 161 and the angle of the conical inlet float valve seating surface 154 relative to the longitudinal axis of the inlet float valve 148 differ by 3-5 degrees to promote improved sealing.

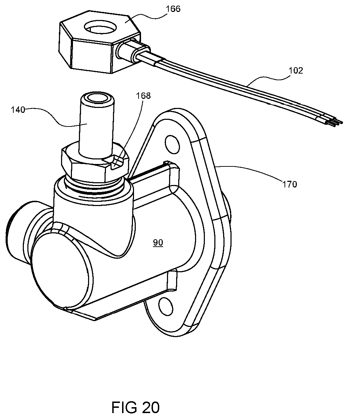

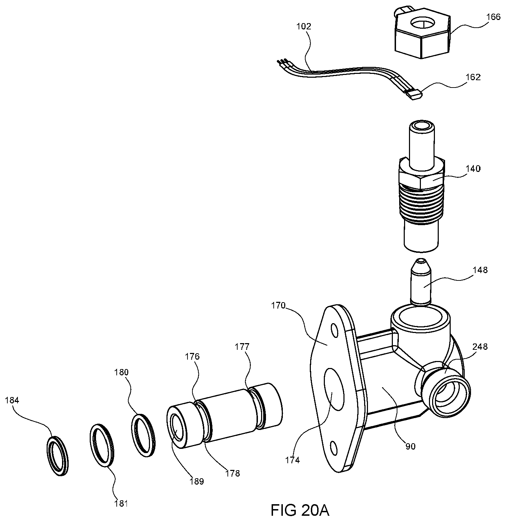

In the embodiment depicted in Figures 19a and 19b, the float valve housing 140 threadingly engages the pump housing 90. An inlet float valve sensor 162 is positioned on the exterior of the inlet float valve housing 140 adjacent the proximal end of the inlet float valve seat 161. The inlet float valve sensor 162 is connected to the controller printed circuit board assembly 38 by an inlet float valve sensor signal conduit 102. An elastomeric inlet float valve housing cap 166 secures the inlet float valve sensor 162 in an inlet float valve housing sensor recess 168 best seen in Figure 20. Figure 20A is an exploded view. In the embodiment depicted, the inlet float vale sensor 162 is a Hall effect sensor. One of skill in the art would know that other sensors could be used to detect when the inlet float valve 148 engages with the inlet float valve seat 161 or when the inlet float valve chamber 160 is filled with liquid. As non-limiting examples, optoelectronic or mechanical sensors could be used to detect the inlet float valve's 148 engagement with the inlet float valve seat 161 as could resistivity sensors.

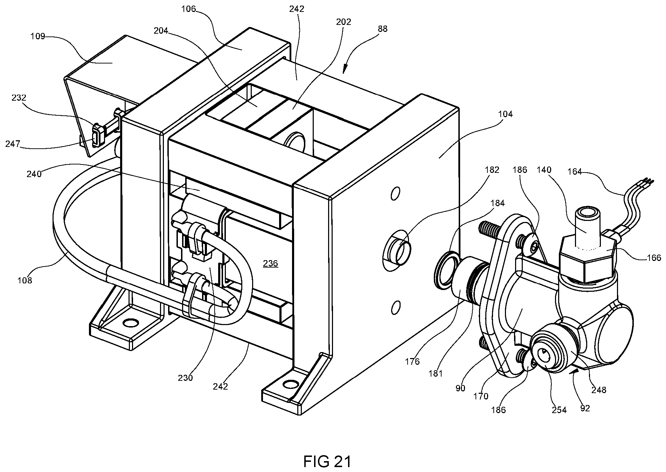

In an embodiment, the pump housing 90 has a pump housing attachment flange 170 that secures the pump housing 90 to the pump housing support 104. As shown in Figure 19b, the pump housing 90 has a piston cylinder chamber 174 that receives a piston cylinder 176. In one embodiment, the piston cylinder 176 is an internally polished 316 or 303 stainless steel tube. 440C stainless steel can also be used. The metal should be hardened by heat treatment. The piston cylinder 176 has first and second radial piston cylinder o-ring grooves or o-ring glands 177, 178. One o-ring groove 177 holds a piston cylinder chamber o-ring 180 interposed between the piston cylinder 176 and the piston cylinder chamber 174. The second piston cylinder o-ring groove 178 holds a pump housing support o-ring 181 interposed between the piston cylinder 176 and the pump housing support 104 along the radial edge of the piston cylinder 176. In this embodiment, the piston cylinder 176 is inserted into a pump housing piston cylinder support pocket 182 formed in the pump housing support 104, as shown in Figure 21. Interposed between the distal end of the piston cylinder 176 and the end of the pump housing piston cylinder support pocket 182 is a pump housing piston cylinder support pocket o-ring 184. The pump housing piston cylinder support pocket o-ring 184 has a square cross-section in certain embodiments.

When assembled, the pump housing piston cylinder support pocket o-ring 184 is compressed between the bottom of the pump housing piston cylinder support pocket 182 and the piston cylinder 176. The compressive force is created when the pump housing support 104 and pump housing 90 are drawn together by the pump housing screws 186 shown in Figure 21. In this embodiment, the piston cylinder chamber o-ring 180 creates a seal between the pump housing 90 and the piston cylinder 176, preventing fluid from leaving the flow path. The piston cylinder chamber o-ring 180, pump housing support o-ring 181 and the pump housing piston cylinder support pocket o-ring 184 vibrationally isolate the piston cylinder 176 and permit the piston cylinder 176 to self-align within the piston cylinder chamber 174.

Piston

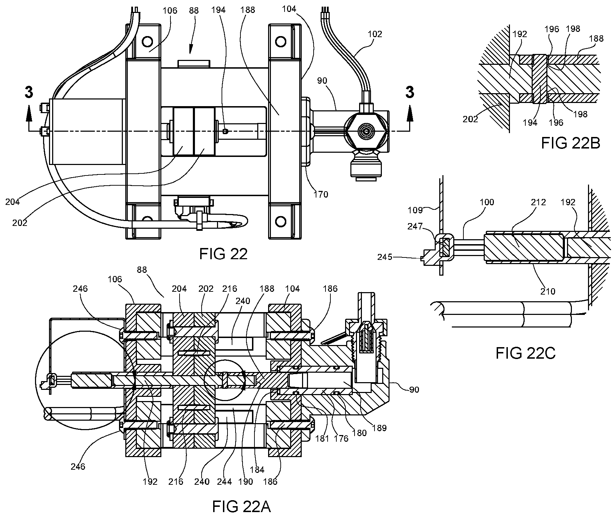

As shown in the embodiment of Figures 16 and 22A, a pump piston 188 slidingly engages the polished bore 189 of the piston cylinder 176. In one embodiment, the piston 188 is made from Delrin® AF Blend (an Acetal Hompopolymer blended with Teflon® (PTFE)) made by DuPont. One of skill would recognize other suitable materials for forming a piston 188 would include Polypropylene or Nylon 12, among other materials. Also, while the piston 188 depicted natural springs against the piston cylinder 176 inner wall, one of skill in the art would know that other materials could be used, such as a spring energized PTFE seal, to assure a sealing engagement between the piston 188 and piston cylinder 176 as the piston 188 slides back and forth within the piston cylinder 176.

In one embodiment, the pump piston 188 has a piston push rod retaining cavity 190 formed in the piston end remote from the piston cylinder 176. The piston push rod retaining cavity 190 is coaxial with the longitudinal axis of the pump piston 188. The piston 188 is connected to a piston push rod 192 that is inserted into the piston push rod retaining cavity 190. The longitudinal axis of the piston push rod 192 is also coaxial with the longitudinal axis of the piston 188. In one embodiment, the pump piston 188 is connected to the piston push rod 192 by a retaining pin 194, as best illustrated in Figure 22B. The pump piston 188 has pump piston apertures 196 formed in the pump piston 188 at right angles to the piston's longitudinal axis and the piston push rod 192 has a piston push rod aperture 198 formed at a right angle to the piston push rod's longitudinal axis, as seen in Figure 22B. The piston apertures 196 and piston push rod apertures 198 are slightly offset such that when the piston retaining pin 194 is inserted into the piston apertures 196 and piston push rod aperture 198, the pump piston 188 is compressed against the piston push rod flange 200, as shown in Figure 22B. This compressive connection securely fixes the pump piston 188 to the piston push rod 192 and eliminates any noise generating slop or slap between the pump piston188 and the piston push rod 192. One of skill in the art would recognize that several alternative methods could be used to connect the pump piston 188 to the piston push rod 192. For example, the piston push rod 192 could be fixed to the piston 188 with a suitable adhesive, or a threaded engagement could be used, or the pump piston 188 could be overmolded onto the piston push rod 192.

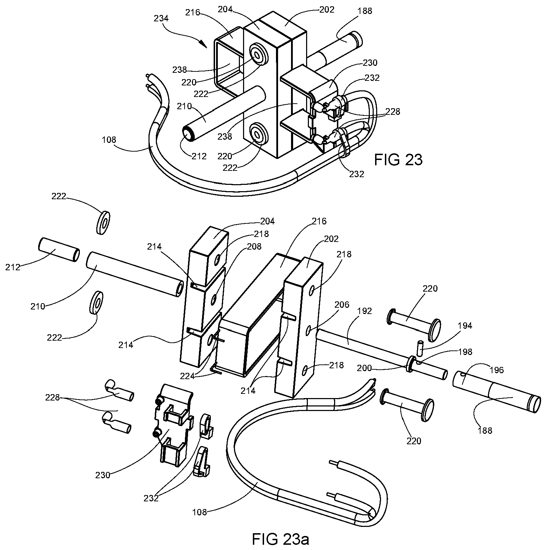

Figure 23 is a view of aspects of one embodiment of the SSC linear motor coil assembly 234, and piston assembly 23a is an exploded view of the same. In the embodiment depicted, a pump-side coil retainer half 202 is assembled adjacent a sensor-side coil retainer half 204. The piston push rod 192 passes through the pump-side coil retainer half piston push rod aperture 206 and the sensor-side coil retainer half piston push rod aperture 208. The end of the piston push rod 192 opposite the piston 188 engages with a piston position sensor magnet housing 210. The piston position sensor magnet housing 210 is assembled to press against the sensor-side coil retainer half 204, and the piston push rod flange 200 is assembled to press against the pump-side coil retainer half 202 such that the piston push rod 192 is in tension as it passes through the coil retainer halves 202, 204. The piston position sensor magnet housing 210 may be press-fit on the piston push rod 192. A piston position sensor magnet 212 is inserted in the end of the piston position sensor magnet housing 210 adjacent the piston push rod 192 end remote from the pump piston 188. The piston position sensor magnet 212 may be secured in place by an anaerobic retaining compound or may be crimped or press fit in place. The longitudinal axis of the piston position sensor magnet 212, the piston position sensor magnet housing 210, the piston push rod 192 and the pump piston 188 are coaxial.

The sensor-side coil retainer half 204 and the pump-side coil retainer half 202 have self-supporting coil notches 214 that, when assembled, fix a self-supporting coil 216 to the self-supporting coil retainer halves 202, 204. The self-supporting coil retainer halves 202, 204 also have a pair of rivet apertures 218 through which rivets 220 may extend. A pair of rivet washers 222 distribute the compressive load created by the assembled rivets 220 to the sensor-side self-supporting coil support half 204. The rivets 220 add a compressive force to that created by pressing the piston push rod flange 200 against the piston-side coil retainer half 202 and the piston position sensor magnet housing 210 against the sensor-side coil retainer half 204.

In one embodiment the self-supporting coil 216 is made by wrapping self-bonding magnet wire in a fixture and heating the wrapped fixture above the bond coat's reflow temperature such that it fuses. Once the bond coat returns to room temperature, the self-bonding magnet wire is held in place by the fused bond coat. As shown, the self-supporting coil 216 in the depicted embodiment has a rectangular shape when viewed along the longitudinal axis of the piston push rod 192. The depicted self-supporting coil 216 and associated connected parts are advantageously light weight which enables rapid responses to applied forces.

The self-supporting coil 216 has self-supporting coil leads 224 that are connected to the SSC linear motor control current conduit 108 through connectors 228. The connectors 228 and SSC linear motor control current conduit 108 are attached to the self-supporting-coil 216 by a coil strain relief bracket 230 and a pair of clamps 232. The SSC linear motor control current conduit 108 conveys DC power (a pulse width modulated signal) from the controller printed circuit board assembly 38 to the self-supporting coil 216 to selectively energize the coil.

Figure 23 depicts the assembled components of Figure 23a.

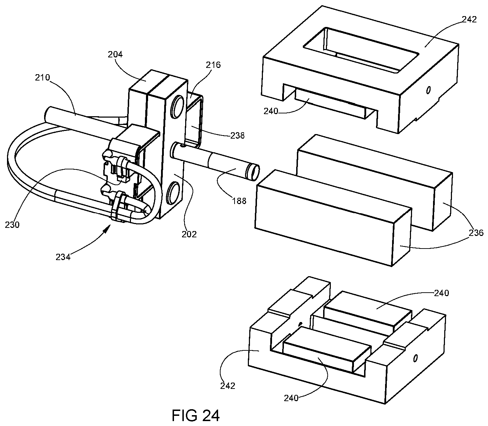

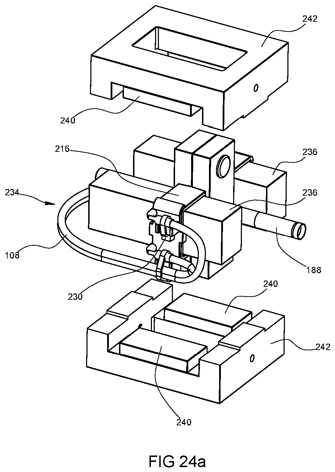

Figure 24 illustrates an embodiment of the self-supporting coil assembly 234 adjacent the remainder of the SSC linear motor components. Upon assembly, a pair of rails 236 create the magnetic inside return paths for the SSC linear motor. In an embodiment, the rails 236 are made of C1018 low carbon steel and are inserted in rail apertures 238 formed between the inside of the self-supporting coil 216 and the self-supporting coil retainer halves 202, 204 shown in Figures 23 and 24. Figure 24a shows the linear motor rails 236 inserted in the rail apertures 238. Optionally, four high strength neodymium linear motor magnets 240 are bonded to linear motor magnet support brackets 242, which form the outside magnetic return path. In an embodiment, the neodymium linear motor magnets 240 are made from sintered N42 neodymium. Optionally, the liner motor magnet support brackets 242 are made of C1018 low carbon steel, and like the rails 236, are relatively easy to machine. In one embodiment, the rails 236 are generally twice as thick as the linear motor magnet support brackets 242. One of skill will recognize that other materials and configurations could be used. For example, rather than having one-piece return paths, laminated return paths could be used, as is known in the art.

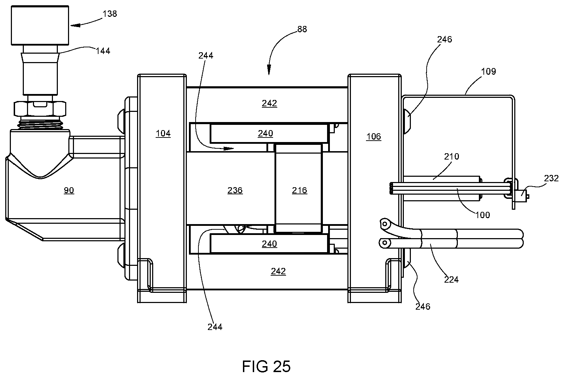

When assembled, as shown in Figure 25, the self-supporting coil 216 is positioned between the linear motor magnets 240 and the rails 236 in the linear motor air gap 244, which is the distance between the linear motor magnets 240 and the linear motor rails 236. In one embodiment, the gap 244 can be smaller with a self-supporting coil 216 because a bobbin is not needed to support the coil 216. In the embodiment depicted, the narrower air gap 244 increases the efficiency of the SSC linear motor 88 because a linear motor having a smaller air gap requires less current to create a given force than a linear motor having a larger air gap. Additionally, in the embodiment depicted, four linear motor magnets 240 are placed symmetrically around the self-supporting coil 216 and create four magnetic circuits, which drive the self-supporting coil assembly 234 when it is energized.

As shown in Figures 21 and 23a, the pump piston 188 slidingly engages with the piston cylinder 176, and the piston position sensor magnet housing 192 slidingly engages with a bearing surface in the piston position sensor magnet housing support 106 such that the self-supporting coil assembly 234 can freely move the connected pump piston 188 within the piston cylinder 176 with the self-supporting coil 216 suspended above the lower linear motor magnets 240 and suspended below the upper linear motor magnets 240 while surrounding, but not touching, the rails 236. The piston position sensor magnet housing support 106, in one embodiment, is made of a lubricious material, such as Delrin®.

The self-supporting coil strain relief bracket 230 and/or the pump-side coil retainer half 202 and sensor-side coil retainer half 204 counteract any torque applied to the self-supporting coil 216 relative to the longitudinal axis of the piston push rod 192. Thus, in operation, the self-supporting coil 216 is free to pass through the magnetic fields created by the linear motor magnets 240 without touching the linear motor magnets 240 or the rails 236. In one embodiment, the air gap 244 is 0.1078 inches and the clearance between the self-supporting coil 216 and the rails 236 and the linear motor magnets 240 is .015 inches. In another embodiment, the air gap 244 is 0.09 inches and the clearance between the self-supporting coil 216 and the rails 236 and linear motor magnets 240 is 0.01 inches. Variations depend on numerous variables such as scale, manufacturing tolerances and materials used.

As shown in Figure 22C, zip-tie 245 engages the piston sensor support bracket 109, which is attached to the piston push rod support 106 with two piston position sensor support screws 246, to secure the piston position sensor 247 adjacent the piston position sensor magnet 212. The piston position sensor 247 is in electronic communication with the processor on the controller printed circuit board assembly 38 through the piston position sensor signal conduit 100. In this embodiment, the piston position sensor 247 relies upon variations in the magnetic field created by the piston position sensor magnet 212 as the piston position sensor magnet's 212 distance from the piston position sensor 247 changes. One of skill will recognize that the piston position can be sensed in other ways as well. For example, an electro-optical or mechanical system could also detect the relative position of the pump piston 188 at any given time. In one embodiment, the piston position sensor magnet 212 has a 3:1 aspect ratio.

In other embodiments, the position of the pump piston 188 can be calculated by measuring the duration and amount of current applied to the SSC linear motor 88. The known size of the outlet orifice in the nozzle, along with the response characteristics of the SSC linear motor 88 to applied current enables a fairly precise calculation of pump piston 188 position. In some embodiments, a piston position sensor 247 would not be needed because the system would rely upon a calculated pump piston 188 position rather than an actually measured position. In other embodiments, both the calculated and sensed pump piston 188 position could be used. In some embodiments lacking a pump position sensor 247, the SSC assembly 234 would coast to stop against a bump stop (not shown) as the pump piston 188 is retracted to recharge the piston cylinder charge chamber 189. Moreover, those of skill in the art will recognize that the piston position sensor 247 could be mounted on the piston push rod 192 and the piston position sensor magnet 212 could be mounted adjacent the piston push rod 192 such that the piston position sensor magnet 212 remains stationary as the piston push rod 192 and connected piston position sensor 247 move along the longitudinal axis of the piston push rod 192.

Tubing Quick Connect

As noted previously, in the assembled water flosser 8, the tubing 20 connected to the handle 22 is inserted in the pump housing quick connect coupling assembly 92, as shown in Figure 15. Figure 19a shows the pump housing quick connect coupling assembly 92 in cross section. The pump housing outlet quick connect collet bell 248 houses a pump housing quick-connect o-ring 250 and an elastomeric pump housing quick connect bushing 252. The pump housing quick connect bushing 252 has a pump housing outlet quick connect bushing annular flange 253 that engages an annular recess in the pump housing outlet quick connect bell 248 to secure the bushing 252 to the pump housing outlet quick connect bell 248. The pump housing outlet quick connect collar 254 has an annular slot 255 that engages the pump housing quick connect bushing 252. When tubing 20 is inserted into the pump housing quick connect coupling assembly 92, the tubing 20 sealingly engages the pump housing quick connect o-ring 250 to prevent fluid leakage from the flow path. The pump housing quick connect collar 254 slidingly engages the tubing 20 upon insertion creating a slight frictional force but, if a retractive force is applied to the tubing 20, the pump housing quick connect collar shoulder 256 engages the pump housing outlet quick connect bushing ramp 258, which causes the pump housing outlet quick connect collar 254 to contract, which then constricts around the tubing 20 and locks it in place. To retract the tubing 20, a force must be applied to the pump housing quick connect collar 254 to prevent the pump housing outlet quick connect collar shoulder 256 from engaging with the pump housing outlet quick connect bushing ramp 258 to create an axial compressive force on the tubing 20. A quick connect coupling is but one way to connect the tubing 20 to the pump housing 90. Many other connection methods will be readily apparent to one of skill, such as threaded connections, adhesives or friction fits.

Handle Control

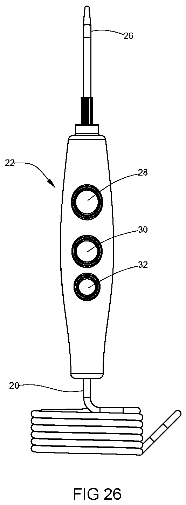

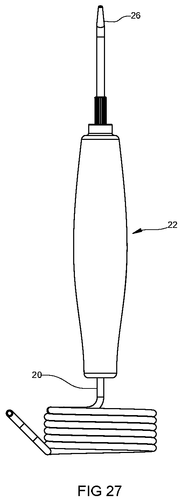

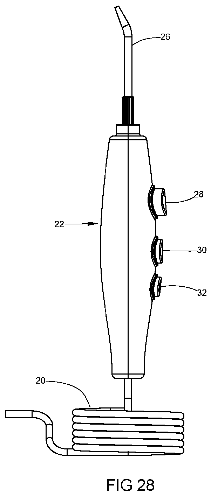

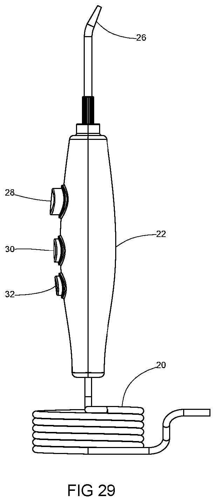

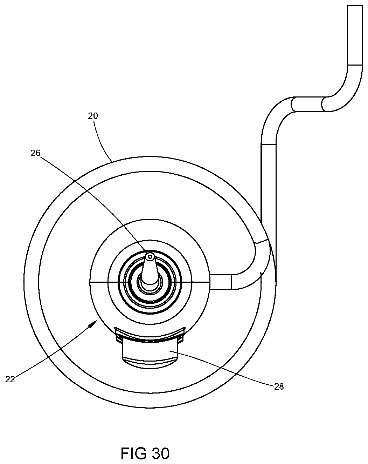

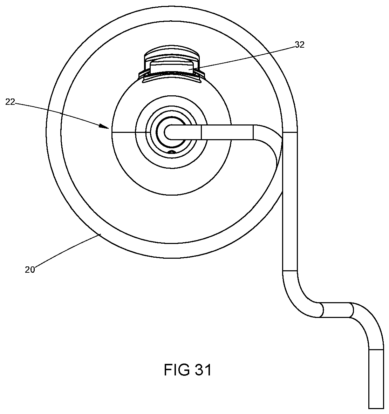

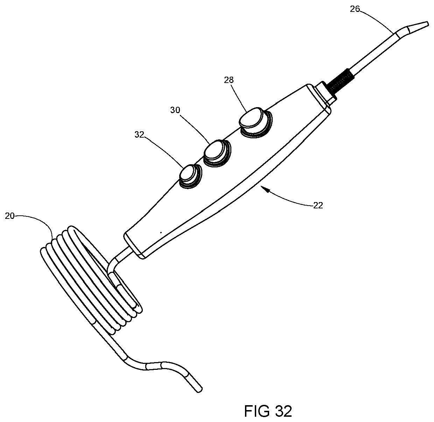

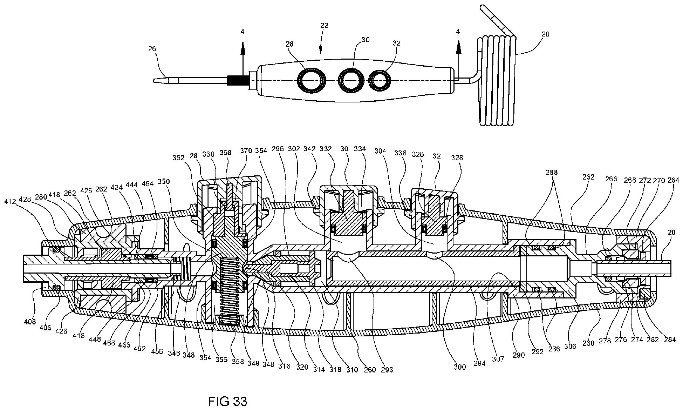

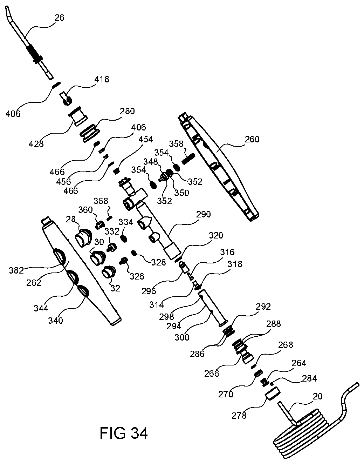

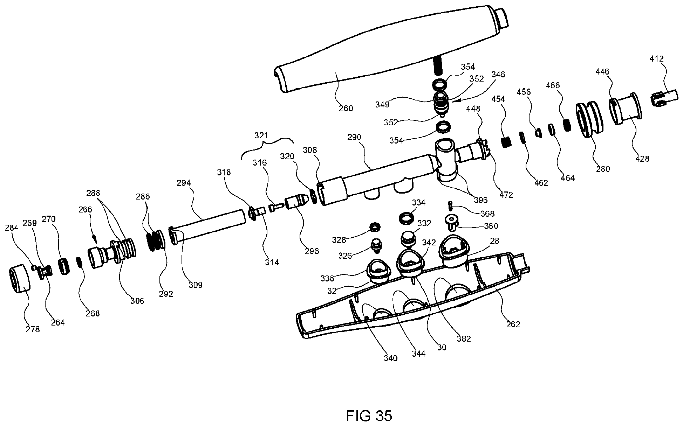

Figure 26 is a front view of one embodiment of a handle 22 and attached tubing 20, and Figures 27 is a rear view of the handle 22. Figures 28 and 29 are right and left side views of the handle 22 and the attached tubing 20, respectively. Figures 30 and 31 are top and bottom views of the handle 22 and attached tubing 20, respectively, while Figure 32 is a perspective view of the handle 22 and attached tubing 20. Figure 33 is a cross-section view of an embodiment of the handle 22. Figure 34 is an exploded view of the handle 22, and Figure 35 is another exploded view of the handle 22 from a different perspective.

The handle 22 has a back handle housing member 260 and a front handle housing member 262. As shown in Figures 33 and 34, the tubing 20 slidingly engages a handle quick connect collet 264 in a handle quick connect housing 266 at the proximal end of the handle 22. The tubing 20 slides through the handle quick connect collet 264 and sealingly engages the handle quick connect o-ring 268. The handle quick connect collet 264 has an annular slot 269 that engages an elastomeric handle collet retainer 270. The elastomeric handle collet retainer 270 has a handle collet retainer lip 272 that secures the handle collet retainer 270 to the handle quick connect housing 266 by mating with an annular recess in the interior of the handle quick connect housing 266. Slight frictional forces are created between the tubing 20 and the handle quick connect collet 264 when the tubing 20 is inserted in the handle quick connect collet 264. If a retraction force is applied to the tubing 20, the slight frictional force between the tubing 20 and the handle quick connect collet 264 causes the handle quick connect collet 264 to constrict as the housing collet shoulder 274 engages the handle collet retainer ramp 276. The contracted handle quick connect collet 264 prevents unintended removal of the tubing 20 from the handle quick connect collet 264. Those of skill will recognize that other connection methods, such as threaded connections, friction fit connections or adhesives could be used to connect the handle 22 to the tubing 20.

The handle has a lower handle elastomeric bushing 278 and an upper handle elastomeric bushing 280. These bushings, as shown in Figures 33-35, hold the handle components in the handle 22 when the front handle housing member 262 and back handle housing member 260 are joined. These bushings vibrationally isolate the front handle housing member 262 and the back handle housing member 260 from the handle components in the handle 22. These bushings 278, 280 effectively eliminate impulse loading of the handle 22. The lower handle elastomeric bushing 278 has a handle magnet pocket 282 that holds a handle magnet 284.

Two handle quick-connect housing o-rings 286 are held in handle quick-connect housing grooves 288. When the handle quick-connect housing 266 is inserted into the handle float valve housing, 290 the o-rings 286 sealingly engage the handle quick-connect housing 266 with the handle float valve housing 290 to prevent a liquid from leaving the flow path. An elastomeric handle spacer 292 is interposed between the handle quick-connect housing 266 and the handle float valve body stop tube 294. The elastomeric handle spacer 292 acts as a compressive component securing the handle float valve body stop tube 294 securely in place when assembled.

The handle float valve body stop tube 294 limits the travel of the handle float valve 296 body along the longitudinal axis of the handle 22. The handle float valve body stop tube 294 has an increase handle float valve body stop tube aperture 298 and a decrease handle float valve body stop tube aperture 300. These apertures, shown best in Figure 33, provide a fluid conduit between the handle float valve housing increase chamber 302 and the handle float valve housing decrease chamber 304 and the flow path. As shown in Figure 35, the handle quick-connect housing key 306 engages the handle float valve housing slot 308 to assure proper axial alignment of the handle quick connect housing 266 with the handle float valve housing 290. Similarly, a handle float valve chamber key 307 engages the handle float valve body stop tube slot 309 to keep the handle float valve body stop tube 294 properly aligned with the hand float valve housing 290, when assembled.

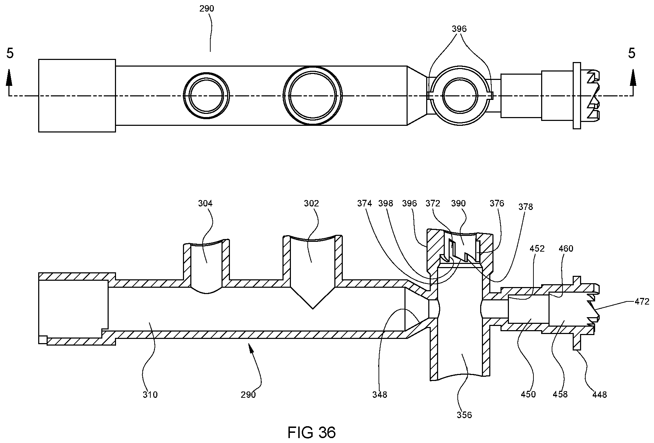

A cross-sectional view of the handle float valve housing 290 is depicted in Figure 36. The handle float valve body stop tube 294 limits the travel of the handle float valve body 296 and is inserted into the handle float valve housing chamber 310. The handle float valve body 296, in one embodiment, is made of an elastomer. The handle float valve body 296 is hollow, and a handle float valve body cap 314 seals air in the handle float valve body 296 such that the handle float valve body 296 is buoyant in water. The handle float valve body cap 314 secures a toggle pin 316 in place inside the handle float valve body 296 such that the toggle pin 316 extends through the nose of the handle float valve body 296. The toggle pin 316 sealingly engages with the longitudinal aperture extending through the nose of the elastomeric handle float valve body 296.

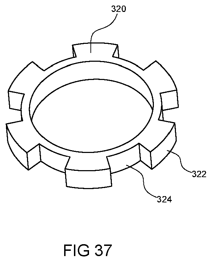

The handle float valve body cap 314 includes a handle float valve body cap centralizer 318. The handle float valve body cap centralizer 318 slidingly engages the inner wall of the handle float valve housing 290 and keeps the handle float valve body 296 centered along the longitudinal axis of the handle float valve housing 290. A handle float valve nose centralizer 320 is on the handle valve body 296 near the nose and similarly slidingly engages the inner wall of the handle float valve housing 290 to keep the handle float valve body 296 centered in the handle float valve housing 290. The assembled components form the handle float valve 321. The handle float valve body cap centralizer 318 and the handle float valve nose centralizer 320 have a plurality of handle float valve centralizer fingers 322 that slidingly engage the handle float valve housing 290 inner wall, and a liquid can freely pass through the handle float valve centralizer voids 324 between the fingers. One embodiment of a handle float valve nose centralizer 320 is shown in Figure 37.

As shown in Figure 33, the decrease button 32 is connected to a decrease piston 326. A decrease piston spring energized o-ring 328 maintains a seal between the decrease piston 326 and the handle float valve housing decrease chamber 304 inner wall as the decrease piston 326 slidingly engages the handle float valve housing decrease chamber 304 inner wall. In one embodiment, the o-ring 328 is formed from PTFE.

Similarly, the increase button 30 is connected to an increase piston 332. A spring energized increase piston o-ring 334 maintains a seal between the increase piston 332 and the handle float valve housing increase chamber 302 inner wall as the increase piston slidingly engages the handle float valve housing increase chamber 302. In one embodiment, the volume displaced by depressing the increase button 30 will be about twice that displaced by depressing the decrease button 32. In one embodiment, the o-ring 334 is formed from PTFE.

The decrease button 32 has a decrease button shoulder 338. When the handle 22 is assembled, the decrease button 32 extends through a decrease button aperture 340 in the front handle housing 262. The decrease button shoulder 338 prevents the decrease button 32 from passing through the decrease button aperture 340 in the front handle housing 262. In other words, the decrease button shoulder 338 acts as an extension limit when it engages the assembled front handle housing 262.

Similarly, the increase button 30 has an increase button shoulder 342. When the handle 22 is assembled, the increase button 30 extends through an increase button aperture 344 in the front handle housing 262. The increase button shoulder 342 creates an extension limit when it engages the assembled front handle housing 262.

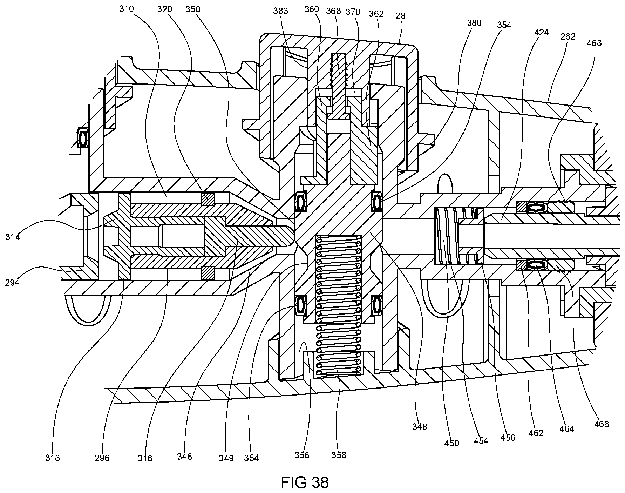

The on/off toggle body 346 is manipulated to allow fluid flow to the nozzle 26 (as shown in Figure 38) or to stop fluid flow (as shown in Figure 33). When flow is stopped, the float valve body 296 is seated against the handle float valve housing seat 348 and the on/off toggle pin 316 is positioned in the on/off toggle body groove 349. When the on/off toggle body 346 is manipulated to allow fluid flow, the on/off toggle pin 316 is pressed against the on/off toggle body shoulder 350, which pushes the handle float valve body 296 away from the handle float valve housing seat 348 creating a flow path to the nozzle 26. The on/off toggle body 346 has a pair of on/off toggle body o-ring slots 352 that hold spring loaded on/off toggle body o-rings 354. The on/off toggle body o-rings 354 slidingly engage the handle float valve housing on/off toggle chamber 356. The on/off toggle body o-rings 354 seal the handle float valve housing on/off toggle body chamber 356 so that liquid in the toggle body chamber 356 cannot leave the flow path. In one embodiment, the o-rings 354 are formed from PTFE.

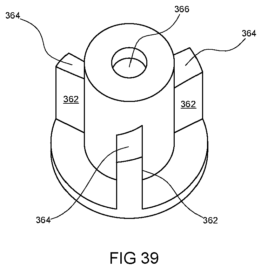

The on/off toggle body 346 is manipulated by pressing the on/off toggle button 28, which displaces the on/off toggle body 346 and compresses the on/off toggle body spring 358. The on/off toggle body cam 360 has a plurality of on/off toggle cam stops 362, as best shown in Figure 39. In one embodiment, there are three on/off toggle cam stops 362 positioned approximately 120 degrees apart. Each stop has a helical taper at the on/off toggle cam stop distal ends 364. An on/off toggle cam pin aperture 366 is aligned with the longitudinal axis of the on/off toggle body cam 360 and is sized to rotationally and slidingly engage an on/off toggle cam pin 368. The on/off toggle cam retaining pin 368 threadingly connects the on/off toggle body cam 360 to the on/off button 28 but does not inhibit rotation of the on/off toggle cam body 360 within the on/off button receiving aperture 370. Moreover, the on/off toggle cam retaining pin 368 and connected on/off button 28 are free to move along the longitudinal axis of the on/off toggle cam 360 a limited distance relative to the on/off toggle cam 360.

As best shown in Figure 36, the interior surface of the handle float valve housing 290 has on/off toggle cam long slots 372. The on/off toggle cam long slots 372 match the profile and radial position of the on/off toggle cam stops 362 and are sized such that the on/off toggle cam stops 362 may freely slide in and out of the on/off toggle cam long slots 372. The upper surface of the on/off toggle cam long slots 372 are tapered to match the helical taper of the on/off toggle cam stop distal ends 364. On/off toggle cam feed ramps 374 also match the taper of the on/off toggle cam stop distal ends 364. The interior of the handle float valve housing 290 also has on/off toggle cam catches 376 that are tapered to match the taper of the on/off toggle cam stop distal ends 364 and have on/off toggle cam catch stop walls 378.

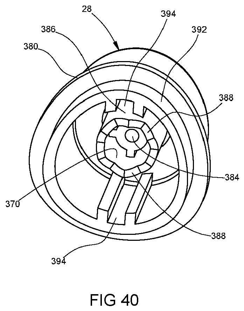

Figure 40 shows an embodiment of the on/off button 28. In this embodiment, the on/off button 28 has an on/off button shoulder 380 that mirrors the arcuate profile of the front handle housing 262 at the on/off button front housing aperture 382. The on/off button 28 has a button on/off cam retaining pin aperture 384 sized to threadingly receive the on/off cam pin 368. Surrounding the button on/off toggle cam retaining pin aperture 384 is a cam engaging wall 386. At the on/off toggle cam end of the cam engaging wall 386 are a plurality of on/off button cam biasing faces 388 that are tapered to match the on/off toggle cam stop distal ends 364. The cam engaging wall 386 slidingly engages the interior of the handle float valve housing on/off toggle cam chamber 390. The on/off button 28 has two on/off button counter-rotation slots 394 that slidingly engage handle float valve housing on/off button counter-rotation flanges 396.

When the on/off button 28 is depressed, the on/off toggle spring 358 is depressed and the on/off toggle body 346 moves down the handle float valve housing on/off toggle body chamber 356. When the force is applied to the on/off button 28, the on/off button cam bias faces 388 engage the on/off toggle cam stop distal end 364 and this creates a rotational bias urging the on/off toggle cam 360 to rotate. This rotational bias is counteracted by the sliding engagement of the handle float valve housing on/off button counter-rotation flanges 396 with the on/off button counter rotation slots 394. In the embodiment depicted, looking at the on/off toggle cam 360 from the on/off button 28, the bias is to rotate the on/off toggle cam 360 counterclockwise. Assuming the flow path is open, initially, the on/off toggle cam 360 cannot rotate because the on/off toggle cam stop 362 is slidingly engaging the on/off toggle cam long slot 372. Once the on/off button 28 is depressed sufficiently to push the on/off toggle cam stop 362 out of the on/off toggle cam long slot 372, the counter-clockwise bias created by the on/off cam biasing faces 388 rotates the on/off toggle cam 360 slightly.

Because the on/off toggle cam 360 was slightly rotated, when the on/off button 28 is released, the on/off toggle body spring 358 biases the tapered on/off toggle cam stop distal end 364 against the tapered on/off cam catch's 376 tapered receiving surface. The on/off toggle body spring 358 creates an upward force that causes the on/off toggle cam 360 to continue its counter-clockwise rotation until the on/off toggle cam stop 362 abuts against the on/off toggle cam catch stop wall 378. In this position, the on/off toggle body 346 is held in the handle float valve housing on/off toggle body chamber 356 downward from its original position. The movement of the toggle body 346 downward engages the toggle pin 316 with the on/off toggle body groove's 349 tapered wall and forces the handle float valve body 296 away from the handle float valve housing seat 348. When the on/off button 28 is released, the toggle pin 316 rests against the toggle body shoulder 350 and fluid is free to pass by the handle float valve body 296 to the tip 26, as shown in Figure 38.

When the on/off button 28 is next depressed, the force applied to the on/off button 28 creates rotational bias on the on/off toggle cam 360 as the on/off button cam biasing faces 388 are pressed against the tapered on/off toggle cam stop distal ends 364. Because the on/off toggle cam stops 362 engage on/off toggle cam catch stop walls 378, the on/off toggle cam cannot rotate until the on/off toggle cam stop 362 has been pushed past the on/off cam catch stop wall 362. However, once past the wall, the bias created by the on/off button cam biasing faces 388 on the tapered on/off toggle cam stop distal ends 364 causes the on/off toggle cam 360 to rotate slightly counterclockwise. When the on/off button 28 is released, the on/off toggle body spring 358 forces the sliding engagement of the tapered on/off toggle cam stop distal ends 364 with a similarly tapered on/off toggle cam feed ramp 374 mating surface. The counterclockwise rotation of the on/off toggle cam 360 stops when the on/off cam stops 362 engage the on/off cam long slot wall 398, and the on/off cam stops 362 slide into the on/off cam long slot 372. In this position, as depicted in Figure 33, the handle float valve body 296 seats against the handle float valve housing seat 348, precluding fluid flow past the seat 348.

When the handle float valve body 296 is seated and liquid fills the handle float valve housing 290, the increase piston 332 and the decrease piston 326 are in fluid communication with the pump piston 188. If the decrease button 32 is depressed, the decrease piston 326 slides down the decrease piston chamber 304 and displaces a first volume of liquid, which displaces the pump piston 188 a first predetermined distance when the handle float valve body 296 is seated. When the increase button 30 is depressed, the increase piston 332 slides down the increase piston chamber 302 and a second volume of water is displaced, which displaces the pump piston 188 a second predetermined distance when the handle float valve body 296 is seated. If both the decrease button 32 and increase button 30 are depressed simultaneously, a third volume of water is displaced and the pump piston 188 is moved a third predetermined distance.

Nozzle attachment

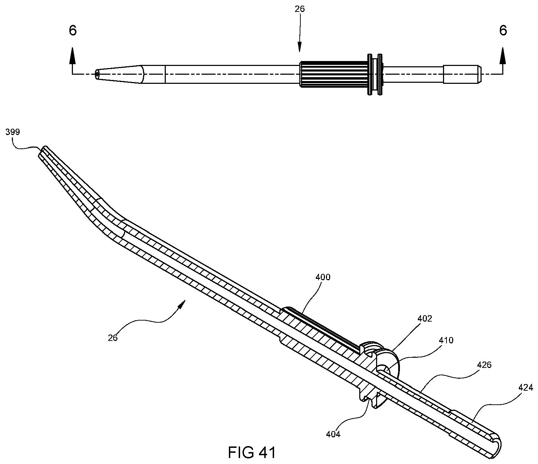

As shown in Figure 41, the nozzle 26 has a nozzle tip 399. In one embodiment, the nozzle tip 399 has a 0.035 inch diameter aperture. Optionally, the nozzle 26 has knurling 400 above a nozzle o-ring receiver 402. The knurling 400 facilitates manual manipulation of the nozzle 26. The nozzle o-ring receiver 402 has a nozzle o-ring groove 404 adapted to receive the nozzle o-ring 406 of the handle 22. The nozzle o-ring 406 sealingly engages the handle nozzle aperture 408 when the nozzle is inserted into the handle 22. The nozzle 26 has nozzle dogs 410 on the proximal side of the nozzle o-ring receiver 402.

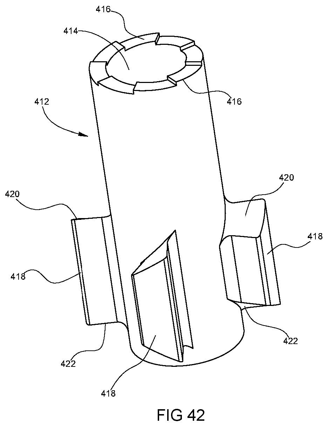

The nozzle cam 412, as shown in Figure 42, is tubular having a nozzle cam aperture 414. The nozzle cam 412 has nozzle cam dogs 416 at its distal end that engage the nozzle dogs 410 of the nozzle 26 to prevent counter-clockwise (when looking towards the tip) rotation of the nozzle cam 412 relative to the nozzle 26 along the nozzle cam 412 longitudinal axis. The nozzle cam 412, in one embodiment, has four nozzle cam wings 418. Each nozzle cam wing 418 has a nozzle cam receiver engaging surface 420 and a handle float valve housing tooth engaging surface 422. These surfaces are generally helical. The nozzle cam 412 is pressed onto the nozzle 26 and, once past the nozzle cam retaining shoulder 424, the nozzle cam 412 is free to rotate on the nozzle cam bearing surface 426 (see Figure 41). The nozzle cam retaining shoulder 424 has a slightly larger diameter than the nozzle cam aperture 414 and, once the nozzle cam 412 is pressed past the nozzle cam retaining shoulder 424, the nozzle cam aperture 414 shrinks back to its original diameter and will not freely move axially past the nozzle cam retaining shoulder 424. However, the nozzle cam 412 is free to rotate and move axially along the nozzle cam bearing surface 426, which has a slightly smaller outer diameter than the nozzle cam aperture 414 and is slightly longer than the nozzle cam 412.

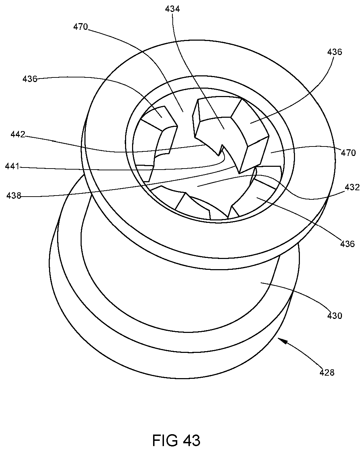

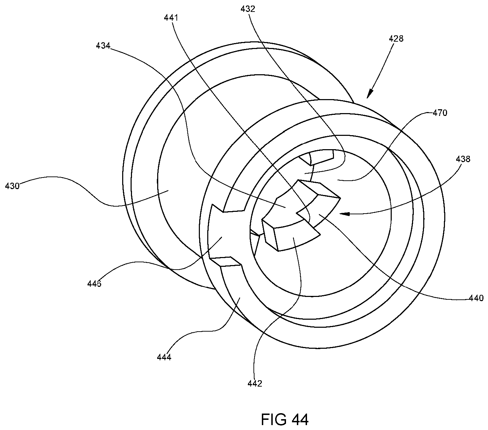

As shown in Figures 33, 43 and 44, the nozzle cam receiver 428 has a nozzle cam receiver slot 430 that engages the upper handle elastomeric bushing 280. The upper handle elastomeric bushing 280 secures the nozzle cam receiver 428 to the handle 22. Figure 43 is an image representing the nozzle cam receiver 428 as seen from the distal end and Figure 44 is an image from the proximal end. The nozzle cam receiver 428 has a nozzle passage 432 adapted to receive the nozzle cam 412. In one embodiment, the nozzle passage 432 is interrupted by four nozzle cam receiver cam guides 434. Each nozzle cam receiver cam guide 434 has a nozzle cam receiver slide 436 on the distal side and a nozzle cam catch 438 on the proximal side. The nozzle cam catch 438 has a nozzle cam receiver catch slide 440 that terminates in a nozzle cam receiver catch wall 441. The nozzle cam receiver cam guide also has a nozzle cam receiver release slide 442.

The nozzle cam receiver proximal lip 444 has a nozzle cam receiver anti-rotation slot 446. When assembled, the nozzle cam receiver proximal lip 444 fits over the distal end of the handle float valve housing 290 and the nozzle cam receiver rotation slot 446 engages the nozzle cam receiver rotation stop 448 on the handle float valve housing 290.

Returning to Figures 34 and 36, in this embodiment, the handle float valve housing 290 has a handle float valve housing proximal nozzle receiving chamber 450. A nozzle spring seat 452 is at the proximal end of the handle float valve housing 290 proximal nozzle receiving chamber 450. As shown in Figure 38, a nozzle spring 454 is seated in the nozzle spring seat 452, and a nozzle spring button 456 is seated on the distal end of the nozzle spring 454. The nozzle spring button 456 has a longitudinal passage permitting fluid flow therethrough. When the nozzle 26 is inserted in the handle 22, the nozzle spring button 456 passage aligns with the fluid passage through the nozzle 22.

The handle float valve housing distal nozzle receiving chamber 458 has a distal nozzle receiving chamber shoulder 460. A protective elastomeric nozzle crash stop 462 is positioned adjacent the distal nozzle receiving chamber shoulder 460. Adjacent the nozzle crash stop 462 is a PTFE distal nozzle receiving chamber o-ring 464. The distal nozzle receiving chamber o-ring 464 is secured in place by a distal nozzle receiving chamber o-ring retainer 466. The distal nozzle receiving chamber o-ring retainer 466 has barbs 468 securing it to the handle float valve housing distal nozzle receiving chamber 458.

In operation, the assembled nozzle 26 and nozzle cam 412 are inserted into the distal end of the handle 22. The nozzle cam wings 418 slidingly engage the nozzle cam receiver slides 436 until they align with the nozzle cam receiver wing passages 470. As the nozzle cam wings 418 pass through the nozzle cam wing passages 470, the nozzle spring 454 is compressed. The nozzle o-ring slidingly engages the handle nozzle aperture 408 and helps properly aligns the nozzle 26 with the handle 22. The nozzle 26 also slidingly engages with the distal nozzle receiving chamber o-ring 464, which prevents fluid from leaving the flow path. As the nozzle 26 is pressed into the handle 22 and the nozzle spring 454 is compressed, the handle float valve housing tooth engaging surface 422 of the nozzle cam wings 418 engage the handle float valve housing teeth 472 on the distal end of the handle float valve housing 290, which causes the nozzle cam wing 418 to rotate under the nozzle cam receiver cam catch 438. When the nozzle 26 is released, the nozzle spring 454 forces the nozzle 26 upward and the nozzle cam wings 418 engage the nozzle cam receiver cam catch slide 440 and rotate until stopped by the nozzle cam catch wall 441. This secures the nozzle 26 to the handle 22.

To remove the nozzle 26, the nozzle spring 454 is compressed and the handle float valve housing tooth engaging surface 422 is slidingly engaged with the handle float valve housing teeth 472. As the nozzle spring 454 is compressed, the nozzle cam 412 rotates and, when the nozzle 26 is released, the nozzle spring 454 forces the nozzle cam wing 418 against the nozzle cam receiver cam release slide 442. The nozzle cam receiver cam release slide 442 guides the nozzle cam wings 418 to the nozzle cam receiver cam wing passages 432, which allows the nozzle 26 to be released through the nozzle cam receiver can wing passages 432.

Operation

In normal operation, a liquid is poured into the reservoir 10. When the reservoir 10 is attached to the oral irrigator main housing 12, the reservoir outlet check valve 118 opens (see Figures 16 and 18) and the contained liquid flows into the pump piston cylinder charge chamber 189 (see Figures 20A and 22A). When the inlet float valve chamber 160 is filled, the inlet float valve 148 rises and the inlet float valve sensor 162 signals the processor (processor and controller are used interchangeably herein) on the controller printed circuit board assembly 38 that the inlet float valve chamber 160 is filled. The processor verifies that the cradle sensor 66 indicates that the handle 22 is in the cradle 24. The processor then activates the SSC linear motor 88 to slowly cycle by applying a relatively low current to the self-supporting coil 216 during the forward stroke of the pump piston 188 and an even lower current on the return stroke. The processor periodically processes the signal received from the piston position sensor 247 and reverses the current supplied to the self-supporting coil 216 when the pump piston 188 has reached the end of its stroke. The handle float valve 321 is heavier than air and remains in an open position until liquid fills the handle float valve chamber 310. If the handle on/off button 28 is in the off position, the liquid pumped from the reservoir 10 will cause the handle float valve 231 to rise and seal the flow path as it seats against the handle float valve housing seat 348. Because the pumped liquid is incompressible, the pump piston 188 will stop once air is purged from the tubing 20 and handle 22 and the handle float valve 321 has seated. The processor receives input from the piston position sensor 247 indicating that the pump piston 188 has stopped its forward movement. The processor then applies sufficient current to the self-supporting coil 216 to securely hold the handle float valve 321 against the handle float valve housing seat 348. If the pump piston 188 is not stopped after sufficient cycling to purge the air from the tubing 20 and handle float valve chamber 310, the processor stops the pump piston 188. Additionally, the processor, by monitoring pump piston 188 position and current applied to the self-supporting coil 216, can detect when the air is being pumped through the nozzle 26 and when a liquid is being ejected because the force required is different. The processor can advantageously stop when the pump piston 188 has cycled more than anticipated to fill the handle float valve chamber 310 or when liquid is being pumped before the user has signaled that he or she is ready to begin use. Such action prevents unwanted spraying of liquid from the nozzle 26 before the user is ready to begin use.

When the handle float valve 321 is seated, the pump piston 188 will maintain a steady, but minimal pressure on the compressed fluid. Both the increase button 30 and decrease button 32 may be depressed at the same time. In one embodiment, depression of the increase button 30 displaces twice the volume displaced by the decrease button 32 when depressed. Depressing both buttons simultaneously displaces a predetermined volume of liquid causing the pump piston 188 to retract a predetermined distance. In one embodiment, to assure the pump piston 188 can retract as desired, the pump piston's 188 pumping stroke is limited to a portion of the pump piston cylinder 176 so that, regardless of the pump piston's 188 position, the pump piston 188 can retract when a hydraulic signal is sent from the handle 22. In another embodiment, a pressure relief valve could accommodate piston advancement when the handle float valve 321 seats. Upon sensing that the handle float valve 321 is seated, the processor could apply sufficient force to the pump piston 188 to open a pressure relief valve (not shown) that would enable the pump piston 188 to advance to near the top of its pump cycle. The processor would then hold the pump piston 188 in this position at a lower pressure anticipating the receipt of a hydraulic signal from the handle 22. The lower pressure would allow the hydraulic signal from the handle 22 to move the pump piston 188 without opening the pressure relief valve.

The processor's periodic sampling of the pump piston position sensor 247 will detect the change in position of the pump piston 188. A change in pump piston position corresponding to the volume of liquid displaced by a simultaneous depression of the increase button 30 and decrease button 32 will cause the processor to change functions. If the increase button 30 is depressed alone, the pump piston 188 will move a predetermined distance corresponding to the displacement of the increase button piston 332 as the increase button moves through its stroke. The processor, through the pump piston position sensor 247, senses the change in pump piston 188 position and increases the selected function's associated value. For example, if pressure is the selected function, in one embodiment, pressing the increase button 30 will cause the processor to increase the current applied to the self-supporting coil 216 such that the pressure increases five psi. Conversely, if the decrease button 32 is pressed, the processor interprets the associated change in position of the pump piston 188 to decrease the current applied to the self-supporting coil 216 such that the pressure decreases five psi in this embodiment.

Because the pump piston 188 applies a minimal pressure to the tubing 20 and handle 22, the increase button 30 and decrease button 32 return to their extended positions when the force causing them to be depressed is removed. The processor monitoring pump piston 188 position interprets the piston movement associated with the buttons returning to their extended position as an indicator that further instructions may be sent by the user.

When the user is satisfied that the proper parameters have been selected, the on/off toggle button 28 may be used to open the flow path to the nozzle 26. The processor then applies current to the self-supporting coil 216 to cause the pump piston 188 to advance as desired. For example, the amount of current applied to the self-supporting coil 216 corresponds to the pressure created. Turning the current on and off determines the pulse duration. The frequency of the pulse is determined by how many pulses are created in a given period. Flow is determined by the pressure applied, the duration of each pulse and the frequency of the pulses. The kinetic energy of each pulse is determined by the pressure applied and the duration of the pulse.

In one embodiment, it may be desirable to reach the desired working pressure as quickly as possible. In some embodiments, the power supply printed circuit board assembly 56 can generate 24 volts. Around 8-12 volts are needed for normal operating outlet pressures. By applying 24 volts to the self-supporting coil 216 for a few milliseconds at the start of a pulse cycle and then applying the voltage corresponding to the desired pressure, the pump piston 188 can be quickly accelerated to the velocity corresponding to the desired outlet pressure. In one embodiment, the current is decreased from 24 volts exponentially until at approximately 5(L/R), the pulse width modulated current reaches the desired steady state. Dynamic breaking (shorting the terminals to the self-supporting coil 216) causes a quick pressure drop and, in one embodiment, is used to stop the self-supporting coil 216 on the recharge stroke so that the pump piston stroke stays within a predetermined range.

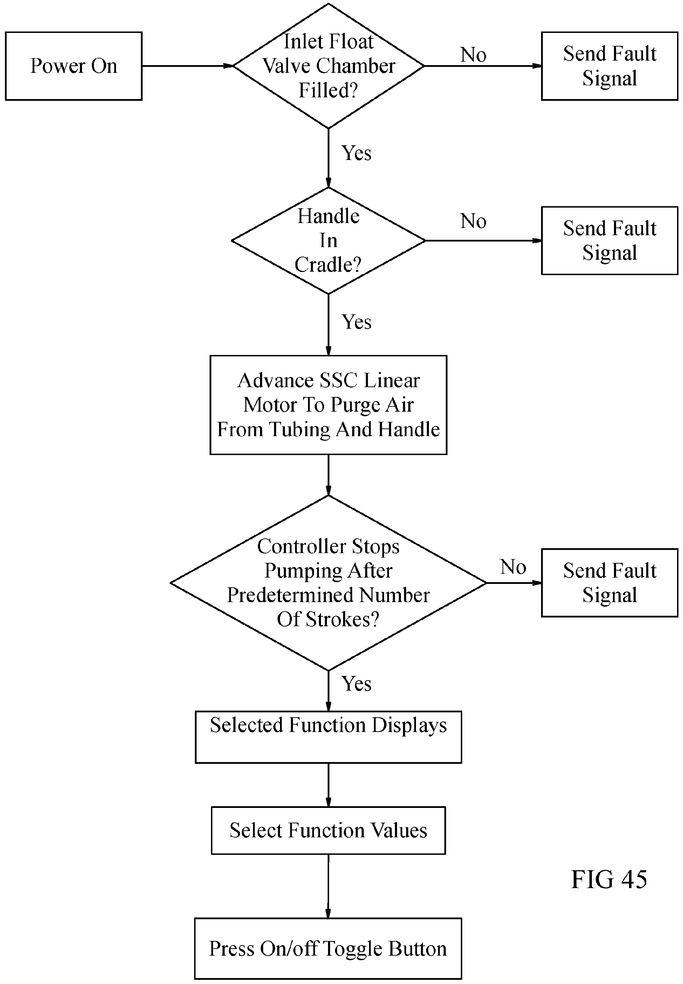

Figure 45 is a flow chart illustrating a use of one embodiment. Variations will be readily apparent to those of skill in the art. When the power switch 14 is turned on, the processor checks the output of the inlet float valve sensor 162. If the inlet float valve sensor 162 indicates that the float valve 148 has not seated, a fault signal is sent. In one embodiment, the processor uses the indicator light port 16 to communicate operating conditions to the user. For example, a fault condition could be indicated with a red light. The light could blink periodically to indicate different fault conditions. Lack of liquid in the inlet float valve chamber 160 could be shown by having a red display blink on for half a second and then off for half a second, for example. In other embodiments, the fault signal could be audible. The processor could either cause the speaker 46 to beep in a predetermined pattern or could use speech to inform the user that the inlet float valve chamber 160 is not filled with liquid.

Once the processor has determined the inlet float valve chamber 160 is filled with liquid, it checks the cradle sensor 76 output to determine if the handle 22 is in the cradle 24. If the handle 22 is out of the cradle 24, a fault signal is sent. In one embodiment, if the handle 22 is not in the cradle 24, the indicator light port 16 could be yellow for half a second and off for a full second. In other embodiments, the fault signal is audible. In one such embodiment, the processor causes the speaker 46 to beep in a predetermined pattern. In another such embodiment, the processor uses speech to inform the user that the handle 22 needs to be returned to the cradle 24.

Once the processor has verified that the inlet float valve chamber 160 is charged and the handle 22 is in the cradle 24, the SSC linear motor 88 is slowly advanced to purge the air from the tubing 20 and handle 22. Air freely passes by the handle float valve 321 until a liquid in the handle 22 raises the handle float valve 321 and causes it to seat. Once seated, the incompressible liquid between the handle float valve 321 and the pump piston 188 causes the pump piston 188 to stop. The processor is programmed to stop pumping if the pump piston 188 is not stopped after a predetermined number of pump piston strokes. If the pump piston 188 is not stopped after a predetermined number of strokes, another fault signal is generated and the pump piston 188 stops. The fault signal can be a variation of the visual and/or audible signals described above.

If the pump piston 188 stops as anticipated, the indicator light port 16 may display the function currently selected. For example, if the pressure function has been selected, the light emitted could be green. If the increase button 30 displaces the increase piston 332 to signal an increase in pressure, the pressure value is increased in the processor and the intensity of the light from the indicator light port 16 increases. Conversely, as the pressure is decreased by pressing the decrease button 32, the intensity of the emitted light decreases. The function and intensity of the function could also be audibly transmitted to the user through speech generation. In another embodiment, the function and function values could be displayed on a screen associated with the water flosser 8.

If the increase button 30 and decrease button 32 are pressed simultaneously, the pump piston 188 will be displaced a predetermined distance and the processor will sense the movement through the piston position sensor 247. The processor will change the function selected upon receipt of the hydraulic "change function" signal. Assuming frequency is the next function parameter in the processor queue, the change function signal will cause the processor to accept new values for the frequency function. The frequency function could be designated by a yellow light emitted by the indicator light port 16. Pressing the increase button 30 or decrease button 32 on the handle 22 would correspondingly increase or decrease the frequency of the pulses created by the water flosser 8. The increase or decrease in frequency could be conveyed to the user by increasing or decreasing the intensity of the light at the indicator light port 16. In another embodiment, the function and intensity of the function could also be audibly transmitted to the user through speech generation. In another embodiment, the function and function values could be displayed on a screen associated with the water flosser 8.

Once the user is satisfied with the function and function values selected, the user can depress the on/off toggle button 28 to open the flow path. The processor will sense that the handle float valve 321 has been unseated by the on/off toggle body 346 and will begin pumping in the pattern dictated by the function and function values selected. If the user presses the on/off toggle button 28 while in use, the handle float valve 321 will seat and the pump piston 188 will stop. The system will then wait for instructions to change function values. If the handle 22 is placed in the cradle 24 after the on/off toggle button 28 has been pressed, the water flosser 8 will turn off.

The operation described above is exemplary only. The pump position sensor 247 and SSC linear motor 88 of the present invention enable numerous modifications. Coupled with the responsiveness of the SSC liner motor 88, the pump position sensor 247 enables control of pulse frequency, pulse duration and pressure. Manipulating these control parameters, a user can select high pressure, short pulse durations and a slow pulse frequency to create a mode that reduces fluid flow while still creating the desired massage or cleaning effect. Alternatively, a user might desire a higher frequency at a modest pressure and having short duration pulses for gum massage. Some users may want to optimize the kinetic energy delivered by each pulse by increasing the duration of the pulse. **In** some embodiments, the functional features of the water flosser 8 will be described in terms easily understood by the user. For example, the high kinetic energy per pulse option might be identified as "tough cleaning" whereas the high frequency, modest pressure with narrow pulses might be identified as the "gum massage" mode. Those of skill in the art will recognize the significant variability created by the above described SSC linear motor 88 and pump position sensor 247 and will understand how the control combinations created by the system will advantageously enhance water flossing.

Knob control

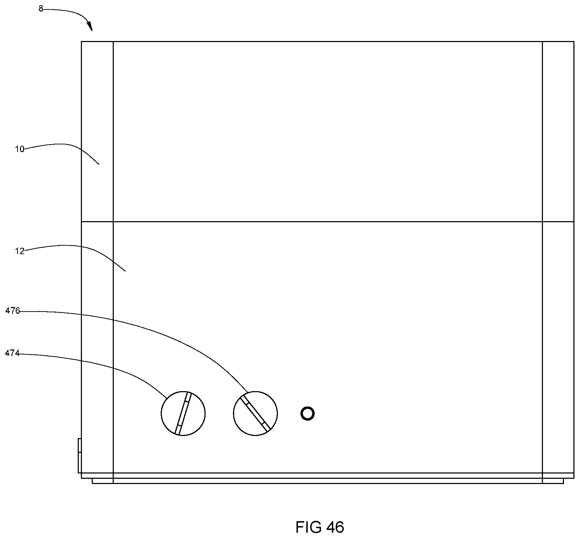

In another embodiment, knob control is substituted for the hydraulic control described above. As shown in Figure 46, a function knob 474 and a function value knob 476 are on the face of the water flosser 8. Turning the function knob 474 selects the function, and the function value knob 476 determines the value associated with the selected function. When the function knob 474 is turned to select a new function, the value associated with the prior function is stored in memory so that, in one embodiment, the user may select independent values for pressure, pulse frequency and pulse duration. In other embodiments, the user is given the opportunity to select different pre-selected modes with the function knob 474 while manipulating a related parameter, such as pressure, with the function value knob 476. Visual or audible indicators may be used in various embodiments, as desired.

In yet another embodiment, desired results may be selected with one knob, such as gum massage or low liquid volume cleaning, may be selected with one knob and pressure may be adjusted with the other. The processor adjusts available functional parameters to provide the desired result. These examples are exemplary only and one of skill would recognize advantages of other knob control schemes.

On/off handle

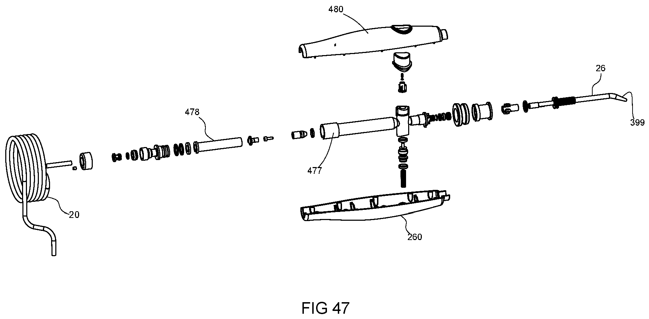

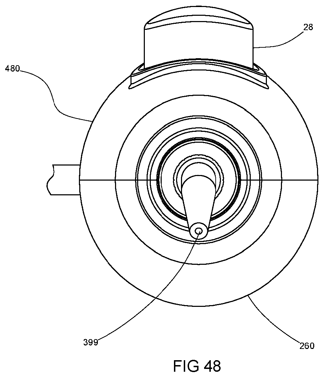

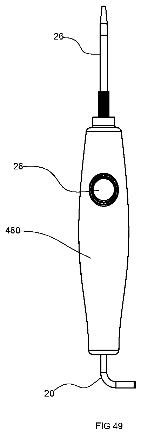

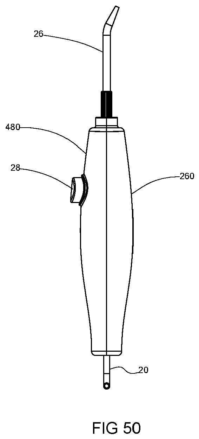

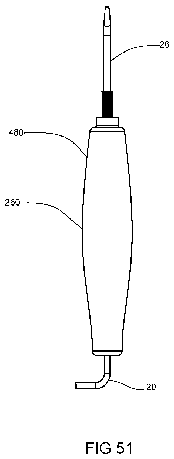

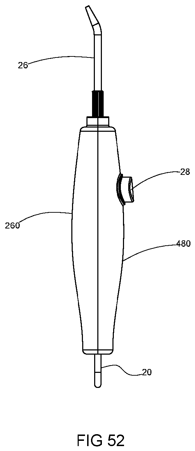

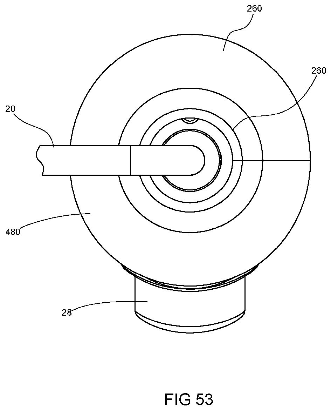

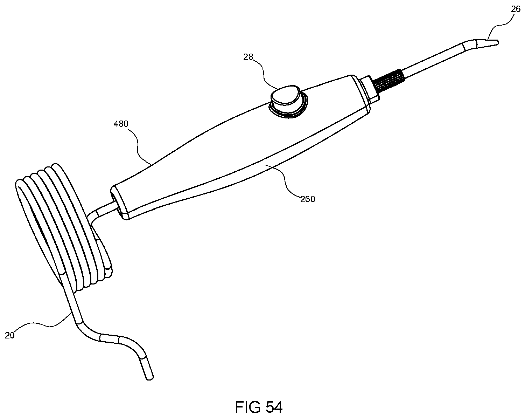

Embodiments without hydraulic control may use conventional handles or may use the handle depicted in Figures 47-54. This handle embodiment generally has the same components as the hydraulic control handle described above but has a non-hydraulic control handle float valve housing 477 that does not accommodate increase or decrease buttons. Also, the non-hydraulic handle float valve body stop tube 478 does not have apertures through its sidewall to accommodate fluid communication with control buttons on the handle. Similarly, the non-hydraulic control front handle housing 480 has only one aperture for the on/off button 28.

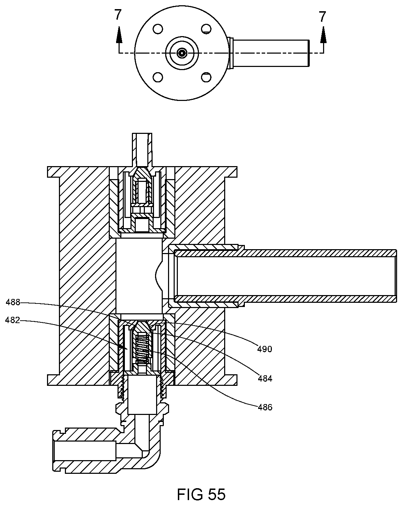

Embodiments without hydraulic handle control may benefit from a pump discharge valve 482, as shown in Figure 55. Without a pump discharge valve 482, liquid from the reservoir 10 may drain through the nozzle 26 if the nozzle 26 is positioned below the reservoir 10, which can create an unintended mess. In the embodiment depicted in Figure 55, the pump discharge valve body 484 is actuated by a pump discharge valve spring 486 having sufficient force to overcome the head of a full reservoir 10. The elastomeric pump discharge valve body 484 is held against the pump discharge valve seat 488 unless the pump piston 188 forces the valve open with a pulse of liquid sent to the nozzle 26. The pump discharge valve 482 has a longitudinal axis. In one embodiment, the pump discharge valve body shoulder 490 has a first angle relative to the pump discharge valve 482 longitudinal axis and the pump discharge valve seat 488 is at a second angle relative to the pump discharge valve 482 longitudinal axis.

Transceiver

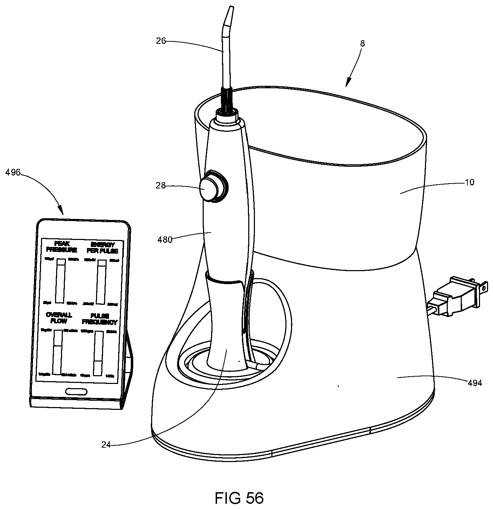

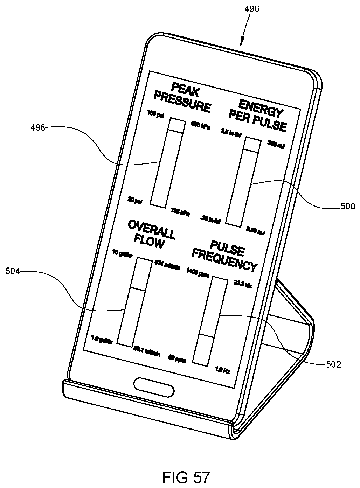

In another embodiment, the controller printed circuit board assembly 38 includes a transceiver 492 (see Figure 7). In one embodiment, the water flosser 8 has a transceiver-enabled water flosser housing 494 that is devoid of controls. In one embodiment, the user can select from parameters displayed on a mobile device 496 to modify the characteristics of their water flossing experience. For example, Figures 56 and 57 illustrate a mobile device 496 having a peak pressure icon 498, an energy per pulse icon 500, a pulse frequency icon 502 and an overall flow icon 504. Flow is a function of the pressure created in each pulse, the duration of each pulse and the frequency of the pulses created. A user may adjust each of these variables to affect overall performance. For example, in the example depicted in figure 57, if the pulse frequency is increased, the overall flow icon 504 will show increased flow. If the peak pressure is reduced, the overall flow icon 504 will show decreased flow. Manipulation of the energy per pulse icon 500 will change pulse duration and/or pulse pressure. If the energy per pulse stays the same and peak pressure is increased, then, pulse duration will decrease so that the kinetic energy delivered with each pulse remains the same. Adjusting pulse frequency will affect overall flow but will not affect peak pressure or the kinetic energy delivered per pulse. The icons may be manipulated by a finger interacting with a touch screen or by other known means.

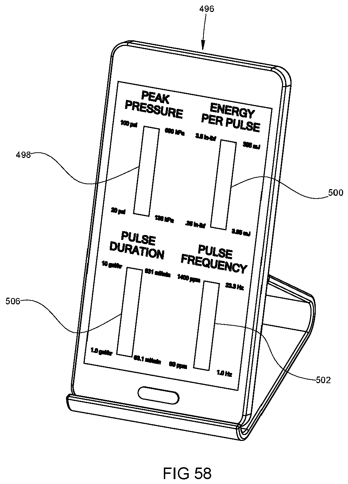

Figure 58 depicts an embodiment that includes a pulse duration icon 506. In this embodiment, a user may manipulate the peak pressure icon 498 and the pulse duration icon 506 to adjust the kinetic energy per pulse produced by the water flosser.

A user may desire to minimize flow to reduce the amount of liquid expelled from the mouth during use. Because flow is a function of pressure, pulse duration and pulse frequency, using the overall flow icon 504 to decrease flow could proportionally decrease each of pressure, pulse duration and pulse frequency. However, such may not be desirable because reducing pulse pressure may make the water flosser less effective for cleaning while reducing pulse frequency may render the water flosser less effective for gum massage. It is anticipated that those of skill in the art will recognize the desirability of staging the adjustments of these variable parameters.

In an embodiment, user input may indicate whether the user is interested in gum massage or teeth cleaning. If gum massage is selected, manipulating the overall flow icon 504 would prioritize maintaining pulse frequency and pressure in the desired range and would first reduce pulse duration to reduce flow. Once pulse duration is reduced to a lower limit, pulse frequency could be decreased to reduce flow. Once pulse frequency has been reduced to a lower limit, pulse pressure could be decreased to reduce flow. If teeth cleaning is the desired use for the water flosser, pressure and pulse duration might be prioritized and pulse frequency would be decreased first if the flow icon 504 is manipulated to reduce flow.

Similarly, if the energy per pulse icon 500 is manipulated, pressure and pulse duration are affected. For gum massage, it might be desirable to prioritize pulse duration whereas, for teeth cleaning, pressure prioritization might be desirable.

Because existing water flossers cannot independently adjust pressure, pulse frequency and pulse duration, it is currently unknown what adjustments to these parameters will be most desired. The examples provided herein are exemplary and are not intended to limit the potential uses of embodiments described. It is contemplated that, as the capability of the embodiments described are explored, researchers and users will ascertain what parameter combinations are most desirable for given uses.

The SSC linear motor 88 is advantageously powerful and responsive. Typically, coils are supported by a bobbin. The bobbin has a thickness that causes the air gap to increase. The increased air gap decreases the efficient transfer of energy to the motor. Not only is the SSC linear motor 88 more powerful, unnecessary mass is minimized, which improves the motor's responsiveness to changes in current applied to the self supporting coil 216. This improved power and responsiveness enables the SSC linear motor 88 to drive the pump piston 188 to quickly reach the desired pressure and to maintain the desired pressure throughout the pulse duration, unlike the inefficient slow build to desired pressure and short duration at desired pressure created by the kinematics of a rotary motor/piston pump system. The SSC linear motor 88 significantly improves the responsiveness and control over other oral irrigator drive systems. The responsiveness and power of the SSC linear motor 88, coupled with piston position sensing, enables customization of each pulse created by the oral irrigator. For example, the processor could, in certain embodiments, recreate the inefficient pulse waveform mandated by the rotary motor/piston pump kinematics. Alternatively, the SSC linear motor 88 could rapidly accelerate the piston to a velocity corresponding to a desired pressure and rapidly decelerate to create a pulse having a relatively square waveform.

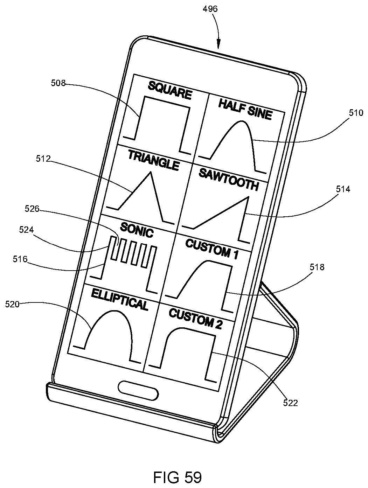

Figure 59 illustrates exemplary pulse waveforms capable of being created by the SSC linear motor 88 driven water flosser 8. The depicted waveforms show pressure on the Y-axis and time on the X-axis. In one embodiment, a user may select a square waveform icon 508, a half sine waveform icon 510, a triangle waveform icon 512, a sawtooth waveform icon 514, a sonic waveform icon 516, a custom 1 waveform icon 518, an elliptical waveform icon 520 or a custom 2 waveform icon 522. The responsiveness of the SSC linear motor 88 enables customization of the waveform of a created pulse. In some instances, a square pulse waveform may be desired. This waveform advantageously provides a high kinetic energy burst of liquid without creating excess amounts of low pressure/low energy liquid. When the user presses the square waveform icon 508, the processor will effect the user's preference by sending current to the SSC liner motor 88 sufficient to create the desired pressure for the desired duration of the pulse. In other instances, a more gradual build to maximum pressure might be desirable. For example, by pressing the half sine waveform icon 510, the user instructs the processor to build pressure gradually with a decrease in the rate the pressure builds as it approaches the pressure peak with a pressure decline that mirrors the incline. Pressing the triangle waveform icon 512, the sawtooth waveform icon 514 or the elliptical waveform icon 520 would similarly instruct the processor to gradually increase the current supplied to the SSC linear motor 88 to created the pulse waveform graphically represented by the respective icon.

Pressing the sonic waveform icon 516 instructs the processor to superimpose a waveform on top of a square waveform. To create this pulse, the processor would send current to the SSC linear motor 88 sufficient to create the pressure corresponding to the first sonic wave form spike 524 for the time desired for the first spike, then, the pressure drops to that indicated by the first trough 526 for the time desired for the first trough. This pattern is repeated for the duration of the pulse.

In one embodiment, the user may create custom waveforms, such as those illustrated by the custom 1 waveform icon 518 and custom 2 waveform icon 522. In one embodiment, a user can create the custom waveforms by simply drawing the desired waveform on the mobile device touchscreen with a finger.

In other embodiments, a user can access alternative waveforms available over the internet. It is anticipated that eventually, desirable waveforms will be associated with their beneficial use. For example, a user may search for plaque removal waveforms and download waveforms thought to be most useful for plaque breakup. Another user might want waveforms thought most beneficial for gum massage.

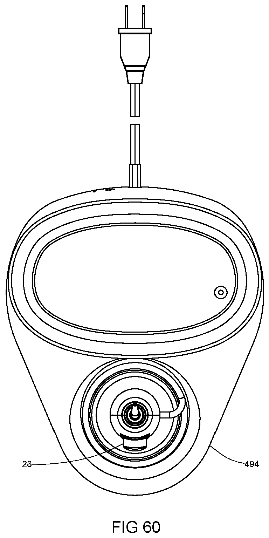

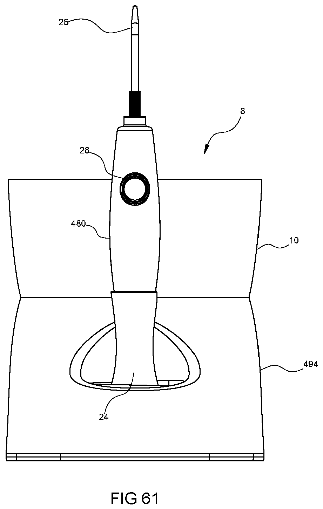

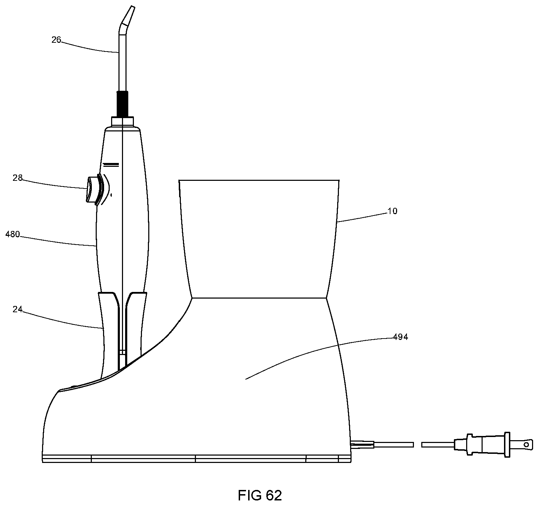

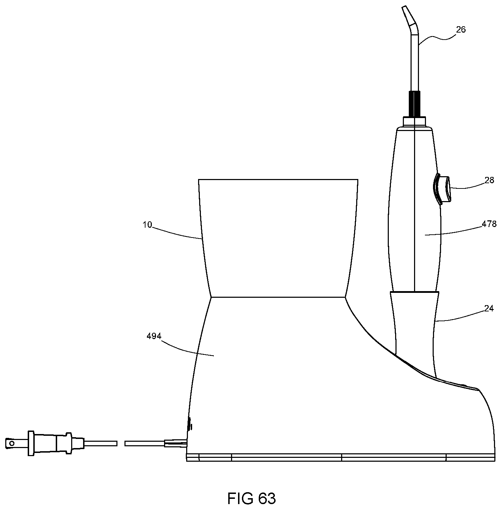

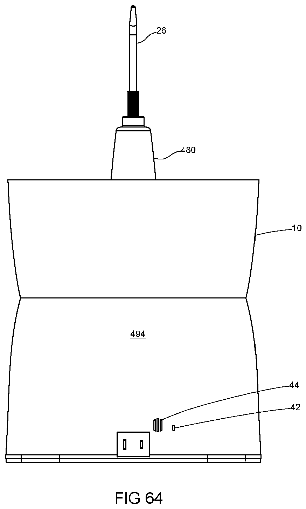

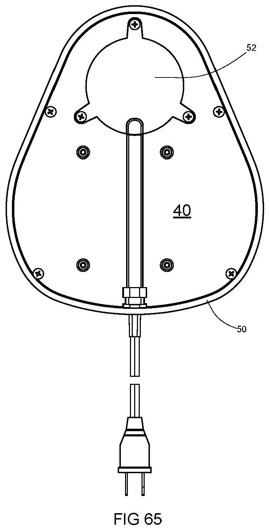

Various views of an embodiment of a transceiver enabled water flosser are shown at Figures 60-65.

In some embodiments, the controller printed circuit board 38 also has memory 528 assessable to the processor. The memory 528 can store user preferences such that the user's preferences settings are available once the user is identified. Memory 528 can also store default settings so that a user can use the water flosser without creating user preferences. As a user modifies preferences, the new preferences are stored in memory 528 and are associated with the modifying user.

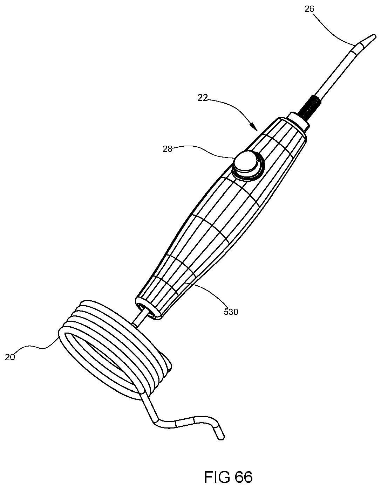

Memory 528 can also store use patterns for individual users. In the simplest case, the preferences used, and the duration of use, could be stored along with the identity of the user. In more complex embodiments, spatial recognition may be used to identify the relative direction of an ejected pulse. In these embodiments, the nozzle 26 is rotationally registered and fixed relative to the handle 22 so that the direction of liquid ejection can be approximated. The mobile device 496 camera is focused on the user as the water flosser 8 is being used. Spatial recognition markings 530, as exemplified in Figure 66, are placed on the exterior of the handle 22 such that software in the mobile device 528 can identify the angle at which the nozzle 26 enters the mouth, the depth of the nozzle in the mouth and the direction the nozzle points. Spatial recognition software can then approximate which areas of the mouth were water flossed and for how long. This data, combined with data from the water flosser 8 showing how the water flosser 8 was used over the same time period, will record what pulse patterns were used on specific areas of the mouth and the duration of use.

The recorded and stored use patterns may be used by the water flosser processor to create a unique preference pattern for a given user. For example, a user may first use a high-pressure kinetic energy pulse to floss debris from between teeth. The user might then pause the water flosser and select a high frequency pulse pattern superimposed on a square waveform to dislodge plaque followed by selection of a lower pressure gentle gum massage using the sine waveform. Once the water flosser has observed a pattern over several uses, the water flosser could anticipate the desired changes in users preference pattern and thereby simplify the users experience by automatically adjusting the preference settings for the user when the user presses the on/off button 28 on the handle 22.

Recorded and stored use patterns may also be sent to others. For example, a child's use pattern could be sent to a caregiver so that the caregiver knows that the flosser 8 has been used as desired. A patient's use pattern could be sent to a health care provider monitoring a suggested treatment plan. The health care provider could then modify the treatment plan based upon the observed use pattern. The health care provider could also send new suggested use patterns to the water flosser 8 over the internet or other communication protocols.

Transceiver use

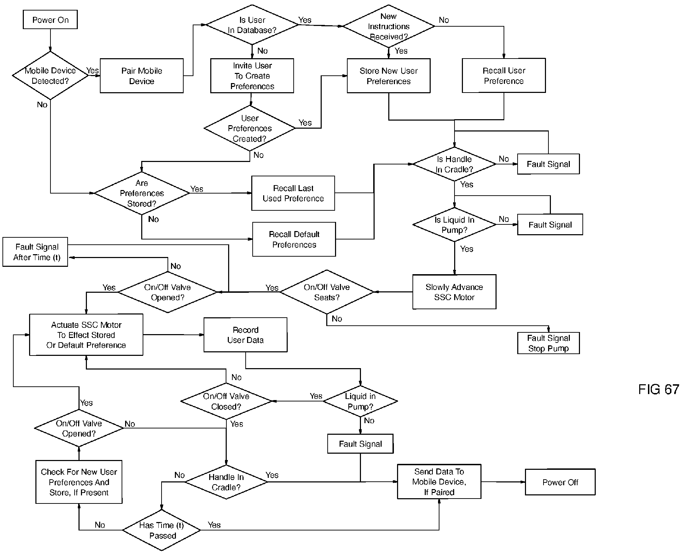

Figure 67 is a flow chart illustrating the operation of the water flosser 8 according to one embodiment. Once the water flosser 8 is powered, the processor will check for a mobile device 496 in the area. If a mobile device 496 is not detected, the processor will recall the last user preferences used from memory 528, if they exist. If there are no stored used preferences, default preferences will be recalled from memory 528. If a mobile device 496 is detected, the processor will pair with the mobile device 496 and attempt to identify the user. If the user is not identified, the last used preferences will be recalled, if they exist. If not, default preferences will be recalled. If the user is identified, the user's preferences will be recalled unless the user communicates new preferences or instructions to the water flosser through the mobile device 496. If the user communicates new user preferences to the water flosser 8, those preferences will be stored in memory 528 and will be used in the flossing experience.

The processor checks to see if the cradle sensor 76 indicates that the handle 22 is in the cradle 24. If the handle 22 is not in the cradle 24, a fault signal is generated. The fault signal could be audible or visual and could be communicated to the paired mobile device 496. In some embodiments, it might be advantageous to verify that the handle 22 is in the cradle 24 before checking for liquid in the inlet float valve chamber 160. Assuring that the handle 22 is in the cradle 24 prevents a liquid in the reservoir 10 from bleeding through the system and being discharged from the nozzle 26, if the nozzle 26 is below the reservoir 10.

In the embodiment depicted, the processor checks to see if the inlet float valve sensor 162 indicates the inlet float valve chamber 160 is full of liquid. If not, a fault signal is generated. The fault signal could be audible or could be visual, or both. In one embodiment, the fault signal could be transmitted to the paired mobile device 496. The fault signal would alert the user that the water flosser 8 is not ready to use because liquid is not in the float valve chamber 160.

Once the processor has verified that the handle 22 is in the cradle 24 and liquid is in the inlet float valve chamber 160, it will slowly advance the pump piston 188 to evacuate air between the pump piston 188 and the handle float valve housing seat 348. Until the pumped liquid lifts the handle float valve body 296 against the handle float valve housing seat 348, air can freely pass by the handle float valve body 296 and will discharge through the nozzle 26. If the on/off toggle body 346 is positioned to hold the handle float valve body 296 away from the handle float valve housing seat 348, the water flosser 8 could inadvertently discharge liquid from the nozzle 26 before the user is ready to begin flossing.

In one embodiment, the processor memory 528 stores the approximate pump piston cycles required to purge air between the pump piston 188 and the handle float valve housing seat 348. Once the number of pump cycles expected to purge the air from the tubing 20 and handle float valve chamber 310 has been exceeded by a predetermined amount, the processor will stop the pump piston 188 and will sent a fault signal indicating that the handle on/off toggle valve 321 needs to be seated. The fault signal could be audible or visual or both, and could be expressed through the paired mobile device.

Because a pumped liquid is more viscous than air, if the current applied to the SSC linear motor 88 remains constant, the motor will advance more slowly when a liquid is ejected from the nozzle than when air is ejected. In another embodiment, the processor monitors the piston position sensor 247 and the current applied to the SSC linear motor 88. As the pump piston 188 slowly advances, air will be ejected, as noted above. If the processor senses that the SSC linear motor 88 advance has slowed, the processor will stop the SSC linear motor 88 and a fault signal will be sent indicating that the on/off toggle valve is open. The slowing of the motor advance is an indicator that the pumped liquid has reached the nozzle tip 399 and the handle float valve 321 is not seated.

If the handle float valve 321 is seated and the air in the handle 22 has been purged, the pump piston 188 will stop because a liquid is incompressible and the space between the handle float valve housing seat 348 and the pump piston 188 is filled with liquid. The processor will sense, through the piston position sensor 247, that the pump piston 188 has stopped advancing. Under this condition, a lower current will be applied to the SSC linear motor 88 to hold the pump piston 188 in place and to create a slight pressure on the liquid between the pump piston 188 and the handle float valve seat 348.

With the handle float valve 321 seated, the user can remove the handle 22 from the cradle 24 and the nozzle 26 can be inserted in the user's mouth. Once in the mouth, the user can press the on/off button 28, which will unseat the handle float valve 321. Once the handle float valve 321 is unseated, the pressure will drop on the liquid between the handle float valve seat 348 and the pump piston 188 and the pump piston 188 will advance. This pump piston 188 advance will be detected by the piston position sensor 247 and will be communicated to the processor. Once the pressure drop/pump piston advance is sensed, the processor can actuate the SSC linear motor 88 to cause the user's preferences to be carried out. If, after a predetermined time, a pressure drop is not sensed, a fault signal can be generated that alerts the user that the water flosser 8 is ready. Again, the fault signal can be audible or visual or both, and in some embodiments, can be conveyed to the mobile device 496, if it is paired to the water flosser 8.

Once the pressure drop is detected, the processor will send current to the SSC linear motor 88 to create the desired pulse pattern. The processor will record, in one embodiment, data related to the user's use of the water flosser 8. The recorded data could include the pulse pattern used over a given time segment. The processor controls the amount of current applied to the SSC linear motor 88 for each pulse, the frequency of the current applied and the duration of the current applied for each pulse. The piston position sensor 247 conveys to the processor the position of the pump piston 188 at a given time. The pump piston position data, combined with current data, informs what pressure was created and the duration and shape of each pulse curve at any given time.

In some embodiments, the processor can compare pump piston 188 movement, as measured by the piston position sensor 247, with the current applied to the SSC linear motor 88. The processor can then adjust the current applied to the SSC linear motor 88 to create the desired pressures and cycle times. For example, if the piston position sensor 247 indicates that the pump piston 188 is advancing too slowly to create a desired pressure, the processor can apply more current to the SSC linear motor 88, which will increase the velocity of the pump piston's 188 advance, which, in turn, will increase the pressure of the liquid at the nozzle 26. Conversely, if the pump piston 188 is advancing more rapidly than expected for a desired pressure, less current can be applied to the SSC linear motor 88. Thus, the pump piston position sensor 247 enables the processor to make real time adjustments to the output of the water flosser 8.

Once the user data is stored for a given time segment, the processor analyzes data from the inlet float valve sensor 162. If water is in the inlet float valve chamber 160, the processor checks the piston position sensor 247 to see if the pump piston 188 has stopped, which would indicate that the on/off button 28 has been pressed and the handle float valve 321 has seated. If the pump piston 188 has not stopped, the processor continues creating pulse patterns consistent with the user's preferences. If the inlet float valve chamber 160 is dry, a fault signal is generated and stored data is sent to a mobile device 496, if one is pared to the water flosser 8.

After the data is sent to a paired device, the water flosser 8 then powers off. If no device is paired to the water flosser 8, the flosser powers off without sending data.

If the pump piston 188 was stopped because the on/off button was pushed and the handle float valve 321 seated, the processor evaluates data from the cradle sensor 76 to determine if the handle 22 has been placed in the cradle 24, which would indicate that the user has completed the flossing session. If the handle 22 is in the cradle 24, the stored data is sent to the mobile device 496, if one is paired with the water flosser 8, and the flosser powers down. If no device is paired to the water flosser 8, it will power down without sending stored data.

On the other hand, if the on/off button 28 was pressed during use, the user may want to change preferences. Therefore, if the pump piston 188 stops and the handle 22 is not in the cradle 24, the processor checks for new user preferences from the paired mobile device 496. If new preferences are input, they are stored. If, after a predetermined time, no new preferences are entered and the flow remains stopped, data is sent to the paired mobile device 496, if paired, and the water flosser 8 will power down. If no mobile device 496 is paired, the water flosser 8 will power down. If a pressure drop is detected, which indicates the on/off button 28 has been pressed, the user's pulse profile preferences are created by the processor by actuating the SSC linear motor 88 in the desired pattern. If a pressure drop is not detected after a predetermined time, a fault signal is generated. The signal could be visual or audible or both, and could be conveyed to the paired mobile device 496 and could suggest that the handle 22 could be returned to the cradle 24 or that the on/off button 28 should be pressed to resume flossing.

In one embodiment, the water flosser 8 will power down after a predetermined period of time if a fault condition is not corrected. If new user data has been created and stored, the data can be sent to the paired mobile device 496 before the water flosser 8 shuts down.


Audible


In one embodiment, the water flosser 8 interacts with the user through an audible interface. In this embodiment, audible commands are given and recognized to select the desired flossing option. In one embodiment, the user might say to the flosser "I'd like a nice gum massage." The flosser 8 would scan stored programs or, if connected to the internet, programs available from the internet for an effective gum massage routine. The water flosser 8 could then report the available routines and allow the user to pick the routine desired. The water flosser 8 could start the desired routine once the on/off button 28 was pressed. The water flosser 8 could then pause and ask the user if the pressure was too high or low and could adjust pressure based upon the user's response. This is but one example of an audio interactive water flosser 8. The interactive possibilities are limitless and will be recognized by those of skill in the art.

For example, the user could ask for a pulse pattern helpful for controlling plaque or for removing food debris. As noted above, the processor could either find a desired program in memory 528 or on the internet, if connected.

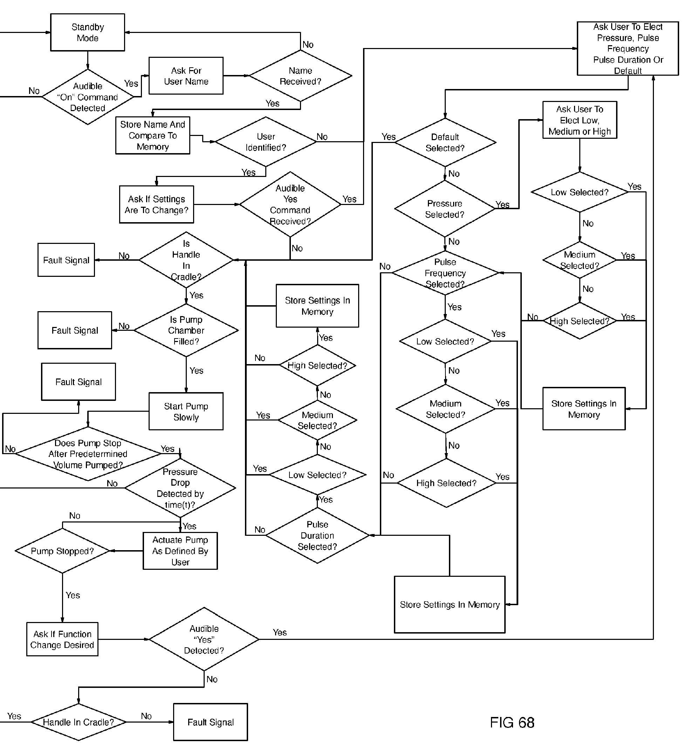

Figure 68 is a flow chart illustrating the operation of the water flosser 8 according to another audible controlled embodiment. The water flosser 8 is kept in standby mode so that audible commands can be detected. If an audible "on" command is detected the water flosser 8 asks for the user's name. If no audible "on" command is received, the water flosser loops back to the standby mode. If a user's name is detected, the name is stored and compared to names in memory 528. If, after a predetermined period of time, a name is not detected, the water flosser loops back to the standby mode. If the user's name matches a name and profile in memory 528, the user is asked if the user profile settings are to change. If an audible "yes" is detected, the processor directs the user to create a new profile. If the user is not identified in memory 528, the processor assumes the user is new and should create a user profile.

Assuming the user does not desire to change the user profile, the processor checks the cradle sensor 76 to determine if the handle 22 is in the cradle 24. If it is not, a fault signal is generated. The signal could be an audible reminder to place the handle 22 in the cradle 24 before starting the flossing process. If, after a predetermined time, any fault signal is not rectified, the water flosser 8 can return to standby mode. If the handle 22 is in the cradle 24, the processor evaluates input from the inlet float valve sensor 162 to determine if a liquid is in the inlet float valve chamber 160. If there is no liquid in the inlet float valve chamber 160, a fault signal is generated. The fault signal could be an audible direction to fill the reservoir 10 and properly place it on the water flosser main housing 12.

Once the processor detects that the handle 22 is in the cradle 24 and liquid is in the inlet float valve chamber 160, the processor will slowly advance the pump piston 188 to purge any air in the tubing 20 and to seat the handle float valve 321. Until the handle float valve 321 is seated, any air in the tubing 20 or handle 22 can pass by the handle float valve 321 and escape through the nozzle 26. Once the handle float valve 321 seats, the pump piston 188 will stop because the liquid between the handle float valve housing seat 348 and the pump piston 188 is incompressible. If the float valve 321 is seated and the pump piston 188 stops, the processor may reduce the current applied to the SSC linear motor 88. The reduced current would be sufficient to hold the handle float valve 321 in its seated position.

It would be undesirable to prematurely pump liquid out of the nozzle 26, so the processor can detect when air has been purged from the tubing 290 and a liquid is being ejected from the nozzle 26 by comparing the pump position sensor 247 to the current applied to the SSC linear motor 88. A liquid is more viscous than air and will slow the pump piston's 188 advance, as compared to its advance when pumping air. This slowing would indicate to the processor that all air has been purged from the line and the handle float valve 321 is not seated. The processor will then generate a fault signal to suggest to the user that the on/off button 28 should be pressed.

Alternatively, the processor could determine that the on/off button 28 is holding the handle float valve 321 open by determining that the pump piston 188 had cycled sufficiently to seat the handle float valve 321 and the pump piston 188 has not stopped.

After the handle float valve 321 seats, as noted above, the pump piston 188 stops. Once the on/off button 28 is pressed, the handle float valve 321 unseats and the pressure on the liquid will drop. This pressure drop will allow the pump piston 188 to advance. The processor will interpret the pump piston advance as an indicator that the user is ready to use the water flosser 8 and will actuate the pump piston 188 to create the user specified profile. If no pressure drop is detected after a predetermined time period, the water flosser 8 will return to the standby mode.

As the processor actuates the user profile selected, it will periodically check to see if the on/off button 28 has been pressed by monitoring if the pump piston 188 has stopped. If the piston pump 188 does not stop, the processor will effect the desired user profile but will periodically check for input from the inlet float valve sensor 162 to make sure liquid is in the inlet float valve chamber 160. If liquid is not in the inlet float valve chamber 160, a fault signal is generated. The fault signal could be an audible direction to add more liquid to the reservoir 10. If the fault signal is not corrected in a predetermined period of time, the water flosser 8 can return to standby mode.

If the handle float valve 321 seats because the on/off button 28 is pressed, the processor will reduce the current applied to the SSC linear motor 88 and will ask if the user would like to change the user profile. If an audible "yes" is not detected in a predetermined time, the processor will check the cradle sensor 76 to determine if the handle 22 is in the cradle 24. If it is not, a fault signal will be generated. This fault signal could suggest to the user to either say "yes" or to return the handle 22 to the cradle 24. As with all fault signals, if the fault is not corrected in a predetermined time period, the water flosser 8 may return to standby mode.

If the user pressed the on/off button 28 because adjustments to the user profile is desired and an audible "yes" is detected, the user is asked to either select pressure or default. If the user indicates a return to default settings is desired, the processor recalls the default settings from memory 528 and those settings are used to drive the pump piston 188 to effectuate the user's desired pressure profile. The audible request could be more refined and ask the user to identify factory default settings or the user's default settings as both would be stored in memory 528.

If the user does not select default settings, the processor will wait for an audible indication that pressure has been selected by the user for modification. If an audible indicator is detected, the user will be asked to select low, medium or high pressure. "Low, Medium or High" are used for illustrations only. A user could be asked to audibly identify the desired pressure and, after verifying that the stated pressure was properly understood by the processor, the pressure could be recorded to memory 528. For example, the processor could ask "What pressure setting would you like?" The user could respond 90 psi. The processor would then say, "I heard 90 psi. Is that correct?" Upon receipt of an audible affirmative response, 90 psi would be stored in memory 528 as the desired pressure setting.

Alternatively, the user could be asked if increasing or decreasing pressure is desired. Upon receipt of a responsive audible indicator, the processor would step up or step down the pressure in predetermined increments and could then ask the user if the desired changes were correctly understood. For example, after receipt of an audible indicator suggesting the user desired to change pressure settings, the processor could ask "Would you like to increase or decrease pressure?" The user could respond, "increase." The processor could then say, "Pressure has been increased 5 psi" and ask "is that enough?" If it is, the change is pressure is stored to memory 528 and, if not, an additional incremental increase is pressure is proposed. Once the user is satisfied with the increase, it is stored to memory 528.

If an audible indicator is not received suggesting the user desired to change pressure in a predetermined amount of time, or, if the user has changed pressure settings, the processor will ask if the user would like to adjust pulse frequency. If an audible affirmative response is received, the user is asked to select a low, medium or high pulse frequency. If a selection is made, it is stored in memory 528. If no selection is made or, if a selection was made and the selection was stored to memory 528, the user is asked if a change in pulse duration is desired.

The process outlined in Figure 68 is illustrative only. In one embodiment, once the user indicates a desire to change pulse frequency, the user could identify a specific desired frequency, which would be recorded to memory 528. For example, the user could be asked, "what pulse frequency is desired?" The user could then respond, "22 pulses per second." The processor would verify that its understanding of the direction is correct and would then store the desired pulse frequency to memory 528. Alternatively, as described above, the user could be asked if an increase or decrease in pulse frequency is desired and the processor could step through the increase or decrease in frequency, as outlined above in the discussion of pressure. Once the desired frequency is identified, it would be stored to memory 528.

After the desired pulse frequency is stored to memory 528, or if the user did not indicate a desire to change pulse frequency, the user is asked if a change in pulse duration is desired. If an audible affirmative indication is received, the processor will ask the user to select low, medium or high and will record the selection. As with pressure and pulse frequency, in some embodiments, the user could be asked what pulse duration is desired or if it is desired to increase or decrease the pulse duration. For example, the processor could as, "what pulse duration is desired?" The user could respond "15 milliseconds", and after confirmation, the value could be saved to memory 528. Alternatively, the user could be asked if an increase in pulse duration or a decrease in pulse duration is desired and, as outlined above, the desired pulse duration could be stored to memory 528.

If pulse duration is not selected, or after pulse duration values are stored, the processor will actuate the pump piston 188 as defined by the user and, upon pressing the on/off button 28, the water flosser 8 will resume.

If, at the beginning of the operation described in Figure 68, the user is not identified, or if the user indicates the user preference settings are to change, the processor takes the user through the parameter selection process, as described above. The user will be asked to select default settings or to adjust pressure, pulse frequency and/or pulse duration. As described above, what is depicted in Figure 68 is illustrative of, and the variations discussed are equally applicable to, the process of creating a new user profile preference as they are to modifying a user's preference profile during use. Once the desired user preferences are stored to memory 528, the processor will evacuate air from the tubing 20, as described above and will actuate the SSC linear motor 88 to effect the user preferences stored in memory 528.

The embodiments described hereinabove are illustrative only. A multitude of variations are possible, and contemplated herein. A typical user may enjoy the flexibility and control afforded by the uses described, or may find selection of pressure, pulse frequency and pulse duration too technical. It is contemplated that those of skill in the art can create the user interfaces envisioned herein that take full advantage of the power, flexibility and control offered by the embodiments described herein. It is contemplated that audible interactions may utilize different terms to ascertain the user's desires. For example, a user might be asked, "is the session directed to gum massage, plaque abatement or food debris removal?" The water flosser 8 could then optimize the output for the desired task. Alternatively, the water flosser 8 could ask if a high frequency, low flow experience is desired with high pressure, and then optimize the output for the desired experience. Embodiments advantageously give the user control over flow, pressure, kinetic energy per pulse, and pulse frequency. Audible user interfaces will give users the ability to control each of these parameters.

Ball Valve Control

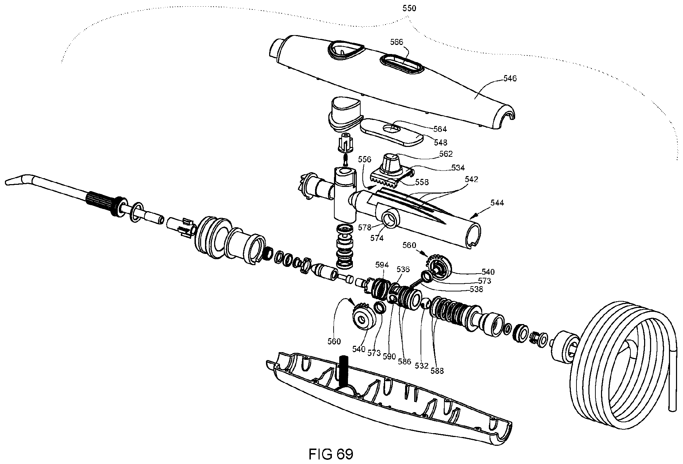

In one embodiment, the handle 22 includes a ball valve 532 rotated by a ball valve slide 534. As shown in Figure 69, in a ball valve handle 550 the ball valve 532 is housed in a ball valve seat housing 536. A ball valve axle 538 rotationally connects the ball valve 532 to two ball valve rotation gears 540. The ball valve rotation gears 540 engage the ball valve slide 534, which may be actuated to rotate the ball valve 532. The ball valve slide 534 rides on slide ribs 542 formed on the ball valve/float valve handle housing 544. The slide ribs 542 match the curvature of the ball valve front handle housing 546. A ball valve slide spacer 548 is interposed between the ball valve slide 532 and the ball valve front handle housing 546.

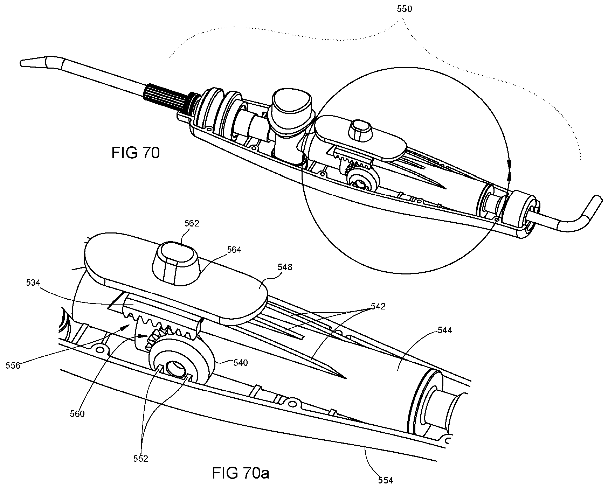

Figure 70 shows the ball valve handle 550 with the ball valve front handle housing 546 removed. As shown in Figure 70a, the ball valve rotation gears 540 are adjacent ball valve gear flanges 552 in the ball valve rear handle housing 554. The ball valve gear flanges 552 prevent movement of the ball valve rotation gears 540 along a first axis perpendicular to the longitudinal axis of the ball valve/float valve handle housing 544. The slide teeth 556 are positioned along a slightly arcuate base that assures the slide teeth 556 properly engage the ball valve rotation gear teeth 560 as the ball valve slide 534 translates along the ball valve slide ribs 542. The ball valve slide 534 has a ball valve slide button 562 that protrudes through a ball valve slide button aperture 564 in the ball valve slide spacer 548 and through an elongated ball valve slide button handle aperture 566 in the front ball valve handle housing 546 (see Figure 69).

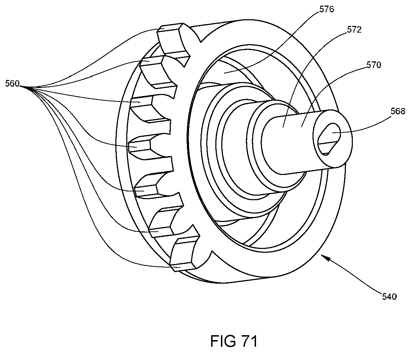

Figure 71 is a perspective view of a ball valve rotation gear 540 of the ball valve handle 550. The ball valve rotation gear 540 has a ball valve axle receiving aperture 568 formed in the ball valve rotation gear shaft 570. The ball valve rotation gear shaft protrudes from a ball valve gear o-ring seat 572, which sealingly engages a ball valve rotation gear o-ring 573 interposed between the ball valve gear o-ring seat 572 and the ball valve gear receiving aperture 574 formed in the ball valve/float valve housing 544. O-rings 572 and 573 are formed from PTFE in one embodiment. The ball valve rotation gears 540 also have a ball valve/float valve housing flange receiver 576 that, upon assembly, encircles the ball valve/float valve housing flange 578. The mating of the ball valve/float valve housing flange 578 and the ball valve/float valve flange receiver 576 allows for rotational freedom of the ball valve rotation gears 540 but prevents movement of the ball valve rotation gears 540 along the longitudinal axis of the ball valve/float valve housing 544.

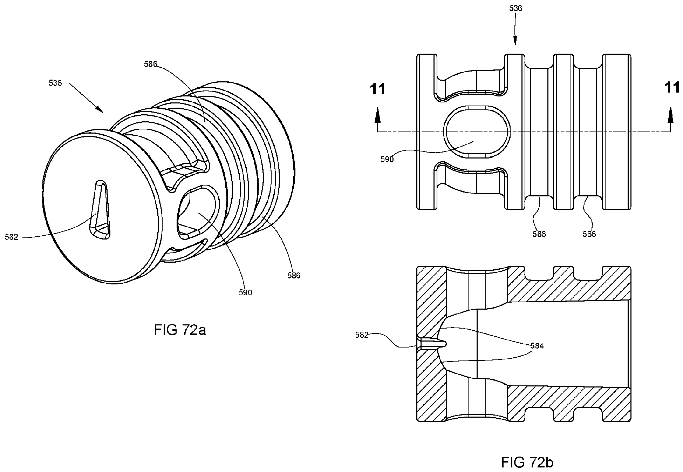

Figure 72a is a perspective view of the ball valve seat housing 536. As shown, the ball valve seat housing face 580 at the distal end of the ball valve seat housing 536 has a triangular slot 582. The proximal side of the slot 582 forms part of the ball valve seat 584, as best shown in Figure 72b. The triangular slot 582 dimensions are such that a linear relationship between ball valve 532 rotation and pressure is created. The ball valve seat housing 536 has two ball valve seat housing annular recesses 586 that hold two ball valve seat housing o-rings 588 when assembled. The ball valve seat housing has elongated circular apertures 590 that receive the ball valve rotation gear shafts 570. The elongated circular apertures 590 permit the ball valve seat housing 536 to slide relative to the ball valve rotation gear shafts 570 along the longitudinal axis of the ball valve/float valve housing 544 relative to the housing, while the ball valve 532 remains longitudinally fixed relative to the same axis.

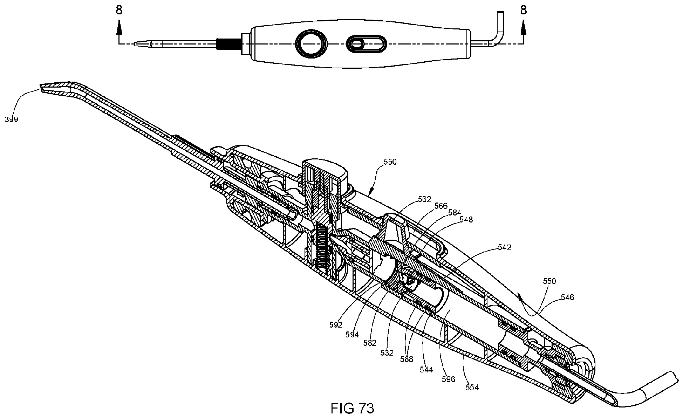

Figure 73 is a cross-sectional view of the ball valve handle 550. The interior of the ball valve/float valve housing 544 has a ball valve seat housing spring shoulder 592. The ball valve seat housing spring 594 engages the ball valve seat housing spring shoulder 592 and applies a force to the ball valve seat housing face 580 that urges the ball valve seat housing 536 along the ball valve/float valve housing chamber wall 596 towards the proximal end of the ball valve handle 550. The force applied by the ball valve seat housing spring 594 urges the ball valve seat 584 against the ball valve 532, which is fixed relative to the longitudinal axis of the ball valve/float valve housing 544. This force assures that the ball valve 532 properly seats with the ball valve seat 584. In another embodiment, not shown, the ball valve seat housing 536 is fixed in the ball valve/float valve housing 544 and the ball valve 532 is biased towards the ball valve seat 584. For example, the ball valve axle 538 could be made of a suitable spring material and could bias the ball valve 532 towards the seat 584.

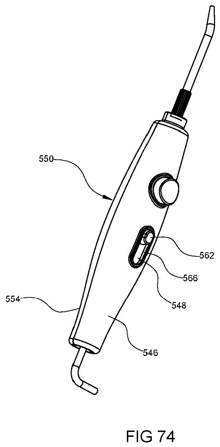

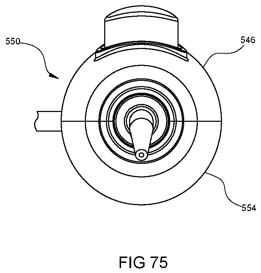

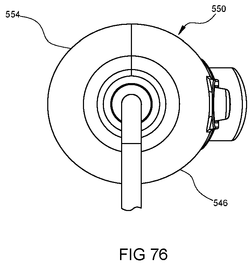

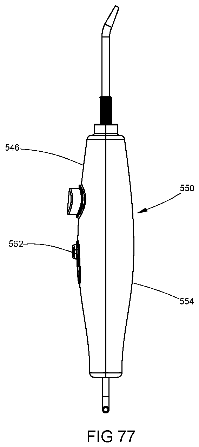

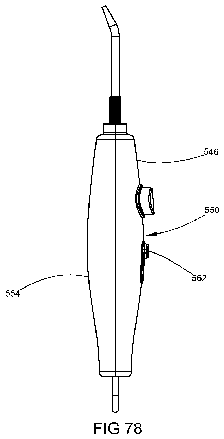

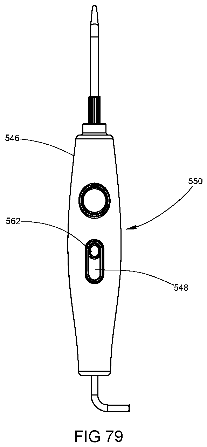

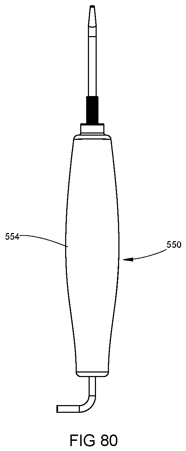

Figures 74-80 are different views of the assembled ball valve handle 550.

The ball valve 532 will restrict the flow of liquid through the ball valve handle 550 as the ball valve 532 is rotated to a closed position. Restricting liquid flow with the ball valve 532 will correspondingly reduce the pressure of the liquid ejected from the nozzle tip 399. Thus, a user can conveniently control the pulse pressure from the ball valve handle 550 by simply sliding the ball valve slide 534.

The ball valve handle 550 complements the abilities of the SSC linear motor 88. Unlike prior art rotary motors, the SSC linear motor 88 simply slows the pump piston's 188 advance if pressure increases. Prior art water flossers often had a bypass valve that would release pressure in the pump if the flow was restricted. The bypass valves are noisy and inefficient. Moreover, the prior art rotary motors and pump kinematics required continued rotation of the rotary motor at a relatively steady rpm which maintains the clatter caused by the over-stressed kinematics of the system.

In one embodiment, a current sufficient to create the maximum desired pressure when the ball valve is open is applied to the SSC linear motor 88. The current causes the SSC linear motor 88 to create a force on the pump piston 188. If the ball valve 532 is fully open, the maximum desired pressure is created at the nozzle tip 399 as the pump piston 188 advances. As the ball valve slide 534 is translated, the ball valve 532 rotates and reduces the flow through the ball valve handle 550, which, in turn reduces the pressure of the liquid ejected from the nozzle tip 399. The triangular slot 582 in the ball valve seat housing 536 creates a linear relationship between flow/pressure and ball valve 532 rotation. Recall that the SSC linear motor 88 enables a user to also select pulse frequency and pulse duration. Regardless of the pressure selected at the ball valve handle 550, the SSC linear motor 88 will continue to create the desired pulse frequency and pulse duration.

In one embodiment, pulse frequency and pulse duration are controlled by two knobs on the water flosser housing. Pressure is controlled by the ball valve 532 in the ball valve handle 550. In another embodiment, the ball valve handle 550 is paired with a voice-controlled water flosser 8, as described above.

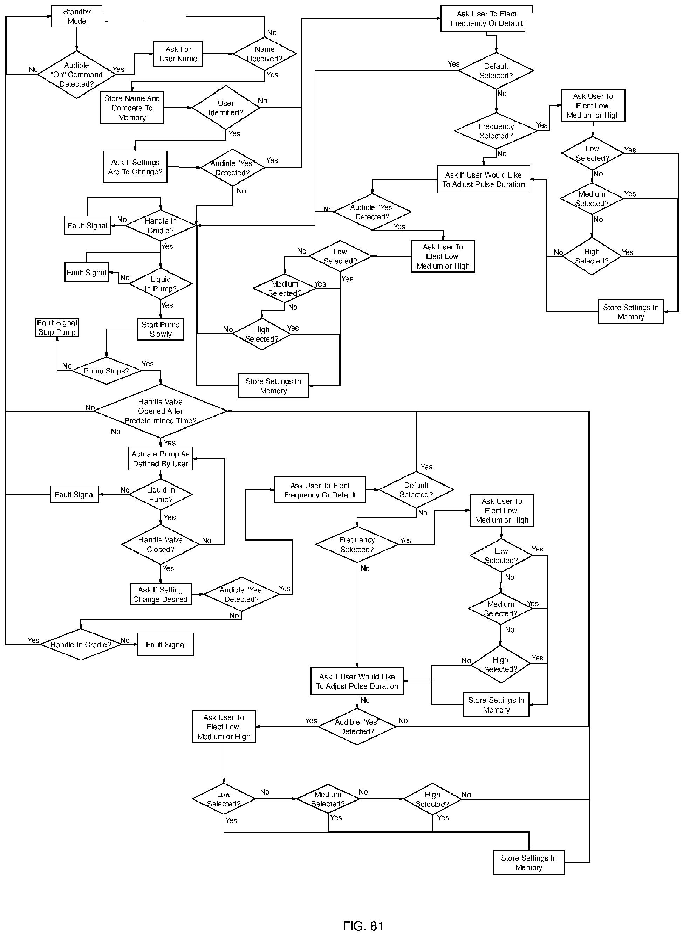

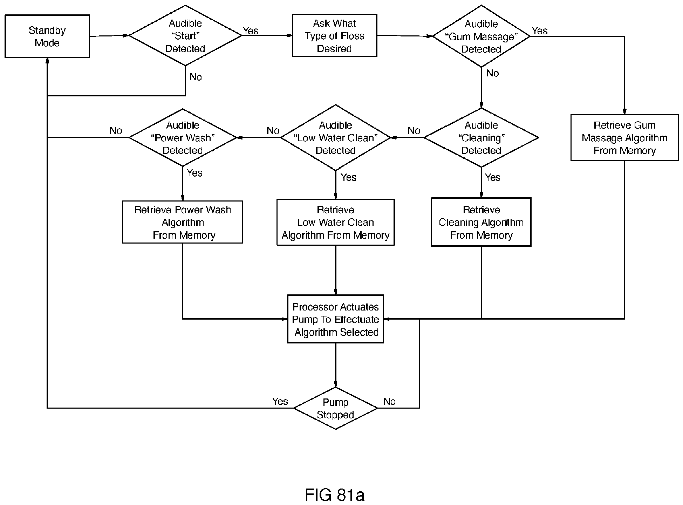

Figure 81 is a flow chart for an embodiment of a voice activated water flosser 8 coupled with a ball valve handle 550. The relevant variations discussed when describing embodiments of voice activated water flossers apply equally to a voice-controlled water flosser 8 coupled to a ball valve handle 550. Similarly, a water flosser 8 controlled by a mobile device 496 could be coupled with a ball valve handle 550 with pressure control shifted to the ball valve handle 550. In an embodiment of a ball valve handle 550 paired with a mobile device 496 controlled water flosser 8, the processor can detect the pressure selected by the user by monitoring the rate of pump piston 188 advance. As the pressure at the nozzle tip 399 decreases, the rate of pump piston advance during a pulse will decrease because less liquid will pass through the ball valve 532. The processor can then implement the desired user profiles using the derived pressure values. Moreover, the derived pressure values can be conveyed to a paired mobile device 496.

Figure 81a is simplified schematic illustrating audible control used to retrieve algorithms from memory or the internet that can control water flosser 8 output. In these examples, the ball valve 532 may be used to find a comfortable pressure for the user. These examples are exemplary only and, after understanding the power and flexibility of the SSC driven flosser, other beneficial algorithms will be readily apparent.

In some embodiments, the ball valve 532 can stop liquid flow and effectively becomes an on/off valve. In these embodiments, the handle float valve 321 becomes redundant and can be omitted.

Handheld

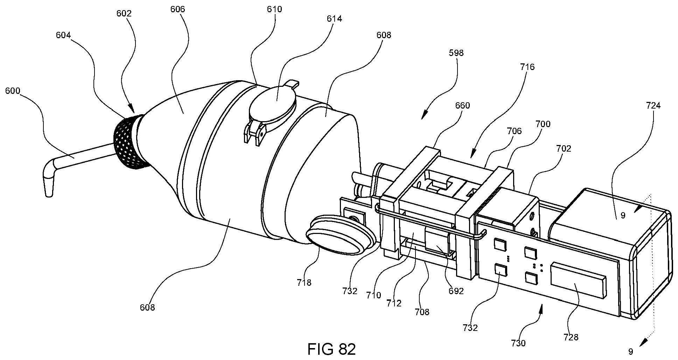

The embodiment of Figure 82 depicts a handheld water flosser 598 with the lower housing 599 removed. The handheld water flosser 598 has a handheld water flosser tip 600 connected to the handheld water flosser 598 by a pin-lock coupling 602, which is well known. An example is the 210/310 pneumatic coupling made by Eaton. The knurled pin-lock coupling collar 604 allows for connection by merely pushing the handheld water flosser tip 600 into the pin-lock coupling 602. To remove the handheld water flosser tip 600, the knurled pin-lock coupling collar 604 is slid towards the handheld water flosser cap 606. The handheld water flosser cap 606 is attached to the handheld water flosser reservoir 608 through the handheld water flosser housing spacer 610. The handheld water flosser cap 606 slides over the distal end of the handheld water flosser housing spacer 610 and the proximal end of the spacer slides into the distal end of the handheld water flosser reservoir 608. The distal end of the handheld water flosser housing 599 fits around the proximal end of the handheld water flosser reservoir 608. The hand-held water flosser reservoir 608 has an inlet cap 614.

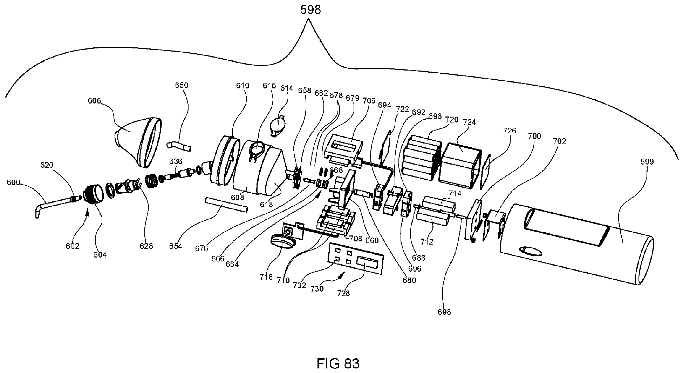

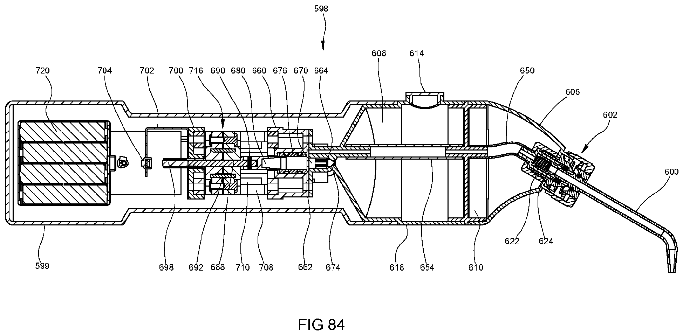

Figure 83 is an exploded view of the internal components of the handheld water flosser 598, and Figure 84 is a cross-sectional view of this embodiment. As shown, the handheld water flosser inlet cap 614 is adapted to sealingly engage the handheld water flosser inlet 616. The handheld water flosser reservoir 608 has an outlet end 618 that is conically shaped.

The handheld water flosser tip 600 has a pin-lock engaging radial flange 620 that engages the pin-lock coupling 602, as is known in the art. As shown in Figure 84, insertion of the handheld water flosser tip 600 into the pin-lock coupling 602 compresses the pin-lock coupling button spring 622, which allows the pin-lock coupling button 624 to move along the longitudinal axis of the pin-lock coupling 602, which opens the flow path. The proximal end of the handheld water flosser tip 600 opens the flow path when the pin-lock coupling engaging radial flange 620 is held in place by the pin-lock coupling pins 628. As is known in the art, manipulation of the pin-lock coupling 602 releases the tip 600.

A first handheld water flosser tube 650 joins the handheld water flosser housing spacer 610 to the pin-lock coupling 602. A second handheld water flosser tube 654 joins the handheld water flosser housing spacer 610 to the handheld water flosser reservoir 608. The handheld water flosser reservoir 608 has a handheld water flosser reservoir base 658 that connects to a hand-held water flosser pump support 660. A handheld water flosser pump support gasket 662 is interposed between the handheld water flosser pump support 660 and the handheld water flosser reservoir base 658. The handheld water flosser float valve 664 comprises a handheld water flosser float valve elastomeric body 666 and a float valve cap 668. The handheld water flosser float valve 664 is free to move axially in the handheld water flosser reservoir outlet passage 670 and, when the handheld water flosser reservoir outlet passage 670 is filled with liquid, the handheld water flosser float valve 664 seats against the handheld water flosser float valve seat 674.

The handheld water flosser piston cylinder 676 is housed in the handheld water flosser pump support 660 and is isolated from the handheld water flosser pump support 660 by three handheld water flosser piston cylinder elastomeric o-rings 678, similar to what was described previously. A handheld water flosser piston 680 is adapted to slidingly engage the handheld water flosser piston cylinder 676, as was described in the discussion of the non-handheld water flosser 8, above. Upon retraction of the handheld water flosser piston 680, the handheld water flosser float valve 664 moves away from its seat and allows a liquid to enter the handheld water flosser piston cylinder 676. When the handheld water flosser piston 680 advances, the handheld water flosser float valve 664 seats and the liquid flows through a transverse slot in the handheld water flosser pump support gasket 662 into the handheld water flosser exit conduit 684 passing through the handheld water flosser housing reservoir base 658 and into the second handheld water flosser tube 654 and ultimately out the hand held water flosser tip 600.

The handheld water flosser piston 680 is fixed to the handheld water flosser piston rod 688 by a handheld water flosser piston rod pin 690, similar to what was described above when discussing the non-handheld water flosser 8. Also, similar to what was described above, the handheld piston rod 688 is secured to the handheld water flosser self-supporting coil 692 by a handheld water flosser piston-side self-supporting coil support 694 and a handheld water flosser magnet-side self-supporting coil support 696. The handheld piston rod 688 supports a handheld water flosser sensor magnet 698 at the end opposite the handheld water flosser piston 680. The piston rod 688 slidingly engages a handheld water flosser sensor magnet-side piston rod support 700. Attached to the handheld water flosser magnet-side piston rod support 700 is a handheld water flosser sensor support bracket 702 that secures a handheld water flosser Hall effect sensor 704.

Similar to what was described previously, the handheld water flosser pump support 660 and the handheld water flosser magnet-side piston rod support 700 secure a first handheld water flosser magnet support 706 and a second handheld water flosser magnet support 708 in position. Four handheld water flosser magnets 710 are attached to the first and second handheld water flosser magnet supports 706, 708. Interposed between the first handheld water flosser magnet support 706 and the second handheld water flosser magnet support 708 are a first handheld water flosser bar 710 and a second handheld water flosser bar 712. The handheld water flosser self-supporting coil 692, along with the described associated components, form a handheld water flosser self-supporting coil motor 716 that drives the handheld water flosser piston 680.

The depicted handheld water flosser 598 has a handheld water flosser on/off button 718 that turns the power from the battery pack 720 on and off. In the embodiment depicted, the battery pack 720 is encased in a battery pack case having battery pack case top 722, battery pack case body 724 and battery pack bottom 726. When the power is on, the battery pack 720 supplies energy to the handheld water flosser controller 728 on the handheld water flosser printed circuit board 730. The handheld water flosser printed circuit board 730, in one embodiment, includes a handheld water flosser transceiver 732 that enables the handheld water flosser controller 728 to communicate with a mobile device, similar to what was described above. The handheld water flosser controller 728 uses input from the handheld water flosser hall effect sensor 704 to properly drive the handheld water flosser self-supporting coil motor 716 to effect the instructions received from the mobile device through the handheld water flosser transceiver 732.

One of skill in the art would understand that various user interfaces discussed above could be used with a handheld water flosser 598. For example, audible commands could be used, as described above. While not shown, additional buttons or knobs could be added to the handheld water flosser 598 to allow a user to select the output parameters described above. With a handheld water flosser transceiver 732, the handheld water flosser 598 can interact with mobile devices, as discussed above.

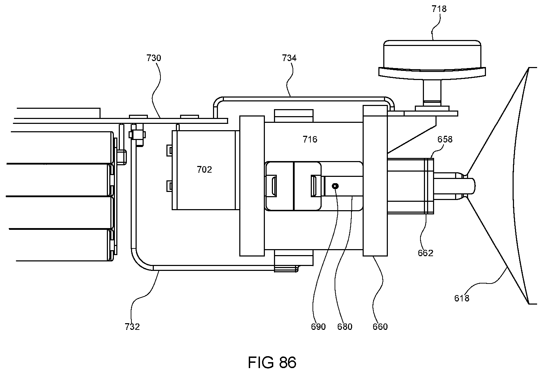

Figure 86 is a partial view of the handheld water flosser's internal components. An on/off signal conduit 734 connects the handheld water flosser on/off button 718 to the handheld water flosser printed circuit board 730. A handheld water flosser self-supporting coil motor power conduit 732 carries power from the handheld water flosser printed circuit board 730 to the handheld water flosser self-supporting coil motor 716.

Stationary Magnet/Moving Sensor

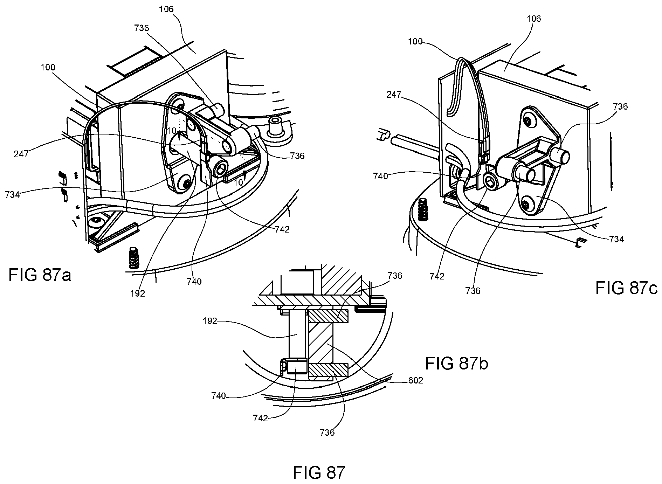

Figures 87a-c illustrate an alternative piston position sensing configuration. In some embodiments, accurate sensing of the piston 188 position relative to the piston cylinder 176 is critical. The depicted embodiment improves piston position sensing, and one of skill in the art would understand that the principles illustrated are equally applicable to handheld water flossers. One of skill would also understand that other sensors, such as optical sensors, could be adapted to provide position sensing.

As shown in Figure 87a, a magnet support flange 734 is attached to the piston position sensor magnet housing support 106. The magnet support flange 734 houses two neodymium sensor magnets 736 that are held adjacent the piston push rod 192, as shown. In this embodiment, the piston position sensor 247 is mounted to the piston push rod 192. A piston position sensor connector 740 is connected to the piston push rod 192 to properly position the piston position sensor 247 in the magnetic field created by the neodymium sensor magnets 736. One of skill in the art would understand that other types of magnets could also be used to create the desired magnetic field. In the embodiment depicted, the piston position sensor connector 740 is held in position by a securing member 742 that threadingly engages the piston push rod 192. One of skill in the art would understand that other methods of securing the piston position sensor 247 to the piston push rod 192 would work equally as well. The neodymium paired sensor magnets 736 are positioned slightly farther apart than the working stroke of the piston 188.

Motor control, coupled with the extremely light SSC motor enables responsiveness such that the pump piston can return from full extension to its start position (slightly less than an inch) in less than 25 milliseconds--less than the length of time a single frame of a movie is projected at the movie theater when a movie is played. The piston must accelerate from a full stop and then come to a full stop while traversing the stroke of the piston. It must reach a full stop at a given distance (margin) before reaching the crash stops to prevent the actuator from crashing into the stops at the ends of the stroke.

This responsiveness is achieved by precisely measuring piston position using the Hall effect sensor and magnet pair shown in Figures 87a-c. One magnet has north adjacent the sensor while the other has south adjacent the sensor. The sensor used in one embodiment is a Honeywell SS495A Hall effect sensor. The sensor output provides precise position data to the processor/controller. The controller used in one embodiment is a HiLetgo ESP32S Development Board.

The position (x) at time (t) is is sampled along with coil current (i) at time (t). Samples of position and current are taken and averaged to reduce sampling noise. In one embodiment, a running average of thirteen samples is used--as a new sample is taken, the oldest sample is discarded. The running average is calculated continuously on the pressure cycle and on the return cycle.

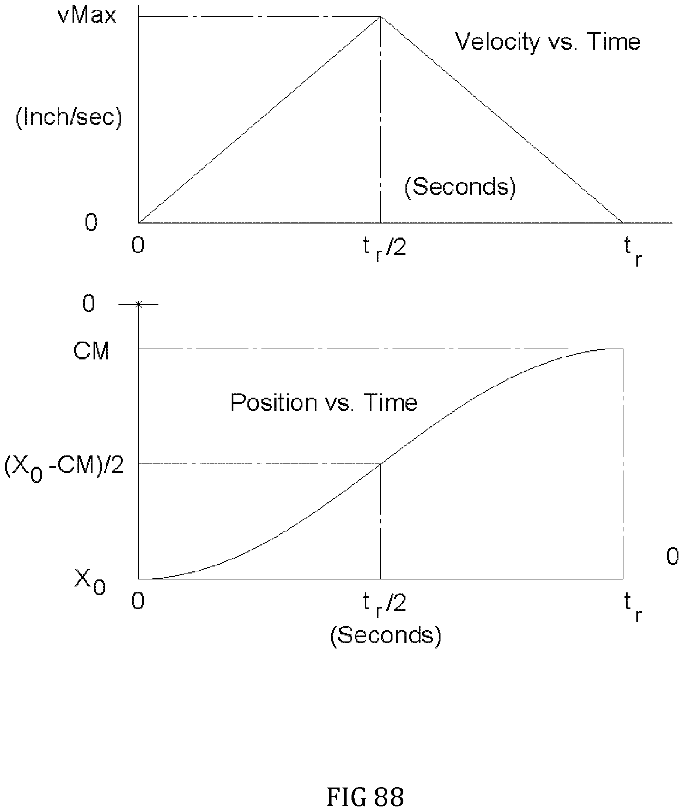

An ideal velocity curve is known. For example, the ideal return curve is depicted at Figure 88. As shown, to return the piston to its retracted position, the SSC motor accelerates linearly (dv/dt is a straight line) to the midpoint of the stroke and then decelerates linearly to a stop. Voltage applied to the SSC motor is manipulated through Pulse Width Modulation (PWM) to have the SSC motor acceleration approximate the curve depicted. If the position signal sampling shows that the SSC motor is accelerating too slowly, more voltage is applied. Conversely, if the SSC motor is accelerating too quickly, the applied voltage is reduced. Dynamic braking is used during deceleration.

The following formulae are one way to characterize the behavior of the SSC motor and may be used to control the performance of the motor. For the formulae, the following definitions apply:

$V(t)$ = Voltage applied to the coil terminals via pulse width modulation (PWM)
$R_{coil}$ = Coil resistance (ohms)
$K_a$ = Actuator Force Constant (lbf/Amp)
$F_f$ = Force of friction (lbf)
$m_a$ = Mass of moving coil assembly (lbm)
$g_c$ = Factor for converting mass into force (inch-lbm)/(lbf-sec$^2$)
$x$ = Actuator position (inch)

$$\frac{dx}{dt} = \text{Actuator velocity} \quad \text{(inch/sec)}$$

$$\frac{d^2x}{dt^2} = \text{Actuator acceleration} \quad \text{(inch/sec}^2)$$

$K_b$ = Actuator Back EMF constant (lbf-sec/inch)
$L_{coil}$ = Coil Inductance (Henry)
$i$ = Coil Current (Amperes)

$$\frac{di}{dt} = \text{Time derivative of Coil Current} \quad \text{(Amperes/sec)}$$

Actuator position ($x$) and coil current ($i$) are measured at time ($t$) and velocity and $\frac{di}{dt}$ are derived from those measurements.

$$V(t) = \left(\frac{R_{coil}}{K_a}\right)\left\{F_f + \left(\frac{m_a}{g_c}\right)\frac{d^2x}{dt^2}\right\} + K_b\frac{dx}{dt} + L_{coil}\frac{di}{dt} \quad \text{(Equation 1)}$$

$$\frac{dx}{dt} = \frac{vMax}{\left(\frac{t_r}{2}\right)}t \;, \quad \frac{d^2x}{dt^2} = \frac{vMax}{\left(\frac{t_r}{2}\right)} \quad \text{(Equation 2)}$$

$$x = x_0 + \frac{vMax}{t_r}t^2 \quad \text{(Equation 3)}$$

$$vMax = -\left(\frac{2}{t_r}\right)\left(CM + x_0 + v_0 t_r\right) \quad \text{(Equation 4)}$$

For the first half of the return stroke:

$$dutyCycle = \left(\frac{1023}{V_s}\right)\left[\left(\frac{R_{coil}}{K_a}\right)\left\{F_f + \left(\frac{m_a}{g_c}\right)\left(\frac{2}{t_r}\right)vMax\right\} + K_b\frac{dx}{dt} + L\frac{di}{dt}\right] \quad \text{(Equation 5)}$$

For the second half of the return stroke:

$$x = \left(x_0 - \frac{x_r}{2}\right) + 2vMax\left(t - \frac{t_r}{2}\right) - \frac{vMax}{t_r}\left(t^2 - \frac{t_r^2}{4}\right) \quad \text{Equation 6}$$

$$\frac{dx}{dt} = 2vMax\left(1 - \left(\frac{1}{t_r}\right)t\right) \quad \text{Equation 7}$$

$$\frac{d^2x}{dt^2} = -\left(\frac{2}{t_r}\right)vMax \quad \text{Equation 8}$$

$$dutyCycle = \left(\frac{1023}{V_s}\right)\left[\left(\frac{R_{coil}}{K_a}\right)\left\{F_f - \left(\frac{m_a}{g_c}\right)\left(\frac{2}{t_r}\right)vMax\right\} + K_b\frac{dx}{dt} + L_{coil}\frac{di}{dt}\right] \quad \text{Equation 9}$$

For the pressure stroke:

$$q = 907d_n^2 C_n\sqrt{\frac{P_n}{\rho}} \quad (\text{in}^3/\text{sec})$$

$$\frac{dx}{dt} = \left(\frac{907}{\left(\frac{\pi}{4}\right)d_b^2}\right)d_n^2 C_n\sqrt{\frac{P_n}{\rho}} \quad (\text{in/sec})$$

The duty cycle required for a given nozzle pressure is:

$$dutyCycle = \left(\frac{1023}{V_s}\right)\left[-L\frac{di}{dt} + \frac{R_{coil}}{K_a}\left\{\left(\left(\frac{\pi}{4}\right)d_b^2\right)P_n + F_f\right\} + K_b\left\{\frac{907d_n^2 C_n}{\left(\frac{\pi}{4}\right)d_b^2\sqrt{\rho}}\right\}\sqrt{P_n}\right] \quad \text{Equation 10}$$

Where:

$P_n$ = Desired nozzle pressure (psi)
$C_n$ = Nozzle discharge coefficient (efficiency)
$\rho$ = Density of Liquid (lbm/ft^3)
$d_b$ = Diameter of Piston Bore (inch)

The pressure duty cycle (Equation 10) is multiplied by a time dependent scaling factor unique to a desired output. For example, for a half-sine wave output, the duty cycle would be multiplied by:

$$Sin\left(t\left(\frac{\pi}{t_{on}}\right)\right),$$

where $t_{on}$ = the duration of the pressure pulse or "on time."
When first energized, the SSC motor is slowly retracted to the end of the recharge cycle--the motor hits a stop. The position measurement of the end of the recharge cycle is taken and a recharge cycle endpoint is calculated by adding a predetermined distance to the actual endpoint (typically 0.03 inches). The end of the recharge cycle is zero for purposes of calculating position. The SSC motor is then slowly extended to full stroke and the motor hits a stop. The position measurement of the fully extended actuator is calculated by subtracting a predetermined distance from the actual endpoint (typically 0.03 inches). The controller will manage the SSC motor such that the SSC motor velocity is zero at the calculated maximum and minimum endpoints. The endpoints are slightly offset from the stops to provide a buffer if the controller overshoots the calculated endpoints.

Once the SSC motor has been calibrated, the controller applies voltage to the SSC motor to obtain the coil current necessary to cause the motor to accelerate in a predetermined way. For example, if the SSC motor is retracting, the controller will apply voltage to the SSC motor such that its SSC motor acceleration approximates the curve depicted in Figure 88. At 50 microsecond (0.000050 seconds) intervals, the controller samples position and current. The sampled values are added to the prior twelve sampled values for position and coil current and these totals are averaged to give an average value for position and current that can be used in the above formula to calculate the PWM current to apply to the SSC motor.

The above description of SSC motor control is exemplary only. Other methods of controlling the SSC motor will be readily apparent to this of skill in the art and the above description is not intended to be limiting.

While the foregoing written description of the invention enables one of ordinary skill in the art to make and use it, those of ordinary skill will understand and appreciate the existence of variations, combinations, and equivalents of the specific embodiments, methods, and examples herein. It is readily understood, then, that the present invention is not therefore limited by the above described embodiments, methods, and examples.

## Claims

1. A water flosser (8) comprising:

   a main housing (12) including a base (40);
   a self-supporting coil (SSC) linear motor (88) secured to the base (40) and having a self-supporting coil (216);
   a pump housing (90) located in the main housing (12) and operably connected to the SSC linear motor (88);
   a reservoir (10) configured to operably connect to the main housing (12) at a location distal to the base (40), wherein the reservoir (10) includes a reservoir outlet aperture (120).;
   a handle (22) having a nozzle (26);
   tubing (20) operably connecting the handle (22) to the main housing (12); and a reservoir outlet check valve (118) insertably engaging the reservoir outlet aperture (120), and **characterised in that** the reservoir outlet check valve includes an elastomeric reservoir outlet check valve body (124) and an outlet check valve spring (132) surrounding the elastomeric reservoir outlet check valve body (124).

2. The water flosser of claim 1, wherein the main housing (12) includes a reservoir receiving recess (110) that is adapted to receive a portion of the reservoir (10).

3. The water flosser of claim 2, wherein the main housing (12) includes a pocket (112) that is configured to fit within the reservoir receiving recess (110) and is adapted to receive a portion of the reservoir (10).

4. The water flosser of claim 3, wherein the reservoir (10) includes a reservoir outlet tube (122) extending from the reservoir (10) so as to surround the reservoir outlet aperture (120).

5. The water flosser of claim 1, wherein the elastomeric reservoir outlet check valve body (124) includes a longitudinal axis and a conical outlet check valve seating surface (126) that forms a first angle relative to the longitudinal axis, and wherein the reservoir outlet check valve (118) further includes a conical outlet valve seating surface (136) disposed a distance from the outlet check valve seating surface (126) and forming a second angle relative to the longitudinal axis that differs from the first angle.

6. The water flosser of claim 5, wherein the difference between the first angle and the second angle is within a range of 3-5 degrees.

7. The water flosser of claim 5, wherein the outlet check valve spring (132) has a first extended position in which the elastomeric reservoir outlet check valve body (124) engages the conical outlet valve seating surface (136) and prevents a liquid held in the reservoir (10) from passing through the reservoir outlet aperture (120), and a second compressed position in which the outlet check valve body (124) extends upwardly into the reservoir (10) and permits fluid to pass between the outlet check valve seating surface (126) and the outlet check valve seat (136), and through the reservoir outlet aperture (120).

8. The water flosser of claim 7, further comprising an inlet float valve housing (140) intermediate the main housing base (40) and the main housing pocket (112), and an elastomeric reservoir seal (138) interposed between the main housing pocket (112) and the reservoir outlet tube (122) to create a seal between the reservoir (10) and the inlet float valve housing (140) and prevent fluid leakage when the reservoir outlet check valve (118) is open and the reservoir (10) is nested in the reservoir receiving recess (110) of the main housing (12).

9. The water flosser of claim 8, wherein the elastomeric reservoir seal (138) includes a compressible lip (144) and is configured to be inserted into the main housing pocket (112) and over the inlet float valve housing (140), such that the compressible lip (144) is expandable to engage with the main housing pocket bottom (146), which holds the elastomeric reservoir seal (138) in place as the reservoir (10) is removed from the main housing reservoir receiving recess (110).

10. The water flosser of claim 8, further comprising a central support flange (134) formed at a distal end of the check valve body (124) and outlet check valve-engaging fingers (142) positioned proximate the central support flange (134), wherein the outlet check valve-engaging fingers (142) are configured to press against the central check valve support flange (134) when the reservoir outlet tube (122) is inserted into the elastomeric reservoir seal (138), and compress the outlet check valve spring (132) to cause the outlet check valve body seating surface (126) to move away from the outlet check valve seat (136), whereby a liquid in the reservoir (10) is allowed to flow through the reservoir outlet aperture (120) and into the inlet float valve housing (140).

11. The water flosser of claim 8, wherein the pump housing (90) includes a buoyant inlet float valve (148) that is operably connected to the inlet float valve housing (140), such that the inlet float valve (148) rises when the inlet float valve housing (140) is filled with liquid, and the inlet float valve (148) sinks when the inlet float valve housing (140) is devoid of liquid.

12. The water flosser of claim 11, wherein the inlet float valve (148) includes an elastomeric inlet float valve body (152) having a conical inlet float valve seating surface (154), and an inlet float valve base (156) that sealingly engages with the inlet float valve body (152) such that air is captured in the assembled inlet float valve (148) to make the inlet float valve (148) buoyant.

13. The water flosser of claim 12, further comprising an inlet float valve chamber (160) that contains the inlet float valve (148), the inlet float valve chamber (160) including a conically tapered inlet float valve seat (161) at a proximal end thereof such that when the inlet float valve chamber (160) is filled with a liquid, the inlet float valve (148) is lifted within the inlet float valve chamber (160) and the inlet float valve seating surface (154) sealingly engages the inlet float valve seat (161).

14. The water flosser of claim 13, wherein an angle of the conical inlet float valve seat (161) to a longitudinal axis of the inlet float valve (148) differs from an angle of the conical inlet float valve seating surface (154) relative to the longitudinal axis of the inlet float valve (148) by 3-5 degrees to promote improved sealing.

**Patentansprüche**

1. Munddusche (8), umfassend:

   ein Hauptgehäuse (12) mit einem Sockel (40);
   einen selbsttragender Spulen-(SSC)-Linearmotor (88), der an dem Sockel (40) befestigt ist und eine selbsttragende Spule (216) aufweist;
   ein Pumpengehäuse (90), das sich in dem Hauptgehäuse (12) befindet und betriebsfähig mit dem SSC-Linearmotor (88) verbunden ist;
   einen Behälter (10), der dazu konfiguriert ist, betriebsfähig mit dem Hauptgehäuse (12) an einer von dem Sockel (40) entfernten Stelle verbunden zu sein, wobei der Behälter (10) eine Behälterauslassöffnung (120) beinhaltet;
   einen Griff (22) mit einer Düse (26);
   einen Schlauch (20), der den Griff (22) betriebsfähig mit dem Hauptgehäuse (12) verbindet; und ein Behälterauslassrückschlagventil (118), das in die Behälterauslassöffnung (120) einsetzbar eingreift, und **dadurch**

**gekennzeichnet, dass** das Behälterauslassrückschlagventil einen elastomeren Behälterauslassrückschlagventilkörper (124) und eine Auslassrückschlagventilfeder (132) beinhaltet, die den elastomeren Behälterauslassrückschlagventilkörper (124) umgibt.

2. Munddusche nach Anspruch 1, wobei das Hauptgehäuse (12) eine Behälteraufnahmevertiefung (110) umfasst, die dazu ausgelegt ist, einen Teil des Behälters (10) aufzunehmen.

3. Munddusche nach Anspruch 2, wobei das Hauptegehäuse (12) eine Tasche (112) beinhaltet, die so konfiguriert ist, in die Aufnahmevertiefung des Behälters (110) zu passen und dazu ausgelegt ist, einen Teil des Behälters (10) aufzunehmen.

4. Munddusche nach Anspruch 3, wobei der Behälter (10) ein Behälter-Auslassrohr (122) beinhaltet, das sich von dem Behälter (10) erstreckt, um die Behälterauslassöffnung (120) zu umgeben.

5. Munddusche nach Anspruch 1, wobei der elastomere Behälterauslassrückschlagventilkörper (124) eine Längsachse und eine konische Auslassrückschlagventilsitzfläche (126), die einen ersten Winkel relativ zu der Längsachse bildet, beinhaltet und wobei das Behälterauslassrückschlagventil (118) ferner eine konische Auslassventilsitzfläche (136) beinhaltet, die in einem Abstand zu der Auslassrückschlagventilsitzfläche (126) angeordnet ist und einen zweiten Winkel relativ zu der Längsachse bildet, der sich von dem ersten Winkel unterscheidet.

6. Munddusche nach Anspruch 5, wobei der Unterschied zwischen dem ersten Winkel und dem zweiten Winkel innerhalb eines Bereichs von 3-5 Grad liegt.

7. Munddusche nach Anspruch 5, wobei die Auslassrückschlagventilfeder (132) eine erste ausgefahrene Position aufweist, in der der elastomere Behälterauslassrückschlagventilkörper (124) in die konische Auslassventilsitzfläche (136) eingreift und verhindert, dass eine in dem Behälter (10) gehaltene Flüssigkeit durch die Behälterauslassöffnung (120) strömt, und eine zweite komprimierte Position, in der sich der Auslassrückschlagventilkörper (124) nach oben in den Behälter (10) erstreckt und es Flüssigkeit ermöglicht, zwischen der Auslassventilsitzfläche (126) und dem Auslassventilsitz (136) sowie durch die Behälterauslassöffnung (120) hindurchzuströmen.

8. Munddusche nach Anspruch 7, ferner umfassend ein Einlassschwimmerventilgehäuse (140) zwischen dem Hauptgehäusesockel (40) und der Hauptgehäusetasche (112), und eine elastomere Behälterdichtung (138), die zwischen der Hauptgehäusetasche (112) und dem Behälterauslassrohr (122) angeordnet ist, um eine Dichtung zwischen dem Behälter (10) und dem Einlassschwimmerventilgehäuse (140) zu schaffen und Fluidleckage zu verhindern, wenn das Behälterauslassrückschlagventil (118) geöffnet ist und der Behälter (10) in der Behälteraufnahmeausnehmung (110) des Hauptgehäuses (12) verschachtelt ist.

9. Munddusche nach Anspruch 8, wobei die elastomere Behälterdichtung (138) eine komprimierbare Lippe (144) beinhaltet und dazu konfiguriert ist, in die Hauptgehäusetasche (112) und über das Einlassschwimmerventilgehäuse (140) eingesetzt zu werden, sodass sich die komprimierbare Lippe (144) ausdehnen kann, um mit dem Boden der Hauptgehäusetasche (146) in Eingriff zu treten, wodurch die elastomere Behälterdichtung (138) an Ort und Stelle gehalten wird, während der Behälter (10) aus der Hauptgehäuseaufnahmevertiefung (110) entfernt wird.

10. Munddusche nach Anspruch 8, ferner umfassend einen zentralen Stützflansch (134), der an einem distalen Ende des Rückschlagventilkörpers (124) ausgebildet ist, und Auslassrückschlagventileingriffsfinger (142), die in der Nähe des zentralen Stützflansches (134) positioniert sind, wobei die Auslassrückschlagventileingriffsfinger (142) dazu konfiguriert sind, gegen den zentralen Rückschlagventilstützflansch (134) drücken, wenn das Behälterauslassrohr (122) in die elastomere Behälterdichtung (138) eingeführt wird, und die Auslassrückschlagventilfeder (132) zu komprimieren, um zu bewirken, dass sich die Rückschlagventilkörpersitzfläche (126) von dem Auslassrückschlagventilsitz (136) entfernt, wodurch es einer Flüssigkeit in dem Behälter (10) ermöglicht wird, durch die Behälterauslassöffnung (120) und in das Einlassschwimmventilgehäuse (140) zu fließen.

11. Munddusche nach Anspruch 8, wobei das Pumpengehäuse (90) ein schwimmfähiges Einlassschwimmerventil (148) beinhaltet, das betriebsfähig mit dem Einlassschwimmerventilgehäuse (140) verbunden ist, sodass das Einlassschwimmerventil (148) steigt, wenn das Einlassschwimmerventilgehäuse (140) mit Flüssigkeit gefüllt ist, und das Einlassschwimmerventil (148) sinkt, wenn das Einlassschwimmerventilgehäuse (140) keine Flüssigkeit enthält.

12. Munddusche nach Anspruch 11, wobei das Einlassschwimmerventil (148) einen elastomeren Einlassschwimmerventilkörper (152) mit einer konischen Einlassschwimmerventilsitzfläche (154) und einen Einlassschwimmerventilsockel (156) beinhaltet, der dichtend mit dem Einlassschwimmerventilkörper (152) eingreift, sodass Luft in dem zusammengebauten Einlassschwimmerventil (148) eingeschlossen wird, um das Einlassschwimmerventil (148) schwimmfähig zu machen.

13. Munddusche nach Anspruch 12, ferner umfassend eine Einlassschwimmerventilkammer (160), die das Einlassschwimmerventil (148) enthält, wobei die Einlassschwimmerventilkammer (160) an ihrem proximalen Ende einen konisch zulaufenden Einlassschwimmerventilsitz (161) beinhaltet, sodass, wenn die Einlassschwimmerventilkammer (160) mit einer Flüssigkeit gefüllt ist, das Einlassschwimmerventil (148) innerhalb der Einlassschwimmerventilkammer (160) angehoben wird und die Einlassschwimmerventildichtfläche (154) dichtend mit dem Einlass-Schwimmerventilsitz (161) in Eingriff tritt.

14. Munddusche nach Anspruch 13, wobei sich ein Winkel des konischen Einlassschwimmerventilsitzes (161) zu der Längsachse des Einlassschwimmerventils (148) um 3-5 Grad von dem Winkel der konischen Einlassschwimmerventildichtfläche (154) relativ zu der Längsachse des Einlassschwimmerventils (148) unterscheidet, um eine verbesserte Abdichtung zu fördern.


**Revendications**

1. Nettoyeur interdentaire à eau (8) comprenant :

   un boîtier principal (12) comprenant une base (40) ;
   un moteur linéaire à bobine autoportante (SSC) (88) fixé à la base (40) et comportant une bobine autoportante (216) ;
   un boîtier de pompe (90) situé dans le boîtier principal (12) et relié de manière fonctionnelle au moteur linéaire SSC (88) ;
   un réservoir (10) configuré pour relier de manière fonctionnelle au boîtier principal (12) à un emplacement distal par rapport à la base (40), dans lequel le réservoir (10) comprend une ouverture de sortie de réservoir (120) ;
   une poignée (22) comportant une buse (26) ;
   un tube (20) reliant de manière fonctionnelle la poignée (22) au boîtier principal (12) ; et un clapet anti-retour de sortie de réservoir (118) s'engageant de manière insérable dans l'ouverture de sortie de réservoir (120), et **caractérisé en ce que** le clapet anti-retour de sortie de réservoir comprend un corps de clapet anti-retour de sortie de réservoir élastomère (124) et un ressort de clapet anti-retour de sortie (132) entourant le corps de clapet anti-retour de sortie de réservoir élastomère (124).

2. Nettoyeur interdentaire à eau selon la revendication 1, dans lequel le boîtier principal (12) comprend un évidement de réception de réservoir (110) qui est adapté pour recevoir une partie du réservoir (10).

3. Nettoyeur interdentaire à eau selon la revendication 2, dans lequel le boîtier principal (12) comprend une poche (112) qui est configurée pour s'adapter à l'intérieur de l'évidement de réception de réservoir (110) et est adaptée pour recevoir une partie du réservoir (10).

4. Nettoyeur interdentaire à eau selon la revendication 3, dans lequel le réservoir (10) comprend un tube de sortie de réservoir (122) se prolongeant à partir du réservoir (10) de manière à entourer l'ouverture de sortie de réservoir (120).

5. Nettoyeur interdentaire à eau selon la revendication 1, dans lequel le corps de clapet anti-retour de sortie de réservoir élastomère (124) comprend un axe longitudinal et une surface d'assise de clapet anti-retour de sortie conique (126) qui forme un premier angle par rapport à l'axe longitudinal, et dans lequel le clapet anti-retour de sortie de réservoir (118) comprend également une surface d'assise de clapet de sortie conique (136) disposée à une certaine distance de la surface d'assise de clapet anti-retour de sortie (126) et formant un second angle par rapport à l'axe longitudinal qui diffère du premier angle.

6. Nettoyeur interdentaire à eau selon la revendication 5, dans lequel la différence entre le premier angle et le second angle est comprise dans une plage de 3 à 5 degrés.

7. Nettoyeur interdentaire à eau selon la revendication 5, dans lequel le ressort de clapet anti-retour de sortie (132) présente une première position prolongée dans laquelle le corps de clapet anti-retour de sortie de réservoir élastomère (124) s'engage dans la surface d'assise de clapet de sortie conique (136) et empêche un liquide contenu dans le réservoir (10) de passer à travers l'ouverture de sortie de réservoir (120), et une seconde position comprimée dans laquelle le corps de clapet anti-retour de sortie (124) se prolonge vers le haut dans le réservoir (10) et permet à un fluide de passer entre la surface d'assise de clapet anti-retour de sortie (126) et l'assise de clapet anti-retour de sortie (136), et à travers l'ouverture de sortie de réservoir (120).

8. Nettoyeur interdentaire à eau selon la revendication 7, comprenant également un boîtier de clapet à flotteur d'entrée (140) intermédiaire entre la base de boîtier principal (40) et la poche de boîtier principal (112), et un joint de réservoir élastomère (138) interposé entre la poche de boîtier principal (112) et le tube de sortie de réservoir (122) pour créer un joint entre le réservoir (10) et le boîtier de clapet à flotteur d'entrée (140) et empêcher une fuite de fluide lorsque le clapet anti-retour de sortie de réservoir (118) est ouvert et que le réservoir (10) est emboîté dans l'évidement de réception de réservoir (110) du boîtier principal (12).

9. Nettoyeur interdentaire à eau selon la revendication 8, dans lequel le joint de réservoir élastomère (138) comprend une lèvre compressible (144) et est configuré pour être inséré dans la poche de boîtier principal (112) et sur le boîtier de clapet à flotteur d'entrée (140), de telle sorte que la lèvre compressible (144) est extensible pour s'engager avec le fond de la poche de boîtier principal (146), qui maintient le joint de réservoir élastomère (138) en place lorsque le réservoir (10) est retiré de l'évidement de réception de réservoir du boîtier principal (110).

10. Nettoyeur interdentaire à eau selon la revendication 8, comprenant également une bride de support centrale (134) formée à une extrémité distale du corps de clapet anti-retour (124) et des doigts d'engagement du clapet anti-retour de sortie (142) positionnés à proximité de la bride de support centrale (134), dans lequel les doigts d'engagement de clapet anti-retour de sortie (142) sont configurés pour appuyer contre la bride de support centrale du clapet anti-retour (134) lorsque le tube de sortie de réservoir (122) est inséré dans le joint de réservoir élastomère (138), et comprimer le ressort de clapet anti-retour de sortie (132) pour amener la surface d'assise de corps de clapet anti-retour de sortie (126) à s'éloigner de l'assise de clapet anti-retour de sortie (136), ce qui permet à un liquide dans le réservoir (10) de s'écouler à travers l'ouverture de sortie de réservoir (120) et dans le boîtier de clapet à flotteur d'entrée (140).

11. Nettoyeur interdentaire à eau selon la revendication 8, dans lequel le boîtier de pompe (90) comprend un clapet à flotteur d'entrée flottant (148) qui est relié de manière fonctionnelle au boîtier de clapet à flotteur d'entrée (140), de telle sorte que le clapet à flotteur d'entrée (148) monte lorsque le boîtier de clapet à flotteur d'entrée (140) est rempli de liquide, et le clapet à flotteur d'entrée (148) coule lorsque le boîtier de clapet à flotteur d'entrée (140) est dépourvu de liquide.

12. Nettoyeur interdentaire à eau selon la revendication 11, dans lequel le clapet à flotteur d'entrée (148) comprend un corps de clapet à flotteur d'entrée élastomère (152) ayant une surface d'assise de clapet à flotteur d'entrée conique (154), et une base de clapet à flotteur d'entrée (156) qui s'engage de manière étanche avec le corps de clapet à flotteur d'entrée (152) de telle sorte que de l'air est capturé dans le clapet à flotteur d'entrée assemblé (148) pour rendre le clapet à flotteur d'entrée (148) flottant.

13. Nettoyeur interdentaire à eau selon la revendication 12, comprenant également une chambre de clapet à flotteur d'entrée (160) qui contient le clapet à flotteur d'entrée (148), la chambre de clapet à flotteur d'entrée (160) comprenant une assise de clapet à flotteur d'entrée coniquement effilée (161) à une extrémité proximale de celui-ci de telle sorte que lorsque la chambre de clapet à flotteur d'entrée (160) est remplie d'un liquide, le clapet à flotteur d'entrée (148) est soulevé à l'intérieur de la chambre de clapet à flotteur d'entrée (160) et la surface d'assise de clapet à flotteur d'entrée (154) s'engage de manière étanche dans l'assise de clapet à flotteur d'entrée (161).

14. Nettoyeur interdentaire à eau selon la revendication 13, dans lequel un angle de l'assise de clapet à flotteur d'entrée conique (161) par rapport à un axe longitudinal du clapet à flotteur d'entrée (148) diffère d'un angle de la surface d'assise de clapet à flotteur d'entrée conique (154) par rapport à l'axe longitudinal du clapet à flotteur d'entrée (148) de 3 à 5 degrés pour favoriser une meilleure étanchéité.

FIG 1

FIG 2

FIG 2a

FIG 3

FIG4

FIG 5

FIG 6a

FIG 6

FIG 6b

FIG 7

FIG 8

FIG 9

FIG 10

FIG 11a

FIG 11

FIG 12

FIG 13

FIG 14

FIG 15

FIG 16

FIG 17

FIG 18

FIG 19

FIG 19a

FIG 19b

FIG 20

FIG 20A

FIG 21

FIG 22

FIG 22B

FIG 22C

FIG 22A

FIG 23

FIG 23a

FIG 24

FIG 24a

FIG 25

FIG 26

FIG 27

FIG 28

FIG 29

FIG 30

FIG 31

FIG 32

FIG 33

FIG 34

FIG 35

FIG 36

320

322

324

FIG 37

FIG 38

364    366    364

362    362

364    362

FIG 39

FIG 40

6

26

6

399

400

26

402

410

426

424

404

FIG 41

FIG 42

FIG 43

FIG 44

Power On → Inlet Float Valve Chamber Filled? — No → Send Fault Signal

Yes ↓

Handle In Cradle? — No → Send Fault Signal

Yes ↓

Advance SSC Linear Motor To Purge Air From Tubing And Handle

↓

Controller Stops Pumping After Predetermined Number Of Strokes? — No → Send Fault Signal

Yes ↓

Selected Function Displays

↓

Select Function Values

↓

Press On/off Toggle Button

FIG 45

FIG 46

FIG 47

FIG 48

FIG 49

FIG 50

FIG 51

FIG 52

FIG 53

FIG 54

FIG 55

FIG 56

FIG 57

FIG 58

FIG 59

FIG 60

FIG 61

FIG 62

FIG 63

FIG 64

FIG 65

FIG 66

Power On

Mobile Device Detected? — Yes → Pair Mobile Device

Is User In Database? — Yes → New Instructions Received? — No → Recall User Preference

Is User In Database? — No → Invite User To Create Preferences

New Instructions Received? — Yes → Store New User Preferences

Invite User To Create Preferences → User Preferences Created? — Yes → Store New User Preferences

User Preferences Created? — No

Mobile Device Detected? — No

Are Preferences Stored? — Yes → Recall Last Used Preference

Are Preferences Stored? — No → Recall Default Preferences

Is Handle In Cradle? — No → Fault Signal

Is Handle In Cradle? — Yes → Is Liquid In Pump? — No → Fault Signal

Is Liquid In Pump? — Yes → Slowly Advance SSC Motor

Slowly Advance SSC Motor → On/Off Valve Seats? — No → Fault Signal Stop Pump

On/Off Valve Seats? — Yes → On/Off Valve Opened? — No → Fault Signal After Time (t)

On/Off Valve Opened? — Yes → Actuate SSC Motor To Effect Stored Or Default Preference → Record User Data

Record User Data → On/Off Valve Closed? — Yes ← Liquid in Pump? — Yes

Liquid in Pump? — No → Fault Signal

On/Off Valve Closed? — No → On/Off Valve Opened?

On/Off Valve Opened? — Yes → Actuate SSC Motor To Effect Stored Or Default Preference

On/Off Valve Opened? — No

Check For New User Preferences And Store, If Present

On/Off Valve Closed? — Yes → Handle In Cradle?

Handle In Cradle? — No → Has Time (t) Passed?

Handle In Cradle? — Yes → Send Data To Mobile Device, If Paired

Has Time (t) Passed — No → Check For New User Preferences And Store, If Present

Has Time (t) Passed — Yes → Send Data To Mobile Device, If Paired

Send Data To Mobile Device, If Paired → Power Off

FIG 67

108

FIG 68

FIG 69

550

FIG 70

562

564

548

534

542

544

556

540

560

552

554

FIG 70a

FIG 71

FIG 72a

FIG 72b

FIG 73

FIG 74

550

546

554

FIG 75

FIG 76

FIG 77

546

550

562

554

FIG 78

546

550

562

548

FIG 79

554

550

FIG 80

FIG. 81

122

FIG 81a

FIG 82

598

606 650 610 616 614 658 662 678 679 706 694 722 692 696 720 724 726 700 702

599

620 636

600 602 604 628 654 676 666 664 718 710 732 730 728 680 696 688 712 714 698

608 618 668 660 708

FIG 83

FIG 84

FIG 85

FIG 86

FIG 87a

FIG 87b

FIG 87c

FIG 87

vMax

Velocity vs. Time

(Inch/sec)

(Seconds)

0

0          $t_r/2$        $t_r$

0

CM

Position vs. Time

$(X_0 - CM)/2$

0

$X_0$

0        $t_r/2$       $t_r$

(Seconds)

FIG 88

**EP 4 041 122 B1**

**Patent documents cited in the description**

- US 9642677 B2
- US 2015182319 A
- DE 2703041
- US 20120189976 A1
- US 4655197 A